# EUROPEAN PATENT SPECIFICATION

(11) **EP 0 522 200 B1**
(45) Date of publication and mention of the grant of the patent: **13.05.1998**
(21) Application number: 91120176.2
(22) Date of filing: 26.11.1991
(51) Int. Cl.: G08B 25/01, H04M 11/04, B25J 9/00, G08B 25/10

(54) **Mobile monitoring device**
Bewegliche Überwachungsvorrichtung
Dispositif de surveillance mobile

(30) Priority: 10.07.1991 US 727630; 05.11.1991 US 789187
(43) Date of publication of application: 13.01.1993
(73) Proprietor: SAMSUNG ELECTRONICS CO., LTD., Suwon-City, Kyounggi-Do 441-370 (KR); E.L.F. LIMITED PARTNERSHIP, Hilton Head Island, South Carolina 29928 (US)
(72) Inventor: Bischoff, Rudi A., Hilton Head Island, Sc 29928 (US); Bloomfield, John W., Hilton Head Island, SC 29928 (US); Payne, Robert L., c/o E.L.F. Limited Partnership, Hilton Head, SC 29928 (US); Wagner, Scott B., Hilton Head Island, SC 29928 (US)
(74) Representative: Grünecker, Kinkeldey, Stockmair & Schwanhäusser Anwaltssozietät

(56) References cited:
- WO-A-88/00747
- FR-A- 2 551 240
- GB-A- 2 053 516
- GB-A- 2 182 634
- US-A- 4 636 137
- US-A- 4 748 654
- US-A- 4 857 912
- US-A- 4 932 831

## Description

### BACKGROUND OF THE INVENTION

The present invention relates to a mobile monitoring device and, more particularly, to a mobile monitoring device in which the presence of an abnormal condition, such as a fire or an invader in a house or the like, is communicated externally via a wired or wireless communication system to a central monitoring unit or to an emergency authority, thereby performing fire protection and crime prevention functions.

Recently, in apartments and single-family houses, home security control systems have been used which use one or more of a fire alarm, burglar alarm, gas leakage alarm, sound detection alarm and the like. Such home security control systems, however, lose their effectiveness when the occupier has gone out, or in collective residences where an abnormal condition could arise in any one of the individual residences.

In the event that a fire occurs or that an invader is detected, conventional home security control systems are designed to automatically inform a control room of the abnormal condition. The application of such a system, however, requires a number of cables, and as a result, much time and labor is required for the associated wiring work. Consequently, installation costs become expensive, and become especially expensive when installing the system in existing construction. In the case of collective residences, when the security administrator is absent for some reason, such as patrol and the like, detection of an abnormal condition is delayed and, as a result, the reporting of an abnormal condition to police or fire officials is delayed. Furthermore, there have also been problems associated with notifying an occupant who is away from home. In particular, it is impossible for the conventional system to immediately notify the occupant in such a case.

Likewise, conventional home security control systems require that gas detecting sensors be located adjacent the gas pipe lines which are most likely to leak, and that invader detecting sensors or sound detecting sensors be located at doors or windows through which an invader is expected to enter the interior of the house. Because conventional home security systems require the use of sensors in a variety of locations, the associated wiring work is excessively complicated and can be rather unsightly. An additional problem associated with conventional house security systems relates to the wiring itself. In particular, the wiring (or the power supply line) can be cut by the invader to thereby render the security system inoperable.

From GB-A-2 053 516 a surveillance vehicle guarding high risk targets is known. The vehicle travels along and surveys a pre-selected route independently of a control station. Upon reaching a surveillance point the vehicle halts and runs a surveillance routine. In case any change in environment from a pre-selected normal or safe condition occurs, the vehicle calls the operator and then transmits the relevant information to the terminal equipment. According to this information the operator decides whether the alarm is genuine. If the alarm proves false the operator can re-select the patrol mode, or, if genuine, can take the appropriate action in the remote control mode. In this mode all vehicle functions are under the control of the operator.

In US-A-4 748 654 a remote supervisory monitoring and control system is disclosed. This system monitors various operation parameters at an unmanned operating site. Should the system note an alarm condition, it can be programmed to call in sequence a number of telephones at any location to attempt to reach a user who can take the appropriate steps to correct the condition. When one of the users is reached, he may request additional diagnostic information by simply using the telephone keypad. Moreover, any push-button phone may also be used to contact the system and to re-program it.

It is an object of the present invention to provide a mobile monitoring device that is wireless, portable, is a mobile security system guarding an area where it is placed on its own and which can be remotely activated and inactivated wherein it is inexpensive to install as well as inexpensive to manufacture.

In order to accomplish the above-described object the mobile monitoring device comprises the features of claim 1.

The mobile monitoring device structured as above is impossible to use except by the authorized user. In the event that an authorized user has departed without activating the mobile monitoring device, the user can still activate the device remotely by calling from a telephone. In addition, the authorized user can carry the monitoring means while away so that the user receives a calling sound in response to the detection of an abnormal condition within the house. Also, a police station, fire station, or an operator of a central monitoring unit is simultaneously alerted so that countermeasures can be taken rapidly.

The foregoing and other objects as well as advantages of the present invention will become clear by way of the following description of the invention with reference to the accompanying drawings.

Throughout the drawings, like reference numerals and symbols are used for designation of like or equivalent parts or portions, for simplicity of illustration and explanation.

### BRIEF DESCRIPTION OF THE DRAWINGS

Figure 1 is a schematic diagram illustrating a preferred embodiment of a mobile monitoring device in accordance with the present invention.

Figures 2(a) and 2(b) are block diagrams of a robot in accordance with the present invention.

Figures 2(c) and 2(d) are flow charts illustrating the operation of the robot and monitoring device in accordance with the present invention.

Figure 3 is a circuit diagram of a keyboard and a display unit according to the present invention.

Figure 4(a) is a sectional view of the robot, for indicating the structure of an operating device.

Figure 4(b) is a cross-sectional view of the operating device taken along line I-I of Fig 4(a).

Figure 4(c) is a longitudinal cross-sectional view of the operating device taken along line II-II of Fig 4(a).

Figure 5(a) is a driving circuit for forward and reverse drive of the robot.

Figure 5(b) is a driving circuit for a steering motor for steering the robot.

Figure 6(a) is a bottom view of the robot to which a faulty underlying (floor) surface detecting device is attached.

Figure 6(b) is a elevational view of the robot indicating the structure of the faulty surface detecting device.

Figure 6(c) is a perspective view of the faulty surface detecting device.

Figure 6(d) is a side view of Fig 6(b).

Figure 6(e) is a perspective view of a drop sensor of the faulty surface detecting device.

Figure 6(f) is a functional view of the faulty surface detecting device.

Figure 7(a) is an operating circuit of the faulty surface detecting device.

Figure 7(b) is a flow chart illustrating the operating sequence of the faulty surface detecting device.

Figure 8(a) is a perspective view of an electro-acoustic transducer assembly of the navigation system.

Figure 8(b) is a longitudinal cross-sectional view of the transducer assembly taken along the line II-II of Fig 8(a).

Figure 9(a) is a block diagram of the navigation system to which the transducer is coupled.

Figure 9(b) is a circuit used in Fig. 9(a).

Figure 10(a) is a top view of the bottom plate member to which a plurality of sensors are mounted.

Figure 10(b) is a top view of the grille at the upper portion of the bottom plate member.

Figure 10(c) is a partial elevational view of the robot in the state in which the sensors are mounted.

Figure 10(d) is a partial back view of the robot showing the sensors.

Figure 11(a) is a perspective view of an ultrasonic sensor according to another embodiment of the present invention.

Figures 11(b) to 11(e) are operating views of the ultrasonic sensor according to the embodiment of Fig. 11(a), and Figure 11(f) is a block diagram of sensor arrangement and control.

Figure 12(a) is a circuit diagram of an ultrasonic transmitting section.

Figure 12(b) is a circuit diagram of an ultrasonic receiving section for sensing a mobile object.

Figure 13 is a circuit diagram of an infrared sensing portion.

Figure 14 is a circuit diagram of a sound sensing portion.

Figure 15 is a circuit diagram of a signal transmitting and receiving portion.

Figure 16 is a circuit diagram of a power supply portion of the robot.

Figure 17 is a circuit diagram of a power control portion of the robot.

Figure 18 is a circuit diagram of a system reset portion.

Figure 19(a) is a schematic diagram of an automatic communication control means.

Figure 19(b) is a block diagram of Fig. 19(a).

Figure 19(c) is a flow chart illustrating the operating sequence of an automatic communication control means.

Figure 20(a) is a side view of a trespasser detecting means according to a preferred embodiment of the present invention.

Figure 20(b) is a front elevational view of Fig. 20(a).

Figure 20(c) is an operational view of the trespasser detecting means.

Figure 20(d) is a flow chart illustrating an operating sequence of the trespasser detecting means.

Figure 21(a) is a block diagram of an emergency measure means according to the present invention.

Figure 21(b) to 21(c) are flow charts illustrating an operating sequence of the emergency measure means.

### DETAILED DESCRIPTION OF THE PREFERRED EMBODIMENTS

Hereinafter, preferred embodiments of the present invention will be described in detail with reference to the accompanying drawings.

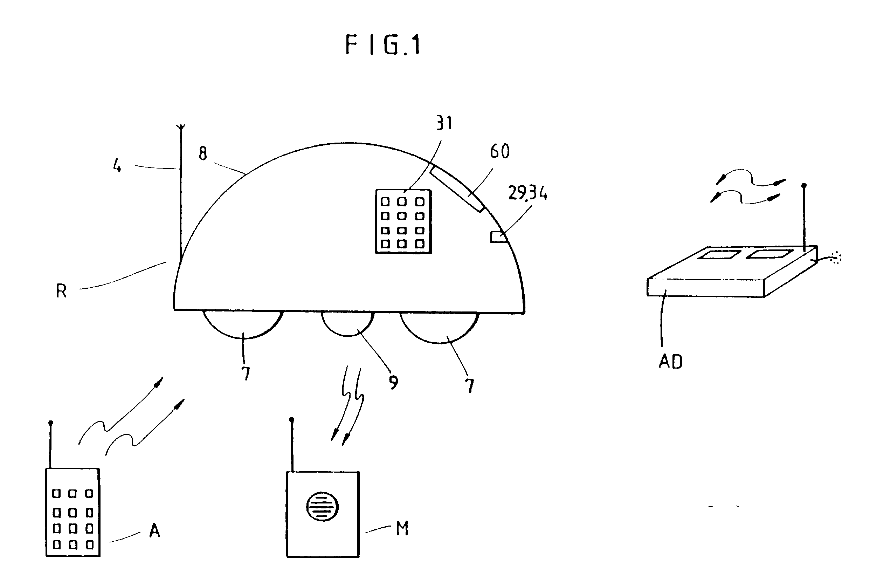

Figure 1 is a schematic diagram illustrating the structure of a mobile monitoring device according to a preferred embodiment of the present invention.

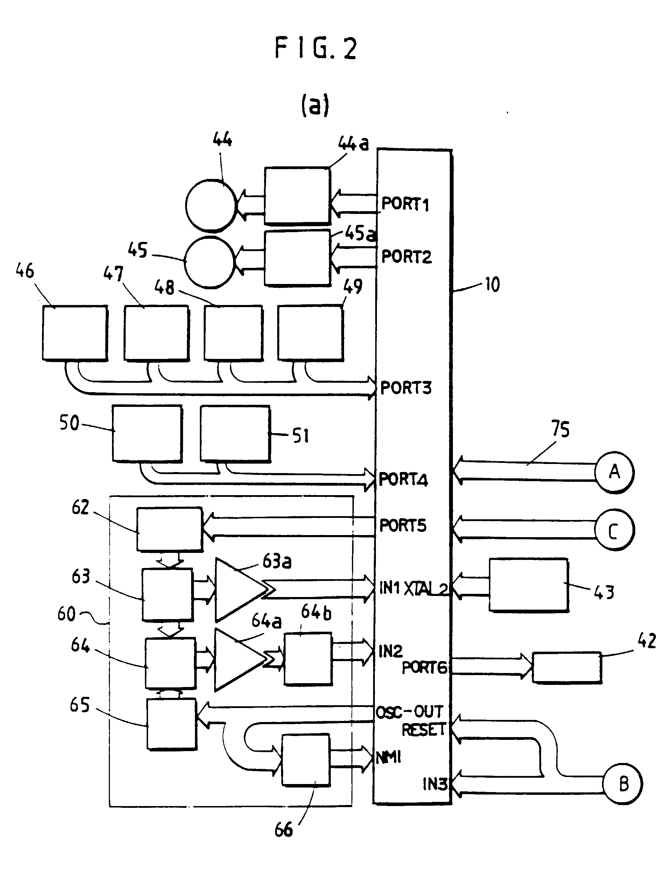

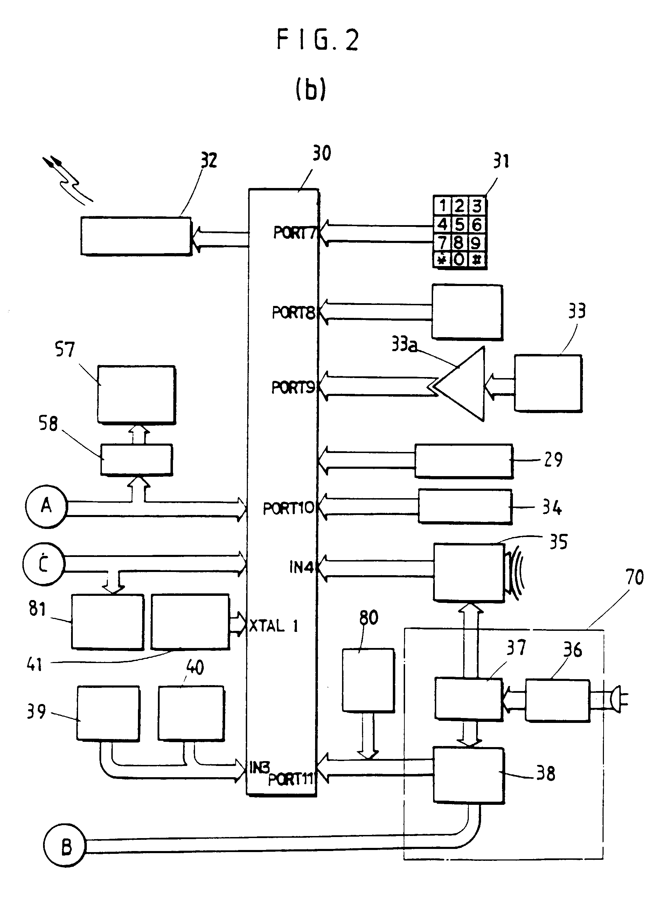

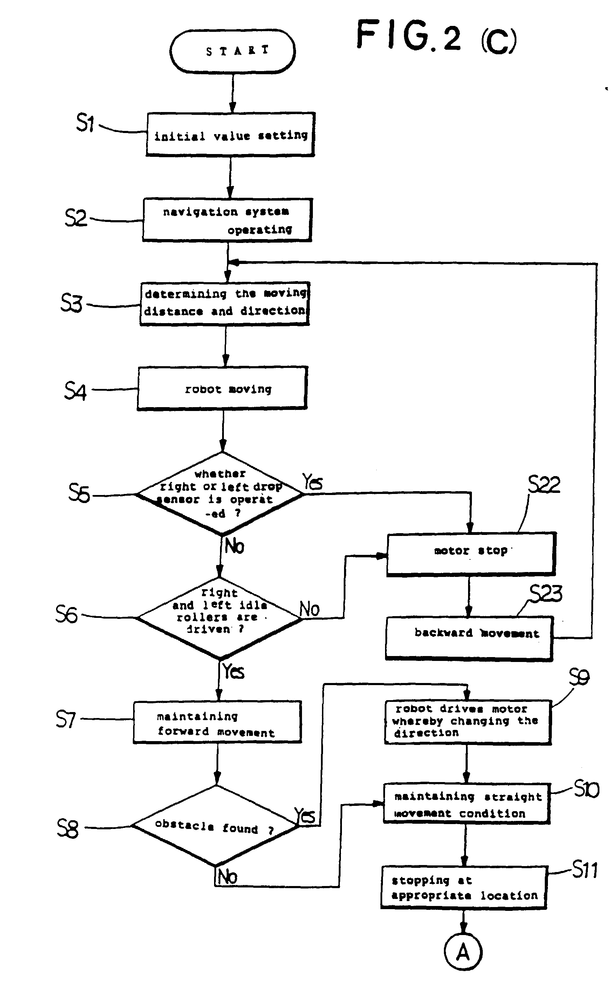

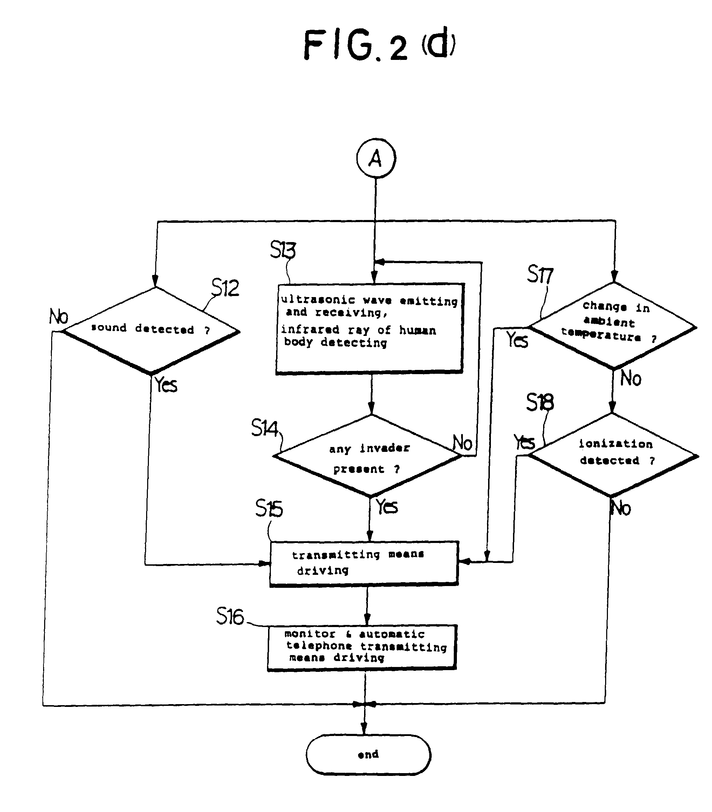

In particular, Figures 1, 2(a) and 2(d) illustrate a R/F remote controller A functioning as a remote control means, and a robot R comprising a keyboard 31 for receiving commands from a user; a navigation system 60 for emitting ultrasonic waves and simultaneously receiving the reflected waves for the purpose of detection, the navigation system being activated by a user by inputting an operational command through the keyboard; a main caster 9 which is driven by and steered by a forward and reverse driving motor 44 and a steering motor 45, respectively, in response to an output from the navigation system 60; and two sub-casters 7A and 7B, driven cooperatingly with the main caster 9.

An antenna 4 is provided through which the presence or absence of an abnormality within a house or office is communicated in response to a detection signal from sensors which are arranged within the robot R, the sensors being capable of detecting the presence or absence of an intruder, gas leakage, sound, infrared rays produced by ambient temperature, light, or a human body, and the like. When an abnormal condition is detected, a driving signal is transmitted in accordance with a transmission controller 32 to a monitor N which receives the transmitted signal and which in turn generates an alarm indicative of the existing abnormal condition.

An automatic communication control means AD also receives the transmitted signal from the robot R and automatically reports by way of telephone the occurrence of an abnormal condition to a user who may be away and, simultaneously, to a police station, fire station, or central monitoring unit such as a security office. Also illustrated in Figure 1 are an ultrasonic sensor 29, an infrared sensor means 34 and a trunk body 8 for the robot R.

The automatic communication control means AD includes a shortened dialing function which provides automatic telephone dialing when an abnormal condition is detected within the house or office, the abnormal conditions being detected by various detecting sensors on the robot R or elsewhere. The automatic communication control means AD automatically dials the telephone number of a police station, fire station or central monitoring unit such as a control room in response to the transmitted signal from, e.g., the antenna 4. In addition, the automatic communication control means AD contains a telephone receiving function which enables an authorized user to remotely activate the robot R by way of a telephone call. Although the drawing illustrates a cabled telephone system, the telephone system may, of course, be a wireless telephone system.

Next, structure and operation of the robot R will be described generally with reference to Figures 2(a) and 2(b). As shown in Figures 2(a) and 2(b), there are provided first and second micro-computers 10 and 30; a keyboard 31 functioning as a primary control means which inputs operational commands and stores a secret code, the secret code in turn providing access only to authorized users; a navigation system 60 which receives a signal (or command signal) from the primary control means 31 via the two microcomputers 10 and 30 and which, in order to evaluate ambient space, emits an ultrasonic wave forward of its right and left sides encompassing an approximately 180° angle and simultaneously receives a reflected wave; a first microcomputer 10 for judging whether or not to move in a particular direction when a detected signal is input to an input terminal IN2 for determining the ambient space via the navigation system 60; a forward and reverse driving motor 44 which, in the event that forward or reverse movement is judged possible according to a judgment signal from the first microcomputer 10, executes forward or reverse rotation, respectively, according to an output signal from a forward and reverse movement driving circuit 44a which in turn controls forward and reverse movement in response to an output signal from an output port PORT1 of the first microcomputer 10; a main caster 9 for moving in any direction using the driving power of the forward and reverse driving motor 44; a pair of subcasters 7A and 7B for moving in any direction by cooperating with the driving of the main caster 9; right and left side drop sensors 46 and 47 which detect the condition of a floor surface in order to prevent the robot R from falling while moving and which, upon detecting a stepped or pitted portion of the floor surface, terminate forward motion and effect reverse movement for a predetermined distance, the sensors 46 and 47 being arranged so as to provide a signal indicative of a stepped portion to an input port PORT3 of the first microcomputer 10; right and left driving condition sensors 48 and 49 for detecting the driving condition of the sub-casters 7A and 7B; a steering motor 45 for executing forward or reverse rotation according to an output signal from a steering driving circuit 45a which controls right and left steering according to an output signal from an output port PORT2 of the first microcomputer 10, in response to detected signals from right and left drop sensors 46 and 47 and right and left driving condition detecting sensors 48 and 49, all of which input through the input port PORT3 of the first microcomputer 10; a speed detecting sensor 50 for detecting the driving speed; and a steering direction detecting sensor 51 for detecting a steering angle. The overall driving system of the robot R is made to control the speed and steering angle of the forward and reverse driving motor 44 and steering motor 45, respectively, according to the output of each motor driving circuit 44a and 45a, while the output signals from the speed detecting sensor 50 and steering direction detecting sensor 51 are input to an input port PORT4.

Further to the aforementioned driving system, the robot R of the present invention comprises an ultrasonic sensor 29 which emits ultrasonic waves and simultaneously receives reflected waves to thereby detect movement of material objects (including animate objects) and an infrared detecting sensor 34 which is also capable of receiving the infrared rays produced by a human body whereby the detection of displacement of material objects including persons is achieved; a sound detecting sensor 35 which receives power from a battery 37 and detects the sound of, e.g., breaking glass or the sound of a crying or calling child; and a second microcomputer 30 which receives detected signals from sensors 34 and 35 and, in addition, receives detected signals from sensor 39 for detecting ambient temperature and an ionization sensor 40 for detecting fire. The robot R is thereby provided with a way of judging whether or not an abnormal condition exists within a house or office. In the event that an abnormal condition does exist, a transmission controller 32 is driven to effect a transmission to a monitor M and an automatic communication control means AD through the antenna 4.

With further reference to Figures 2(a) and 2(b), a 15MHz oscillating signal from a crystal oscillator 41 is applied to an input terminal XTAL2 of the second microcomputer 30. In addition, a 15MHz oscillating signal from a crystal oscillator 43 is applied to an input terminal XTALL of the first microcomputer 10. A bus line 75 then provides a communications link between the first microcomputer 10 and the second microcomputer 30 whereby commands related to conditions or operation of the microcomputers 10 and 30 are executed. Also, a simulation terminal 57 for testing the operating condition of the robot R is connected through a buffer 58 to the middle of the bus line 75.

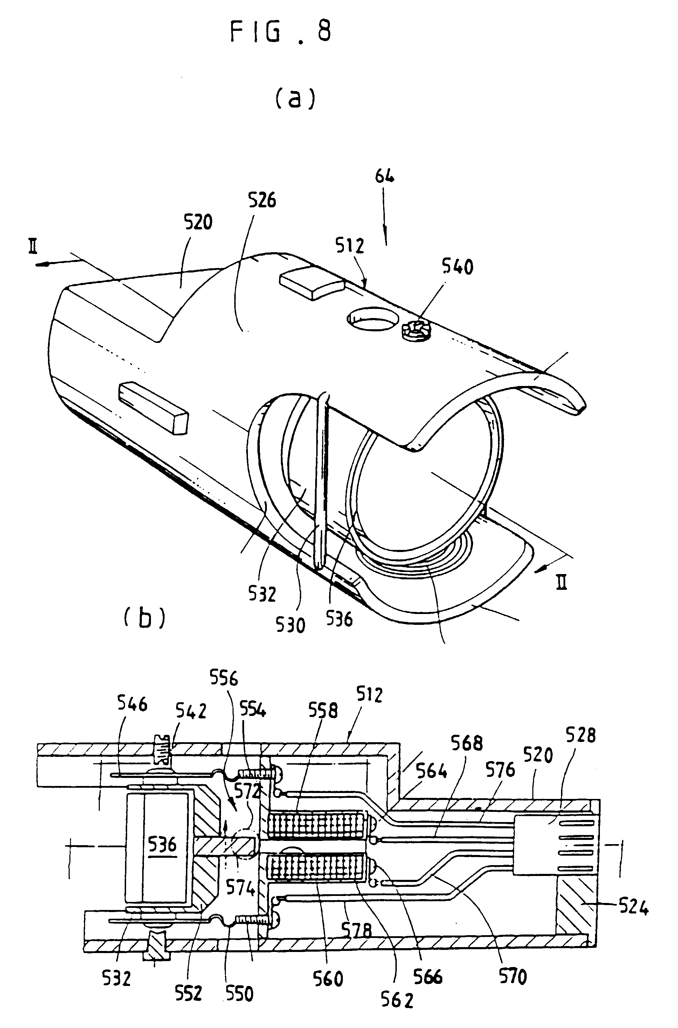

Next, operation of the mobile monitoring device will be described generally with reference to Figures 2(a) and 2(b). When a user presses a particular key on the keyboard 31 to provide a command to the robot R (or does so by remote control), a pulse for operating the navigation system 60 is output from the output port PORT5 of the first microcomputer 10. The pulse drives a driving circuit 62 which, in turn, drives a field coil 63 which is provided on the sensor, such as shown in FIG. 8(a) discussed below. In this way, the field coil 63 is indirectly operated by the pulse from output port 5. The signal from the field coil 63 is first amplified by an amplifier 63a in order to confirm the driven condition of the field coil 63, and is then provided to an analog input terminal IN1 of the first microcomputer 10 to confirm the positioning of the transducer 64. The pulse applied to the coil 63 induces a swinging motion on the part of the sensor, which is an ultrasonic sensor in this case, as shown for example in FIG. 8(a). By pulsing the coil shortly after a magnet attached to the rear of the coil has passed the coil location, an oscillating motion is achieved as discussed in more detail in connection with FIG. 8.

The transducer 64 emits ultrasonic waves generally forward of the robot R within an approximate angle of 180° as it oscillates and simultaneously receives reflected ultrasonic waves. The resulting signal is then synchronized and amplified by synchronization amplifier 64a and thereafter filtered of a noise component by detecting filter 64b. A resulting signal from the filter 64b is then provided to the first microcomputer 10 through an input terminal IN2. The two signals (the ultrasonic emission and the return) are then compared within the first microcomputer 10 and the comparison is used to determine distance to an object, from the relative timing of the emission and the reflection. Direction of an object can be determined by noting the angle of the sensor at the time the pulse was emitted, the angle being determable from the timing of the pulse with respect to the oscillating movement of the sensor, a measure of which can be derived from the input at port IN1.

The navigation system 60 further comprises a buffer 65 for inputting a frequency of 52KHz from an oscillation output terminal OSC OUT of the first microcomputer 10 to the transducer 64. A detecting circuit 66 is then provided for checking whether the microcomputer 10 is functioning at all. An output signal from the detecting circuit 66 is introduced to an input terminal NMI of the first microcomputer 10 so that when an abnormal condition is detected a step is taken so as to cancel the cause of the abnormal operation by resetting and restarting the microcomputer, or alternatively an alarm can be executed. Although the above description describes a method for operating the robot R by having a user press a key on the keyboard 31, it is also possible to apply the command to the robot R by operating the keyboard of an R/F remote controller A. Similarly, when the user is away, it is possible to operate the robot R by remotely calling from a telephone.

In the R/F remote controller case, a command signal from the R/F remote controller A is received at a receiver 33 of the second microcomputer 30 and is then amplified at an amplifier 33a and is thereafter input to an input port PORT9 thereby activating the robot R.

The power supply means 70 of the robot R comprises a rectifier 36, a battery 37, and a DC power charge level detector 38. AC 100V or AC 220V power applied to a power input terminal is rectified into DC power at the rectifier and then charges the battery 37. The DC power charging of the battery 37 is detected along with its charging level by the DC power charge level detector 38. The power is also provided to a reset terminal and an input terminal IN3 of the first microcomputer 10, as well as an input port PORT11 of the second microcomputer 30 thereby providing the operating power supply of the robot R. On the other hand, when the detector 38 detects a charge level which is less than a predetermined level, moving of the robot R is stopped and only various detecting sensors and memory functions of the first and second microcomputers 10 and 30 are executed.

Next, the overall operating sequence of the mobile monitoring device will be described in detail with reference to the flow charts shown in Figures 2(c) and 2(d). Each block S1-S23 in Figures 2(c) and 2(d) represents a step. As shown in the drawings, after charging the battery 37 to a predetermined level, when the keyboard 31 is operated directly in the interior of the house or office, or when activation is remotely achieved by telephone while the user is away, the mobile monitoring unit is rendered operative. A command signal is input into a command input port PORT7 in Figure l(b), or in the case of remote control, input port PORT9, of the second microcomputer 30. The crystal oscillator 41 is then oscillated with a frequency of 15MHz which is, in turn, provided to the second microcomputer 30. Simultaneously, the crystal oscillator 43 is oscillated with a frequency of 15MHz, this frequency being provided to the first microcomputer 10. Next, the robot R is initialized whereby it is made capable of operating at step Sl. The command signal is then input through the bus line 75 to the first microcomputer 10 whereby it displays an indication on a display means 42 indicating that the robot R is in a normal condition, and at the same time proceeds to step S2 during which the navigation system 60 in Figure 8(a) et. seq. is driven.

In particular, a signal for driving the field coil driving circuit 62 is output from the output port PORT5 of the first microcomputer 10 thereby driving the field coil 63, which will caue the transducer unit to begin to oscillate back and forth. The output signal resulting from driving the field coil 63 is amplified at the amplifier 63a and an output which is used to detect the location of the electro-acoustic transducer 64 in its oscillating locus is input to the analog input terminal IN1 of the first microcomputer 10. With the driving of field coil 63, the transducer means 64 is driven alternatingly in forward and reverse directions. In addition, an oscillation frequency of 52KHz is input from the oscillation output terminal OSC OUT of the first microcomputer 10 through the buffer 65 to the transducer means 64. An ultrasonic wave is thereby emitted from the transducer means 64 and its reflection is received by the transducer means 64. The emitted ultrasonic wave and its reflection are amplified together at the synchronization amplifier 64a for synchronizing and amplifying and then the noise component is filtered at the detecting filter 64b. Thereafter, the resulting signal is input to the analog input terminal IN2 of the first microcomputer 10.

Proceeding to step S3, the above signals and that at IN1 are compared and analyzed within the first microcomputer 10 whereby distance and direction to an object are determined. Then, proceeding to step S4, the forward and reverse driving motor 44 and the steering motor 45 are driven in response to a determination of the moving distance and direction whereby the robot R is driven. While the robot R is moving, the right and left drop sensors 46 and 47, the driving condition detecting sensors 48 and 49, speed detecting sensor 50, and the steering direction detecting sensor 51 are all being operated.

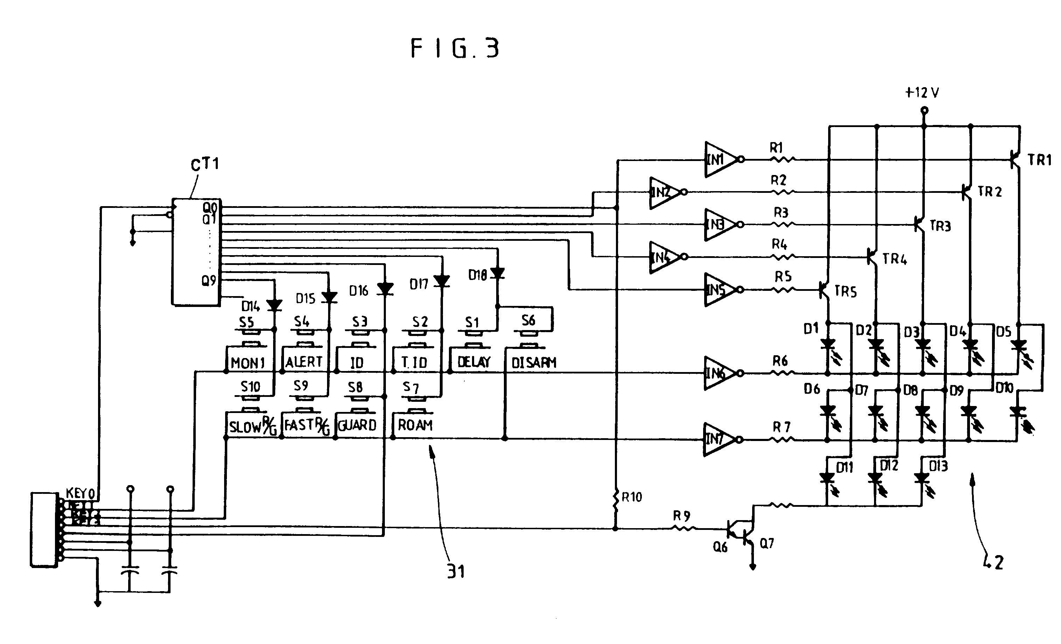

Next, proceeding to step S5, a determination is made as to whether one of the drop sensors 45 or 47 has been activated. For example, when the left drop sensor 46 is activated (illustrated in Figure 3a as YES), the output signal of this left drop sensor 46 is input to the input terminal PORT3 of the first microcomputer 10, and thereby causes output to the output port PORT1 of a signal which stops the rotation of the forward and reverse driving motor 44. At step S22, the forward and reverse driving motor 44 is stopped, and accordingly, driving of the main caster 9 and the right and left sub-casters 7A and 7B, which cooperate with the main caster 9, is stopped. Proceeding to step S23, the forward and reverse driving motor 44 is reversely rotated momentarily to provide backward movement for a predetermined distance, after which a return is made to step S3.

On the other hand, when a drop sensor is not activated during step S5, by proceeding to step S6, a determination is made as to whether one of the sub-casters 7A or 7B are being operated by cooperation with the main caster 9. When one or both of the sub-casters 7A or 7B are not operating, step S22 is performed as described above. Otherwise, when sub-casters 7A and 7B are being properly driven, the flow proceeds to step S7, such that the forward and reverse driving motor 44 maintains the forward movement of the robot R. Next, a determination is made, during step S8, as to whether any obstacles have been found by the navigation system 60. In the event that an obstacle has been found, a signal indicative of such a find is provided to the input port PORT3 of the first microcomputer 10. The microcomputer 10 subsequently terminates the driving of the main caster 9 and the sub-casters 7A and 7B. Then, as part of step S9, the steering motor 45 is driven, thereby shifting the direction of the robot R. Next, as part of step S10, straight movement is achieved in the new direction by a distance set by the navigation system 60. Then, in step S11, the robot R stops at a location where an intruder, fire, sound, ambient temperature and the like, are easily detected.

If no obstacle has been found at step S8, then step S10 is performed, along with operations subsequent to step S10.

Thereafter, while the robot R is stopped, step S13 of Figure 2(d) is performed by emitting a8n ultrasonic wave from sensor 29 and then receiving its reflection as well as by receiving infrared rays such as are produced by a human body. In this manner, the detection an intruder and movement thereof is achieved using the ultrasonic sensor 29 and the infrared detecting sensor 34. Then, proceeding to step S14, a determination is made as to whether or not there is an intruder present. When not, a return is made to step S13, and the operations subsequent to step S13 are repeated. If so, step S15 is executed by outputting a signal from the second microcomputer 30 thereby driving the transmission controller 32 which, in turn, transmits a signal through the antenna 4, which signal drives the monitor M and the automatic telephone transmitting means AD. Next, as part of step S16, since the monitor M and the automatic telephone transmitting means AD are simultaneously driven by the transmitted signal, an authorized user carrying the monitor M who happens to be away is alerted simultaneously with an automatically dialed police station, fire station or central monitoring unit such as a control room, to the fact that an abnormal condition has arisen within the interior of the house or office. Accordingly, the operation cycle of the mobile monitoring device is terminated.

On the other hand, if a relatively loud sound is detected during sound detection at step S12 of Figure 2(d), an analog output signal is input through the input terminal IN4 of the second microcomputer 30. Then step S15 is executed, as well as the steps subsequent to step S15 as mentioned above. In the case of having not detected any sound, the end step is executed whereby the operating cycle of the mobile monitoring device is terminated.

Also, during step S17, if there is no sudden temperature change, while discriminating whether or not there is an ambient temperature change, step S18 is executed. During step S18, a determination is made of whether or not ionization has been detected. If so, that is, if smoke particles are found thereby indicating that an outbreak of fire has been detected, a signal is input through the input terminal IN3 of the second microcomputer 30. Then, by proceeding to step S15, step S15 is executed as well as steps subsequent to step S15 as mentioned above. If there is no detection at step S18, the end step is executed, thereby terminating the operation cycle of the mobile monitoring device. On the other hand, in the event that the ambient temperature detecting sensor 39 has detected a sudden ambient temperature change at step S17, a signal is input through the input port IN3 of the second microcomputer 30. Then the step S15, as well as subsequent steps thereto, are executed as mentioned above.

In the textual description of the flow charts illustrated in Figures 2(c) and 2(d), the left drop sensor 46 and the left driving condition detecting sensor 48 are used to exemplify step S5 and step S6. Because it is well understood that the right drop sensor 47 and the right driving condition detecting sensor 49 operate in the same manner as their left side counterparts, a specific example utilizing the right-side components has been omitted.

Next, the configuration of the robot systems will be described in detail, with a preferred embodiment.

Fig. 3 shows the configuration of the keyboard 31 and the display unit 42. The keyboard 31 includes 10 keys each having an inherent function appropriately allocated in accordance with the present invention. The display unit 42 includes a plurality of display means, for example, LEDs and so forth, for displaying specified functions selected by using certain keys on the keyboard 31 and for displaying a battery-charge operation which will be described later.

More particularly, as shown in Fig. 3, the keyboard 31 and display unit 42 include a ring counter CT1 which outputs signals sequentially shifted according to the clock signal supplied through the clock signal input terminal KEYO. The ring counter CT1 connects at output terminals QO to Q4 to the corresponding bases of transistors TR1 to TR5 via a plurality of inverters IN1 to IN5 which form a current driving circuit and a plurality of resistors R1 to R5. The transistors TR1 to TR5 each have emitters connected to the 12V power supply and collectors connected to corresponding ends of the LEDs in the display unit 42, respectively. That is, the transistor TR1 has a collector connected to one end of delay-function display LED D5 and one end of disarm-function display LED D10, and the transistor TR2 has a collector connected to one end of temporary secret-code ID-function display LED D4 and one end of roam-function display LED D9. Also, the transistor TR3 is connected at its collector to one end of ID-function display LED D3, one end of guard-function display LED D8 and one end of battery charge-function display LED D13, and the transistor TR4 is connected at its collector to one end of alert-function display LED D2, an end of fast-function display LED D7 and one end of fire alarm-function display LED D12. The transistor TR5 has a collector connected to one end of monitor-function display LED D1, an end of slow-function display LED D6 and one end of burglar or intruder watching-function display LED D11.

Moreover, the ring counter CT1 has output terminals Q5 to Q9 each connected to a corresponding key of the keyboard 31 through reverse-current preventing diodes D14 to D18. More particularly, the ring counter CT1 is connected at its output terminal Q5 to one end of delay function key Sl and one end of disarm key S6, and is connected at its output terminal Q6 to one end of temporary secret-code ID-function key S2, and one end of roam function key S7. The counter CT1 is connected at its output terminal Q7 to one end of ID-function key S3 capable of selecting between power ON/OFF, secret code input or numeral input functions and one end of guard function key S8. It is also connected at output terminal Q8 to one end of alert function key S4 and one end of fast function key S9. Also, the counter CT1 is connected at its terminal Q9 to one end of monitor key S5 and one end of slow function key S10.

In addition, a function-selecting key KEY1, not shown, which is provided on the robot system is connected to other ends of the function keys S5, S4, S3, S2, S1 and S6 and to other ends of the LEDs D1, D2, D3, D4 and D5 through an inverter IN6 and a resistor R6. A function-selecting key KEY2 is connected to other ends of the function keys S10, S9, S8 and S7 and to other ends of the LEDs D6, D7, D8, D9 and D10 through an inverter IN7 and a resistor R7. Also, a function selecting key KEY3 is connected to other ends of the LEDs D11, D12 and D13 through Darlington-connected transistors TR6 and TR7 via a resistor R9 and one end of a resistor R10, the other end of which is connected to output terminal QO of the counter CT1. Herein, if any one of the function selecting keys KEY1 to KEY3 is selected by the user, the selected function-selecting key is depressed and grounded in potential level for a predetermined time. Accordingly, it is possible that the function key and display LED, connected with the selected function selecting key, are energized correspondingly. With the configuration as described above, since certain function keys and display LEDs are operated correspondingly by selecting the function selecting key KEY1, KEY2 or KEY3, the keyboard 31 and the display unit can be constructed generally simply.

In the keyboard 31 and display unit 42 of the present invention, constructed as described above, if the clock signal is inputted from the microcomputer 30 to the clock input terminal of the counter CT1 through the clock terminal KEYO, the counter CT1 produces sequentially shifted output signals on the basis of the clock signal. Under this condition, if the function-selecting key KEY1 and the function key S5 are pressed selectively in order to select the monitor function, a high-level signal is supplied to an input terminal Pal of the microcomputer 30 for a connection time of the function key S5. Accordingly, the microcomputer 30 determines that the monitor function has been selected, and performs control in order to perform the monitoring function of the robot system. When the connected condition of the function key S5 is released, a high-level signal is supplied to an input terminal of the inverter IN6, and the inverter IN6 outputs a low level signal. At this time, a high level signal is supplied from the output terminal Q4 of the ring counter CT1 to the inverter IN5, and the inverter IN5 outputs a signal of low level. As a result, the transistor TR5 is rendered conductive and thereby the monitor function display LED D1 is lighted to indicate selection of the monitor function. Similarly, other function-selecting keys and function keys are selected in the same manner.

The aforementioned functions of the robot system mentioned above will be described. First, the delay function causes carrying out of another selected function after a certain delay time, i.e., when the fast, slow or guard function has been selected. The monitor function is a function for alerting the user to the cry of a baby, or for performing other call-functions. The alert function generates a sound signal when a human body or obstacle is sensed. The roam function carries out roaming of the robot system without performing any watching-function. The fast function causes the robot system to move quickly to look out, and the slow function causes the robot system to move slowly to look out. The ID function is a function capable of turning ON or OFF the power supply, inputting the secret code and using the 10 keys as numeral input keys. The disarm function releases the watching function of the robot and the temporary ID function allows input of a temporary secret code in an abnormal state of the robot system to carry out a desired function. Finally, the guard function is the standard setting for carrying out the watching function while the robot system is stationary.

The robot according to the present invention is constructed with an operating system for watching and searching a location requiring a guard, patrolling a guarded area using the driving power of the operating system. The operating system has a driving means for transporting the device, the driving means including a driving member which is connected to a driving motor through a speed changing member and turning freely in normal or reverse directions.

The driving means may change its running direction by means of a steering means.

The steering means includes a rotary disc member supporting the driving means, and the rotary disc member is provided at the bottom of the device so as to be able to turn freely in right or left directions while connected so as to be moved by a steering motor and a speed changing member. The steering means is made to execute its steering function by at least one or more steering control members, and hence the robot is freely moved within the guarded location to patrol and search the area.

A preferred embodiment of the operating device will now be described in detail with reference to the accompanying drawings.

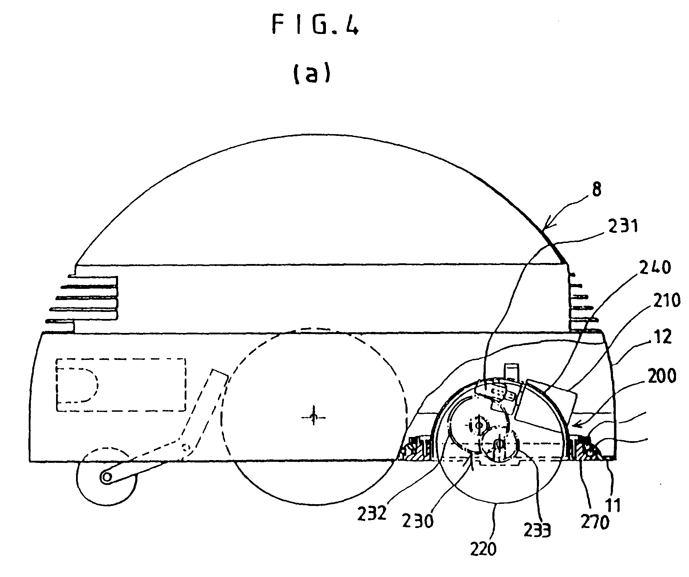

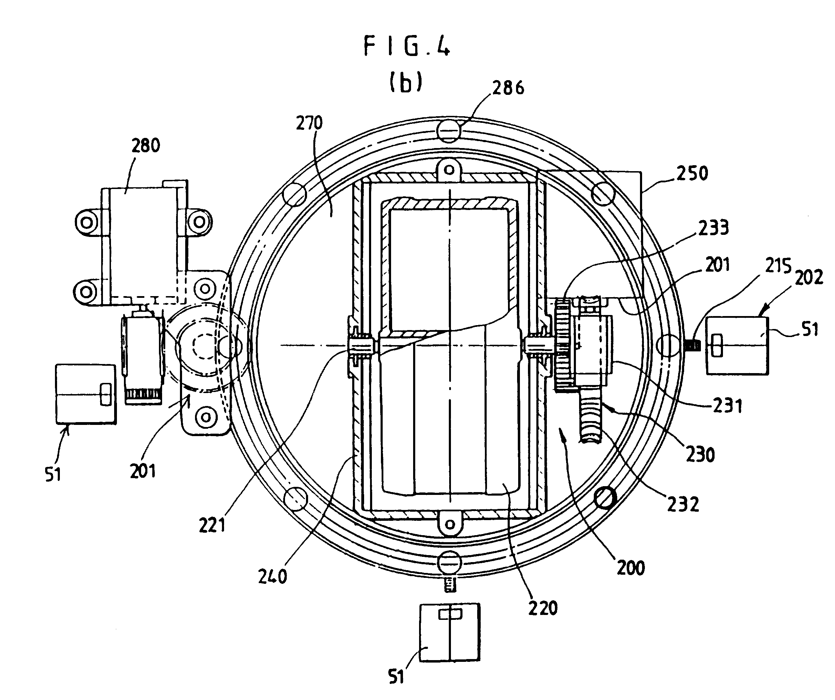

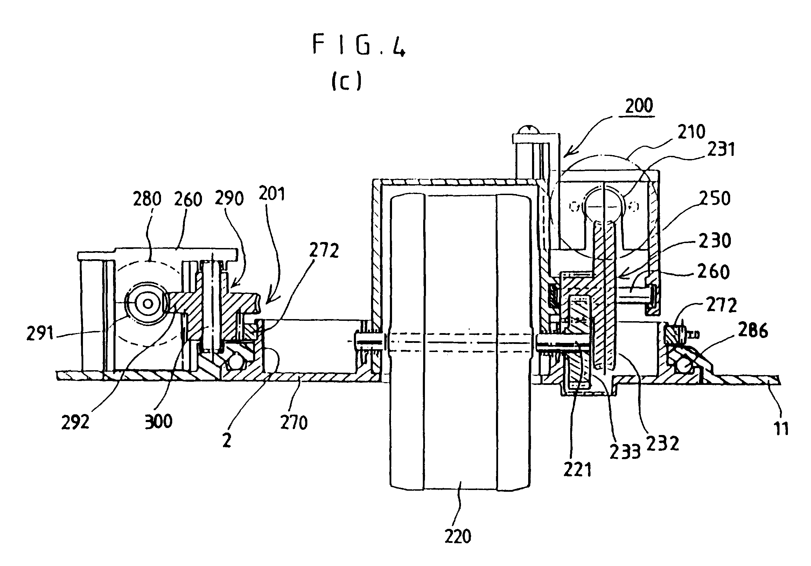

FIG. 4(a) shows a robot provided with an operating system according to the present invention, the robot having a trunk body 8 of semispherical shape.

The trunk body 8 includes a bottom plate member 11 made of a circular plate, and an upper member 12 assembled as an releasable fitting on the bottom plate member 11.

The trunk body 8 includes therein at least one or more sensor means for sensing or searching for a trespasser, gas leakage or sound generating source, and also one or more microcomputers (discussed above) contained therein which receive the signals from the sensors to thereby produce a warning signal. A mico also receives the signals inputted from an obstacle sensing means (navigation unit) provided at the front and rear of the robot to thereby allow the robot to steer clear of obstacles.

FIG. 4(a) illustrates an embodiment of a mechanism capable of providing the drive operating system. The drive operating system is shown in detail in FIGS. 4(b) and (c) and includes a driving means 200, steering means 201, and steering control member 202.

The driving means 200 includes a driving motor 210 and a driving member 220 of roller form, between which a speed changing member 230 is interposed whereby the driving power of the motor is speed-reduced and transferred to the driving means 220.

The driving means 200 is mounted on the steering means 201 which will be described hereinafter, and the driving member 220 is mounted integrally with a shaft 221 which is transversely mounted on the steering means 201. The top of the driving member 220 is covered by a cover 240, and the driving means is fixed by a fixing member 250 at an upper portion of a side surface of cover 240. The driving motor is mounted so as to be slightly inclined with a predetermined gradient.

The speed changing member 230 includes a worm 231 provided at the driving motor side, a worm gear 232 and a spur gear 233, which reduce the driving speed of the driving motor by an appropriate ratio.

The worm gear 232 is also rotatably mounted to a shaft 260 which is transversely mounted between the cover 240 and the fixing member 250, and a spur gear 233 is meshed with said worm gear 232 and also it is integrally mounted to a shaft 221 which is fixed to the driving member 220.

On the other hand, the steering means 201 includes a rotary disc member 270 of circular plate form mounting the driving means 200. The rotary disc member 270 is assembled by inserting it from the bottom of the plate member 11. Rolling bearing members 286 are interposed between the rotary disc member 270 and the bottom plate member 11 so that the rotary disc member 270 executes smooth and free rotation.

On the rotary disc member 270, there is provided a peripheral wall portion 271 extending upwardly, the peripheral wall portion 271 passing over the bottom plate member 11 and protruding into the interior of trunk body 8. A sun gear 272 of ring shape is inserted outside the top end of the peripheral wall portion 271. The sun gear 272 acts as a base for setting and holding of the rotary disc member 270 to the bottom member 11, and cooperates with speed changing member 290 and steering motor 280 which rotates in normal or reverse direction according to a signal input from steering control member 202.

The steering motor 280 is fixed by member 260 at an appropriate location outside the circumference of the rotary disc member 270 at a position adjoining the rotary disc member as far as possible. The speed changing member 290 includes a worm 291 mounted on a shaft of the steering motor 280 and a worm gear 292 meshed with the worm 291. Worm gear 292 is rotatably fixed to a shaft 300 which is mounted vertically between the bottom plate member 11 and the member 260.

The worm gear 292 is meshed with the sun gear 272 of the rotary disc member 270 to transfer the driving power transferred from the steering motor to the rotary disc member.

The steering control member 202 is constructed with a magnetic member 215 fixed at an appropriate position of the gear 272 of the rotary disc member 270, and at least three or more steering direction detecting sensors 251. The magnetic member 215 is fixed in a direction perpendicular to the gear 272, and the steering sensors 251 are fixed around the gear 272 as to maintain the same distance interval with the set distance of the magnetic member. That is, they are fixed assuming the advancing (forward) direction of the trunk body 8, and are provided at the front of the trunk body 8 and at both right and left sides.

Operation will be explained with reference to Figs. 4(b) and 4(c).

When a starting signal is given, the micom 10 contained within the trunk body 8 is provided with an initial starting signal, and at the same time, the micom 10 drives the driving motor 210, and the driving power of said driving motor is transferred to the driving member 220 through the speed changing member 230 to thereby drive the trunk body 8. At this moment, the operation is made to be in a front running direction. Also, at this moment, the direction of the driving member 220 will be maintained unchanged, i.e., the position which had been left at the previous stopped state.

When the robot receives an obstacle detection signal from the obstacle sensor means 60 while moving in the forward direction, the micom 10 receives this detected signal and at the same time, outputs a driving signal to the steering motor 280 of the steering means 201 to thereby perform steering. The direction will be adjusted to a direction avoiding the obstruction recognized above.

In more detail, the micom 10 selects the side where no obstacle is sensed when an obstacle is detected in one direction, and causes the steering motor 280 to be turned to said selected direction. At the same time, the rotary disc member 270 is turned in the desired direction.

When the rotary disc member 270 is turned by a predetermined angle to reach a predetermined direction, the steering control member 202 detects the steering state, and finishes the steering operation of the steering motor 280 according to the detected signal to thereby come to steer the trunk body 8 to a desired direction. Thus, the robot is made to patrol continuously within the guarded area.

Next will be described the circuit for driving the operating unit.

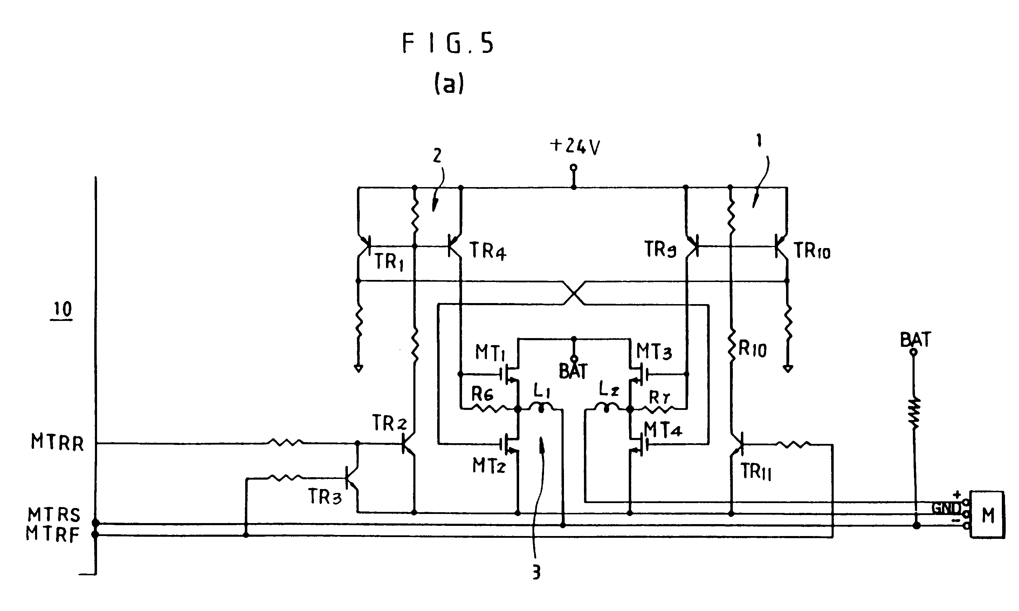

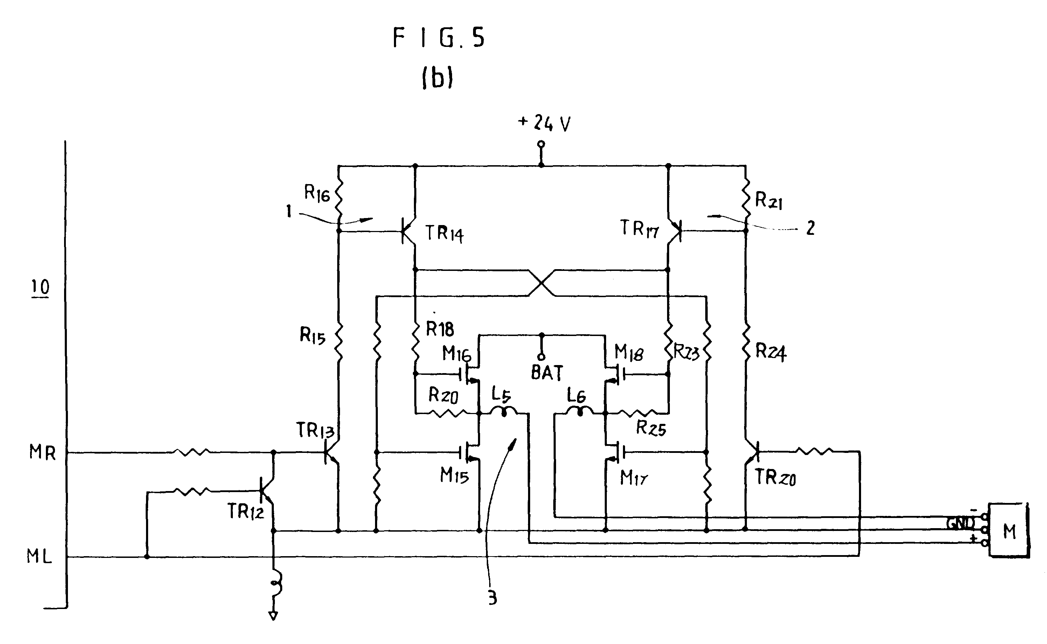

Referring to Fig. 5 (a), there is shown the motor driving circuit according to the present invention, which comprises a motor forward-rotation control portion 1 for rotating a motor forwardly, a motor reverse-rotation control portion 2 for rotating the motor reversely and a rotational direction setting portion 3 for setting the rotational direction of the motor.

The motor forward-rotation control portion 1 includes a first transistor TR11 having a base connected to receive a motor forward-rotation control signal supplied from an output terminal MTRF of the microcomputer 10, and an emitter connected to ground. Second and third transistors TR9 and TR10 each have a base commonly connected to a collector of the transistor TR11 through a resistor R10 and an emitter connected to the power supply of 24V, respectively.

The motor reverse-rotation control portion 2 includes a fourth transistor TR3 having a collector connected to receive a motor reverse-rotation signal from output terminal MTRR of the microcomputer 10 and a base connected to the output terminal MTRF; a fifth transistor TR2 having a base connected to a collector of the transistor TR3 and an emitter connected to the emitter of the transistor TR3; and sixth and seventh transistors TR1 and TR4 each having a commonly connected base connected to a collector of the transistor TR2 and an emitter connected to the power supply 24V.

The rotational direction setting portion 3 includes a first MOSFET MT1 having a gate, commonly connected with a its source through a resistor R6, connected to the collector of the transistor TR4; a second MOSFET MT2 having a gate connected to the collector side of the transistor TR10, a drain connected to the source of the MOSFET MT1 and a source connected to ground; a first inductor L1 having an end connected to a node between the source and drain of the first and second MOSFETs MT1 and MT2 and its other end connected to a terminal " - " of the motor thereby delaying the rotational speed of the motor; a third MOSFET MT3 having a gate commonly connected with its source through a resistor R7 and connected to the collector side of the transistor TR9; a fourth MOSFET MT4 having a drain connected to a source of the MOSFET MT3, a gate connected to the collector side of the transistor TR1 and a source connected to ground; and a second inductor L2 having an end connected to a node between the source and drain of the third and fourth MOSFETs MT3 and MT4 and its other end connected to a terminal " + " of the motor.

With such a construction, when the robot system moves forwardly and carries out the watching or roam function, an output signal of high level is outputted from the forward rotating control signal output terminal MTRF of the microcomputer 10 to the transistors TR3 and TR11 so that these transistors are rendered conductive. Accordingly, the bases of the transistors TR9 and TR10 are decreased in potential to thereby render the transistors TR9 and TR10 conductive. As a result, the MOSFET MT3 connected to the collector side of the transistor TR9 is rendered conductive and the MOSFET MT2 is also rendered conductive. Therefore, a current flows via a current loop which is formed by the circuit: 24V power (BAT) voltage - MOSFET MT3 - inductor L2 - motor(+)terminal - inductor L1 - MOSFET MT2 - ground. Thus, the motor rotates forwardly so that the robot system moves forwardly. In this case, the forward moving speed is monitored by checking the output current of the inductor L1. Alternatively, with the motor being pulsed on and off to control speed, during the off-times the analog value at port MTRS (motor sense) will be inversely proportional to the motor speed.

If an obstacle is sensed by the ultrasonic sensor in forward movement, an output signal of high level is outputted from the reverse rotating control signal output terminal MTRR of the microcomputer 10 to the transistor TR2, thereby the transistor TR2 is rendered conductive and the transistors TR1 and TR4 are also rendered conductive. Thus, the MOSFET MT1 is rendered conductive and the MOSFET MT4 is also rendered conductive. As a result, a current flows via a current loop which is formed by the power supply - MOSFET MT1 - inductor L1 - motor(-)terminal - MOSFET MT4 -inductor L2 - ground, so that the motor rotates reversely and the robot system moves backwardly.

Next, a direction changing control circuit for changing the moving direction of the robot system will be described below with reference to Fig. 5(b).

As shown in Fig. 5(b), the direction changing control circuit includes a right direction changing portion 1 which comprises a switching transistor TR12 having a collector connected to a right direction changing signal output terminal MR of the microcomputer 10 and a base connected to a left direction changing signal output terminal ML, a first transistor TR13 having a base connected to the collector side of the transistor TR12 and an emitter connected to ground, and a second transistor TR14 having a base connected to a node between resistors R15, R16 connected to the collector of the transistor TR13 and an emitter connected to the 24V power supply; a left direction changing portion 2 which comprises a third transistor TR20 having a base connected to a left direction changing signal output terminal ML of the microcomputer 10 and an emitter connected to ground, and a fourth transistor TR17 having a base connected to a node between resistors R24, R21 connected to the collector of the transistor TR20 and an emitter connected to the power supply; and a direction setting portion 3 which comprises a first MOSFET M16 having a gate connected to a source thereof through a resistor R20 and to the collector of the transistor TR14 through a resistor R18, and a drain connected to the 24V power supply, at BAT. A second MOSFET M18 has a gate connected with a source thereof through a resistor R25 and connected to the collector of the transistor TR17 through a resistor R24, and a drain connected to the 24V power supply; third and fourth MOSFETs M15 and M17 each have a gate connected to the collector of the transistors TR14 and TR17 respectively, a drain connected to the sources of the MOSFETs M16, M18 and a source connected to ground, respectively; an inductor L5 has an end connected to the source side of the MOSFET M16 and its other end connected to a positive terminal " + " of the motor, and an inductor L6 has an end connected to the source of the MOSFET MT18 and its other end connected to a negative terminal " - " of the motor.

With such a construction, if an obstacle is sensed during operation of the robot system, an output signal is supplied from the right or left direction changing control signal output terminal Ml or MR of the microcomputer 10. If the terminal ML outputs a signal of high level, indicative of an obstacle to the riight, the transistor TR12 is rendered conductive and the transistor TR20 is also rendered conductive. As a result, the base of the transistor TR17 is decreased in potential so that this transistor is also rendered conductive and thereby the MOSFETs MT15 and MT18 are rendered conductive. Accordingly, a current flows through a current loop which is formed by the battery BAT(24V) - MOSFET M18 - inductor L6 - motor(-)terminal - inductor L5 - MOSFET M15. Therefore, the motor rotates so that the robot system is turned to the left.

Alternatively, if the output terminal MR outputs the high level signal indicative of an obstacle to the left, the transistor TR13 is rendered conductive and then the transistor TR14 is rendered conductive, whereby the MOSFETs M16 are M17 are also rendered conductive. As a result, a current flows through a current loop which is formed by the battery BAT(24V) - MOSFET M16 - inductor L5 - motor(+)terminal - inductor L6 - MOSFET M17, so that the motor rotates in a reverse direction, thus, the robot system turns to the right.

Next, a faulty surface detecting device mounted to the bottom plate member 11 of the robot in order to prevent the robot being overturned at a non-planar location of a driving surface will be explained.

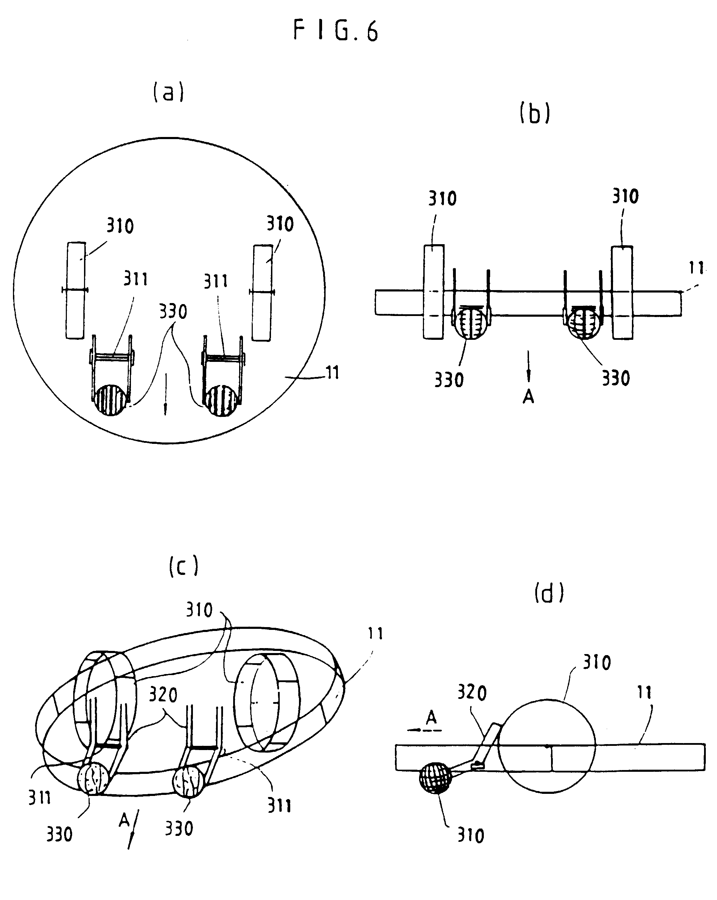

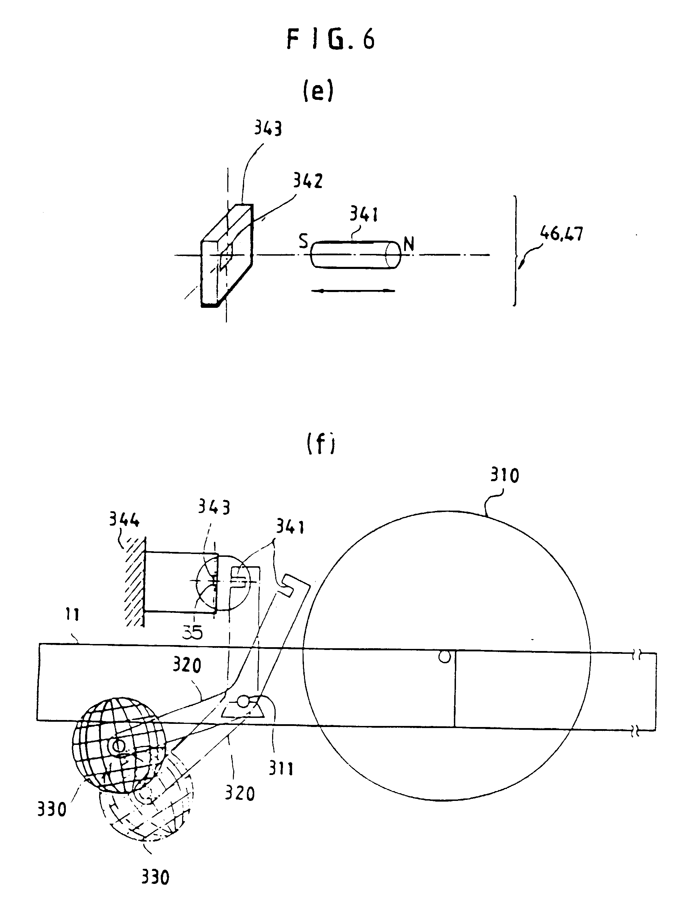

The detecting device for obtaining the above object is constructed as in Fig. 6 with balls arranged at the right and left front portions of the mobile robot. Levers are provided with a ball at one end and a magnet at the other respectively. A sensor is provided for sensing the state of the rolling surface in response to a location change of either of the two balls. A right side surface detecting means judges the condition of a right side surface in accordance with the surface state sensing of the right-hand sensor, and a left side surface detecting means judges the condition at the left side surface in accordance with the sensing of the left-hand sensor. Levers are arranged on the bottom plate member 11 of the trunk body 8 by hinge pins 311 respectively, and the sensors are mounted on the bottom plate member 11 and confront a magnet which is mounted to the other end of the lever.

Hereinafter, a preferred embodiment of the faulty surface detecting device will be described in detail with reference to the accompanying drawings.

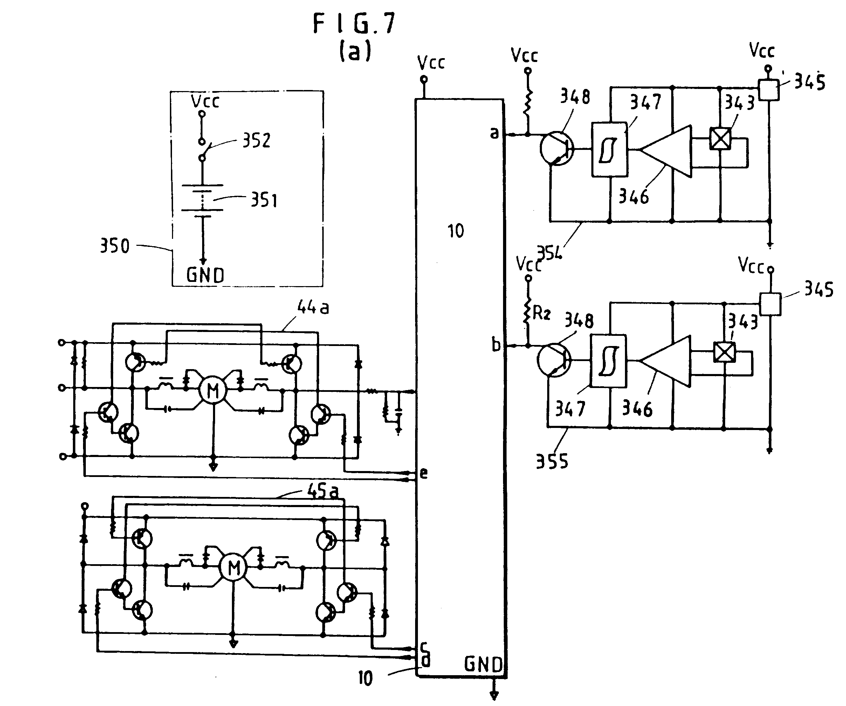

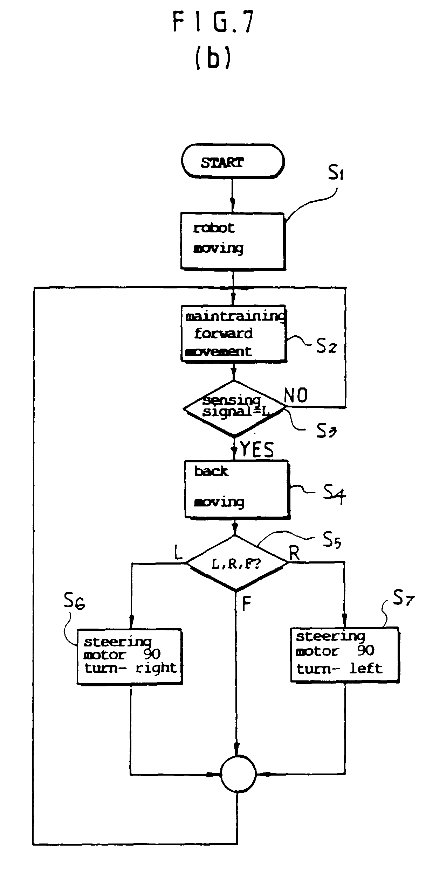

FIG. 6(a)(b)(c)(d) are structural diagrams schematically showing the surface detecting device of the mobile robot according to the present invention. FIGS. 6(a) and (b) show an operating state of the device, FIG. 7(a) is a circuit for driving the device, and FIG. 7(b) is a flow chart illustrating the operational sequence.

As shown in FIG. 6(a), (b), (c) and (d), on the bottom plate member 11 of the robot of substantially circular shape, there are arranged two driving wheels 310 confronting each other around the plate center. Two levers 320 are arranged on the bottom plate member 11 between the two driving wheels 310 so as to be able to move up and down, respectively. On each of the levers 320, the middle portion is bent at a predetermined angle, and hinge pins 311 are fixed at both ends of edges of the bent portion. At the front end of the lever 320, there is rotatably provided a ball 330 having a diameter which is substantially the same as the width of said each hinge pin 311. Accordingly, when the mobile robot advances in the arrow A direction, when it reaches a stair portion or a drop off of the floor whereby at least one of the right and left balls 330 falls, such stair portion, drop off or pitted portion of the surface is detected by a Hall element cell which will be described hereinafter. The robot moves backward for a moment under the control of micom 10, turns by 90° to the right or left, and thereafter operates so as to execute normal operation.

Next, this will be described with respect to the mechanical operation of the faulty surface detecting device of the mobile robot according to the present invention with reference to the FIG. 6(a) to 6(f).

As shown in FIG. 6(e) and (f), the drop sensors 46, 47 each include a permanent magnet 341 of bar shape having an N-pole and S-pole, and a Hall element cell 343 having a Hall element chip 342 which can be arranged on the horizontal axis of the permanent magnet 341.

The permanent magnet 341 is made to operate in such a manner that the other end portion of the lever 320 with the permanent magnet therein leaves or approaches the Hall element chip 342 according to the action of the ball 330 which is attached to the first end portion of the lever 320 as shown in FIG. 6(f), and cooperatively moves in response to the movement of the mobile robot, so that a stair portion or pitted area of the underlying surface can be detected according to the electrical signal generated by the Hall element chip 342. That is, in FIG. 6(f), when the mobile robot of the present invention normally advances on a flat surface, the left side ball 330 and the lever 320 maintain a position as shown in solid line. However, when a stair or other drop off occurs on the left side of the road surface, the left side ball 330 falls down at the stair or other drop off and thereby the position of the left side ball 330 and the lever 320 are displaced as shown by the one dotted chain line.

At the stair or drop off, the source of the magnetic field (the permanent magnet 341 attached to the top end portion of the lever) approaches the Hall element cell 343 attached to bracket 344 and the change in field strength is detected via Hall element cell 343, so that the advancing movement of the robot is stopped. The next operation (reversing the robot) is controlled by micom 10, as described hereinafter.

FIG. 7(a) shows the driving circuit of the surface detecting device. It is comprised of a power supply 350 which employs a rechargeable battery 351 and has a power supply switch 352. Micom 10 is supplied by the power supply and controls the normal operation of the mobile robot, and runs the program for detecting the faulty surface. A steering driver 201 (FIG. 4b) shifts the moving direction of the mobile robot according to the control of the micom 10; a forward or backward movement driving means 200 operates the mobile robot forward or backward according to the program of the micom 10. The right side surface detecting section 354 detects a bad condition (stair, etc.) at the right side underlying surface under the control of said micom 10, and a left side surface detecting section 355 detects the condition of the left side surface under the control of micom 10.

According to the faulty surface detecting device thus constructed, when firstly the power supply switch 352 of the power supply means 350 is turned ON in order to operate the mobile robot, a direct current power supply Vcc is applied to the mobile robot and thereby the mobile robot is operated according to a normal operation program previously inputted to the micom 10. When the mobile robot reaches a place where a bad surface condition exists on the left side during the robot's progress, the ball 330 attached at the front left side of the mobile robot falls down out of its usual horizontal plane under its own weight.

At this moment, the lever 320 attached to the left side ball 330 is displaced whereby the permanent magnet 341 attached to this lever approaches the Hall element cell 343 connected to voltage regulator 345, and the Hall cell conducts a current in proportion to magnitude of the magnetic field.

When the magnetic field formed perpendicularly to the surface of the Hall chip 342 is strong and exceeds an operating point, current flowing at the Hall element is output from a Schmitt trigger 347 through a signal amplifier 346 which turns on an output transistor 348. Thereby a signal of L-level is inputted through input port b of the micom 10. Consequently the micom 10 judges a bad condition of the surface at the left side of the mobile robot and outputs a signal to port e which operates the frontward/backward operation driving section 44a to thereby move the mobile robot backward by a predetermined distance.

Next, since the micom 10 has judged that the direction holding danger for the robot is to the left, it applies a driving signal to the steering driving section 45a through ports c and d to turn the steering motor M in the rightward direction by a 90° angle.

When the mobile robot reaches a place which is dangerous on the right side during operation, the ball on that side similarly falls under its own weight.

Similarly to the operation of the left side surface detecting section 355, when the magnitude of the magnetic field formed perpendicular to the surface of the Hall chip 342 exceeds the operating point, current flowing at the Hall element 343 is output from Schlmitt trigger 347 through signal amplifier 346, turns ON an output transistor 348 and thereby directs a signal L-level to input port a of the micom 10. The micom 10 judges a bad condition on the right side and outputs a signal to port e to operate the frontward/backward operation driving section 44a to back up the mobile robot by a predetermined distance. Next, since the micom 10 has judged that the direction of danger is to the right, it applies a driving signal to the steering driving section 45a through ports c and d to turn the steering motor 45 to the left by a 90° turning angle.

When both right and left side surface conditions are good, the detectors are not operated, and the robot, of course, executes normal operation as usual.

FIG. 7(b) is a flow chart illustrating the operating sequence of the faulty surface detecting device of the mobile robot of the present invention. When firstly the power supply switch 352 of the power supply means 350 is turned ON, at step S1, direct current is applied whereby the mobile robot begins to operate. At step S2, it begins to move in accordance with the program of normal operation previously inputted to the micom 10.

Successively, at step S3 when the ball 330 attached to the front right or left side drops, the position of permanent magnet 341 attached to the top portion of the lever 320 is displaced toward the Hall element cell 343 and the degree of magnetic field change is detected at Hall element cell 343 and amplified to a predetermined value at the signal amplifier 346. When the signal passes through the Schmitt trigger 347 and turns ON the output transistor 348, an L-level is input to the micom 10 through the port a (or b). Flow proceeds to step S4, and the mobile robot is moved back by a predetermined distance in accordance with the program established in micom 10. At step S5 the mobile robot moves, after the micom 10 judges whether the bad surface is in front (both balls drop) or to the left or right of the mobile robot. When on the left side L, flow proceeds to step S6 and the micom 10, after causing the robot to back up a short distance, applies the operating signal to the steering driving section 45a through the ports c and d and turns the steering motor 45 to the right side by a 90° turning angle to prevent the mobile robot from falling down, and then returns to step S2. When the micom 10 judges that a bad surface is present at the right side R of the mobile robot, flow proceeds to step S7 and the micom 10 applies the operation driving signal to the steering driving section 45a through the ports c and d and thereby drives the steering motor 45 so as to steer to the left by 90° after backing up a short distance. Flow returns to step 52 and normal operation ensues.

When there is a bad surface at the front of the mobile robot (both balls drop down) and the mobile robot should be moved backward, the micom applies a movement signal to the front and back operation driving section 44a through port e to move the mobile robot backward. The robot may simply turn around in this case.

In the case where the surface is good, at step S3, that is, when S3 yields NO, a signal of H-level is input to the ports a, b of the micom through the output transistor 348 of the right and left side surface detecting section 344, 345, and flow returns to step S2 and the robot moves in accordance with the operating program previously inputted to the micom 10.

Thus, with the fall preventing device of the mobile robot of the invention, in order to prevent falling, the value at the Hall element cell, which cooperatively changes in response to the position variation of the permanent magnet attached to the top end portion of the ball/lever unit, is judged at the micom 10, whereby a bad surface which may be present at the front, right or left side of the mobile robot is detected, so that the mobile robot can operate safely.

Next, the navigation system 60 and obstacle detection by means of ultrasonic waves will be described in more detail.

In accordance with the present invention, ultrasonic energy is emitted within a detection envelope from a single transducer for remote object detection purposes based on the principle of echo ranging. A powerful pulse of sonic energy of short duration is emitted and directed in a certain variable direction by the transducer, which then listens for echoes reflected from a target within the detection envelope to determine the distance, direction and nature of the target object so detected. Such echoes are received by the single transducer during scanning displacement thereof from a zero position on a platform, against the centering bias of springs which also act as conductors for pulse signal current flow between the transducer and a transmit-receive circuit. An electromagnetic scanner drive imparts oscillatory motion to the transducer for displacement thereof through a sweep angle arc of less than 360° according to one embodiment, by magnetically generated forces varied in accordance with the loading of the electromagnetic scanner drive at the zero position of the transducer and at sweep angle end positions as detected by a position sensor associated with the electromagnetic scanner drive. Such variation in the displacing forces is effected under programmed control in order to maintain a relatively constant sweep angle through which the transducer is displaced in proper timed relation to the pulsing of the transducer by the transmit-receive circuit for ultrasonic emission.

Referring now to the drawings in detail, Figure 8(a) illustrates an electro-acoustic transducer assembly generally referred to by reference numeral 64 which includes a tubular housing generally referred to by reference numeral 512 preferably made of a plastic material and adapted to be fixedly mounted on a platform body with which the navigation system is associated.

The rear end of the housing assembly is closed by a cover member 524 projecting into the housing assembly between the flat wall portion 520 and the generally tubular or cylindrical portion 526 of the housing assembly. A terminal connector plug 528 is mounted by the cover member 524 through which electrical connections are established between the transducer assembly 510 and its control system as described in detail hereinafter.

A pair of clock type bearing elements 540 are threadedly mounted by the tubular housing in alignment with each other to establish a rotational axis in perpendicular intersecting relationship to the longitudinal axis of the tubular housing 512. Bearing supported pintle elements 542 are fixed to the cylindrical transducer support 532 in bearing contact with the bearing elements 540 as shown in Figure 8(b) so as to accommodate substantially frictionless angular displacement of the transducer element 536 about the rotational axis established by the bearing elements 540.

Referring now to Figures 8(a) and 8(b), each of the hub portions of the bearing pintle elements 542 anchor end portions 544 of a pair of oppositely coiled helical springs 546 which center the detector at a straight-ahead dead point. The helical springs which are made of an electrically conductive material such as steel, have ends 548 anchored to the tubular housing through threaded terminal screws 550 and are electrically connected to connectors 552. The terminal screws 550 are fixedly mounted within wall 554 internally dividing the tubular housing assembly 512 into a front chamber enclosing the transducer element 536 in its support 532 and a rear chamber enclosing an electromagnetic scanner drive generally referred to by reference numeral 556.

The scanner drive 556 as shown in Figure 8(b) includes an electromagnetic coil 558 (63, Figure 2(a)) mounted within an annular space formed between an inner tubular core formation 560 and an outer cylindrical housing formation 562 projecting axially from the mounting wall 554. Opposite ends of the electromagnetic coil 558 are connected by terminals 564 and 566 to insulated signal conductors 568 and 570 which extend into the electrical connector plug 528. Electrical current is accordingly supplied to the electromagnetic coil 558 through the conductors 568 and 570 to produce a magnetic energization of the coil of the scanner drive 556 by flow of current. Flow in one direction will produce a repelling magnetic force acting on the magnetic flux emitting face 572 of the permanent magnet 574 to initially exert a pushing force on the transducer 536 in a counter-clockwise direction, for example, as viewed in Figure 8(b) to effect displacement away from the coil face. The magnet 574 is slightly offset from the coil in the counter-clockwise direction in the initial rest state. The offset relationship of pole face 572 to the axis of coil 558 in the zero position insures such counter-clockwise displacement and enables the data processing system hereinafter described to properly predict and detect the direction of displacement of the transducer.

The apparatus as shown in Figure 8(b) will also establish electrical connections between the transducer element 536 and the insulated electrical conductors 576 and 578 connected to the terminal anchoring screws 550 to which the helical spring elements 546 are connected as aforementioned. The electrical conductors 576 and 578 also extend into the connector plug 528 through which electrical pulses are conducted to the transducer element for emission therefrom of ultrasonic energy and through which return echoes are converted into electrical signal energy conducted to the control system with which the transducer assembly 510 is associated, to be described hereinafter in detail.

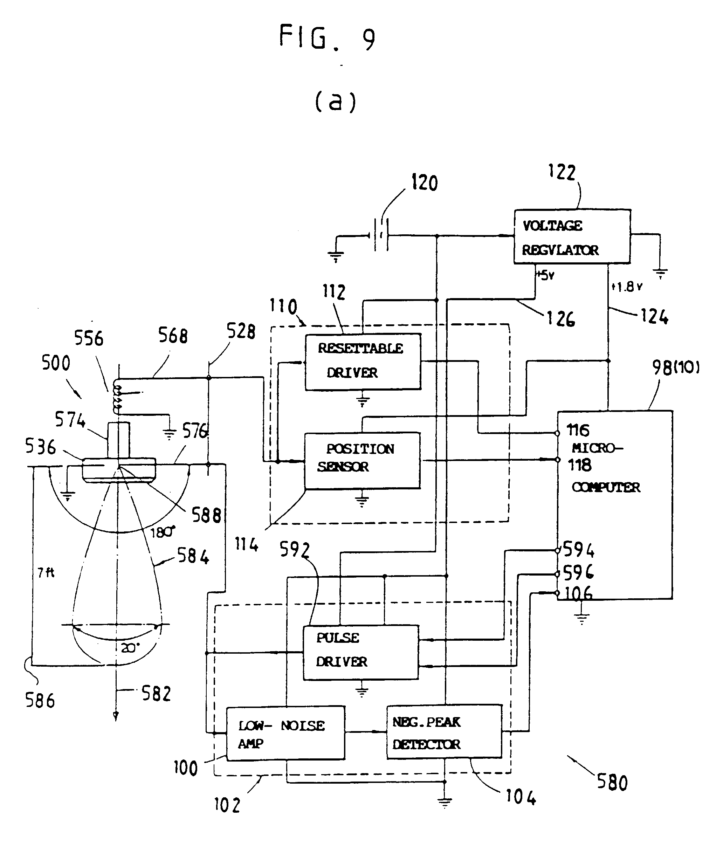

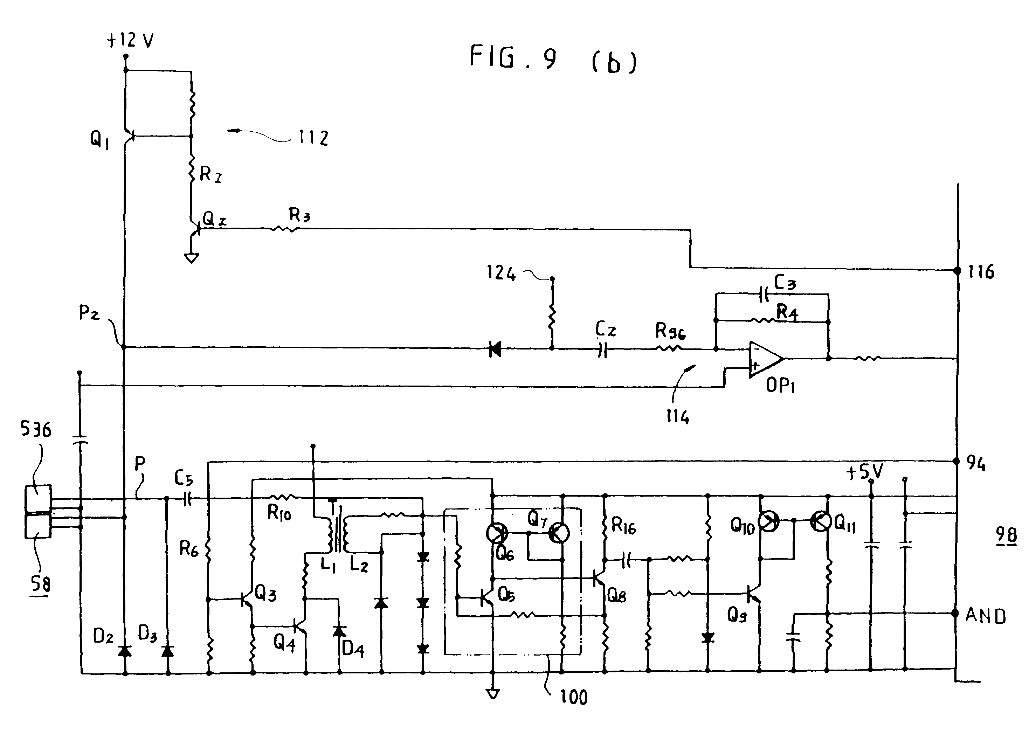

Referring now to Figure 9(a) in particular, the transducer assembly 510 is shown connected through connector plug 528 to the aforementioned control system generally referred to by reference numeral 530. The transducer element 536 is pulsed through the control system by current conducted thereto through the aforementioned conductor 576 in order to emit ultrasonic energy in a direction denoted by vector 582 within a detection zone denoted by envelope 584. According to one embodiment of the invention, the detection zone envelope is established during an interrogation cycle of approximately 11.36 milliseconds during which any object or target within such detection zone will effectively reflect ultrasonic echo energy to be received by the transducer and converted into electrical energy transmitted through conductor 576 to the control system 580. Also, according to such embodiment of the invention, the detection envelope 584 establishes a detection range distance 586 from its rotational axis 588 of up to approximately seven feet which is maintained substantially fixed during each ultrasonic interrogation cycle. Further, the detection envelope 584 illustrated in Figure 9(a) has a maximum sector dimension of approximately 20 degrees.

With continued reference to Figure 9(a), the transducer element 536 of this embodiment scans a detection zone substantially greater than that encompassed by single detection envelope 584 by oscillational displacement of the transducer element 536 about its rotational axis 588 through a sweep angle of less than 360 degrees, such as 180 degrees as shown. Such scanning movement of the transducer is effected by angular displacement in opposite directions by 90 degrees from the zero position shown in Figures 8(a) and 9(a), in response to pulsing of the electromagnetic coil 558 of the drive 556 as aforementioned. Electrical drive pulses applied to the coil 558 are varied in magnitude and timing to achieve and maintain the desired operational relationships between transducer emission and position in response to detection of the zero position of the transducer and its sweep angle end positions limited by engagement with the rubber stop elements 530. Pulsing of the transducer element 536 to effect emission therefrom of ultrasonic energy is achieved through conductor 576, the electrically conductive centering spring elements 546 and a pulse driver 592 in a transmit-receive circuit 102 under control of pulse producing signals and gating signals applied thereto from signal output ports 594 and 596 of a microcomputer 598. Echo signals derived from the transducer element, as a result of reflections from objects within the detection zone, are transmitted through the helical spring elements 546 and conductor 576 to a low noise amplifier 100 in the transmit-receive circuit 102. The amplified echo signals are fed to a negative peak detector 104 of the transmit-receive circuit from which an output is applied to an input port 106 of the microcomputer 598. The signal data received through input port 106 of the microcomputer is utilized to analyze target objects from which echoes are reflected and perform other functions, in accordance with programming algorithms.

Such analysis of the echo signals by the microcomputer is of course dependent upon its time relationship to the pulsing of the electromagnetic coil 558 and detection of the zero and limit positions of the transducer during its scanning displacement as aforementioned. In general, a pulse is applied to the coil 558 which sends the sensor travelling in a counter-clockwise direction. At the limit of rotation in this direction, the sensor strikes and rebounds from the rubber stop 530, and is propelled in the reverse (clockwise) direction by the force of the springs 546. Shortly after the magnet 574 passes the 0° position, which can be easily determined by detecting its interaction with coil 558, the coil is again pulsed to rotate the sensor further in the clockwise direction. Rebounding and return at the clockwise limit occur in the same manner as in the counter-clockwise case. As noted previously, the micom keeps tracks of the amount of time which each cycle (or half cycle) takes, and varies the magnitude of the coil pulse and its timing to establish and maintain a suitable cycle time. From knowledge of the cycle time, it is of course an easy matter to determine the proper timing for ultrasonic emissions so that emissions at selected desired angles can be conducted on a repetitive basis.

In the present embodiment, the displacement of the transducer and detection of the position thereof is achieved through a scanning drive and sensor component 110 as diagrammed in Figure 9(a). Component 110 includes resettable driver circuit 112 and a position sensing circuit 114. The electromagnetic coil 558 is connected through the resettable driver circuit 112 and the aforementioned conductor 568 to a pulse signal output port 116 of the microcomputer. The transducer position signals are detected by the position sensing circuit 114 also connected to coil 558 through conductor 568. The position sensing circuit 114 is connected to a position signal input port 118 of the microcomputer.

The control system 580 further includes a source of power in the form a battery 120, the positive voltage terminal of which is connected to the resettable driver circuit 112, the pulse driver 592 and to a voltage regulator 122. The voltage regulator 122 provides two output voltages of different levels including a 1.8 volt reference bias on line 124 connected to the microcomputer and position sensor 114 and a positive 5 volt supply on line 126 connected to the pulse driver 592, the low noise amplifier 100 and the negative peak detector 104 for operative powering thereof. The bias line 124 establishes a reference above ground with respect to AC signals within the microcomputer 98.

The circuitry associated with the transmit-receive circuit 102 is shown in greater detail in Figure 9(b). The pulse driver 592 includes a stair of emitter follower connected transistors Q3, Q4 and a transformer T1 interconnected between ground and the positive battery terminal to apply a boosted voltage to the transducer element 536 as shown, when an ultrasonic pulse output from output port 94 of the microcomputer is applied through resistor R6 to the base of transistor Q3 in order to apply a control bias to the base of transistor Q4.

A current is then supplied to the primary of transformer T1, as the transistor Q4 is rendered conductive, and the ultrasonic wave from transducer 536 is omitted when the boosted voltage from the secondary of the transformer is supplied to the transducer 563 through caption C5. The diode connected between the primary of the transformer and the transistor Q4 prevents the transistor from being destroyed by a reverse overvoltage generated at the transformer.

The echo signals detected by the ultrasonic transducer 536 are applied through conductor P and a capacitor C5 to the base of transistor Q5 in the low noise amplifier 100, tuned to high gain and low noise by the current mirror circuit Q6, Q7 connected to the collector of transistor Q5.

The output collector of transistor Q8, to which a bias voltage is applied from the 5 volt source through resistor R16, is applied to the base of transistor Q9 tuned by means of the current mirror circuit Q10, Q11 connected to the collector of transistor Q9 to establish a Q of approximately 20 for the low noise amplifier 100, with a gain of approximately 100,000 at ultrasonic frequencies. That is, the amplified and filtered signal output at the collector of transistor Q8 is applied to the base of transistor Q9 which is connected to the current mirror circuit Q10,Q11.

The output of transistor Q11 composing part of the current mirror circuit is connected at its collector to the signal-input port AND of the microcomputer 98 for analog-to-digital conversion and analysis.

Incoming ultrasonic reflection signals are scanned by the microcomputer every 460 microseconds and are thereby translated with an effective one-way distance resolution of about three inches.

With continued reference to Figure 9(b), the resettable driver circuit 112 includes transistor Q2, the base of which is connected by resistor R3 to the pulse driving output port 116 of the microcomputer. The output collector of transistor Q2 is connected through resistor R2 to the base of power transistor Q1 causing it to switch on and conduct current from the battery terminal to the input terminal of the coil 58 through the conductor P2.

The terminal of coil 58 is also coupled through series connected capacitor C2 and resistor R96 to the negative input terminal of operational amplifier OP1 of the position sensing circuit 114. The positive reference terminal of amplifier OP1 is connected to the bias voltage line 124. Feedback for the operational amplifier is established by parallel connected feedback capacitor C3 and resistor R4 to detect signals from the coil 58, bandpass filter it and amplify it 30 times. A diode D2 interconnecting the conductor P2 from the coil 58 to ground prevents inductive kickback voltages from destroying transistor Q1 of the driver once the coil is deenergized.

Next, the sensors arranged within the robot body, i.e., the arrangement of the ultrasonic wave emitting element and the ultrasonic wave detecting sensor, the infrared ray detecting sensor and the physical object detecting sensor will be described in detail with reference to the accompanying drawings.

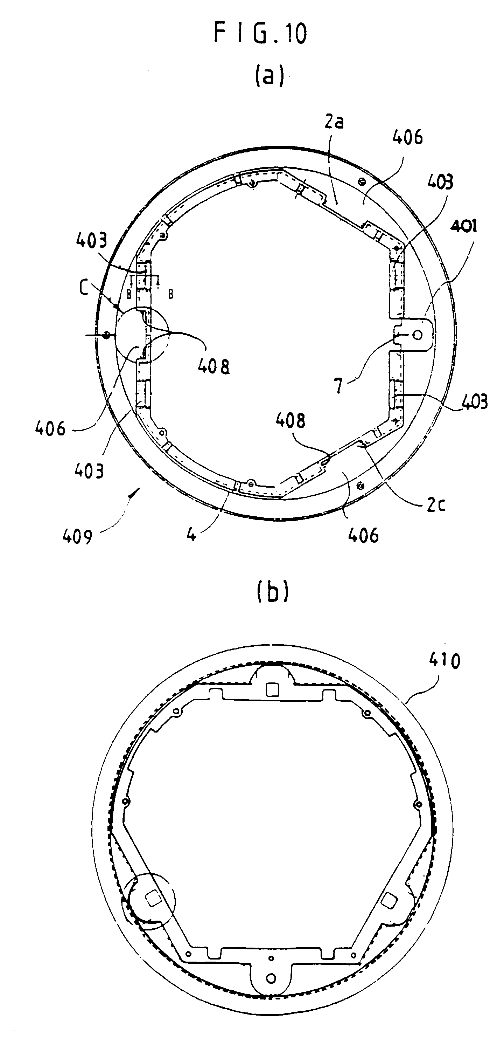

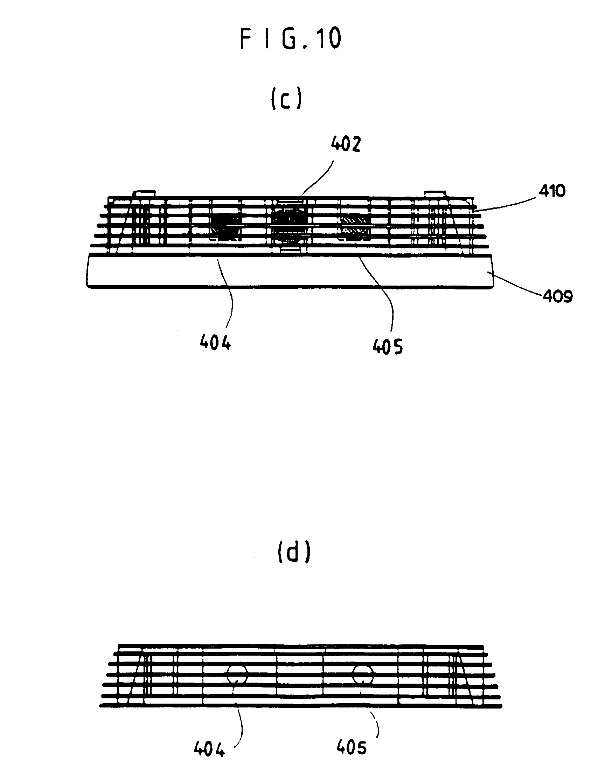

FIG. 10(a) shows a preferred embodiment of the layout of the various sensors. FIG. 10(a) is a diagram showing the setting positions of the sensors formed on the bottom plate member 409 of the robot, and FIG. 10(b) shows a sensor fixing grille 410 for fixing from above the sensor inserted into the setting portion of the bottom plate member 409.

In FIG. 10(c), the electro-acoustic transducer 402 for detecting a obstacle present at close distance in order to control the driving means 200 and the steering means 201 is mounted to a first sensor setting portion 401. This sensor may be comprised of that depicted in FIG. 8(a). An ultrasonic sensor 404 for detecting a physical object moving at a remote distance in order to operate an alarm or the like includes an ultrasonic wave emitting element 404 (FIG. 10(c)) and an ultrasonic wave detecting element 405, wherein the elements 404,405 composing the ultrasonic sensor are mounted to the second sensor setting portion 403, and also at locations 3 when back-facing sensors are employed as well. An infrared ray detecting sensor 408 for detecting infrared rays generated by a human trespasser is mounted at third sensor setting portions 406 formed respectively at an interval of 120°.

Guide ribs 408 are respectively formed at right and left side walls at setting portions 401,403, 406, and when a base board attached to the sensor is inserted vertically along side guide rib 408, a primary setting is made, and after the sensor is inserted, a sensor grille 410 as shown in FIG. 10(b) is assembled to the bottom plate member 409 so that the sensor is more rigidly fixed.

FIG. 10(c) shows a part of frontward portion of the robot trunk 8 which shows the physical object detecting (navigational) sensor 402 and how the ultrasonic wave emitting element and the ultrasonic wave detecting element 404,405 are mounted, and FIG. 10(d) shows a part of the back portion of the robot trunk 8 which shows back-facing ultrasonic wave emitting element 404 and the ultrasonic wave detecting element 405 arranged at right and left.

Although the above description is directed to an ultrasonic sensor, an infrared detecting sensor and a navigation system, the present invention is not limited to such construction and, for instance, can be constructed using a sound detecting sensor, a temperature sensor, an ionization sensor and the like by changing the structure only slightly.

Above-described ultrasonic wave emitting and detecting elements 404, 405 have a structure fixed against positional displacement and are directed forward (and rearward) only, however it is possible to employ a structure capable of displacement within a predetermined range to right and left as follows.

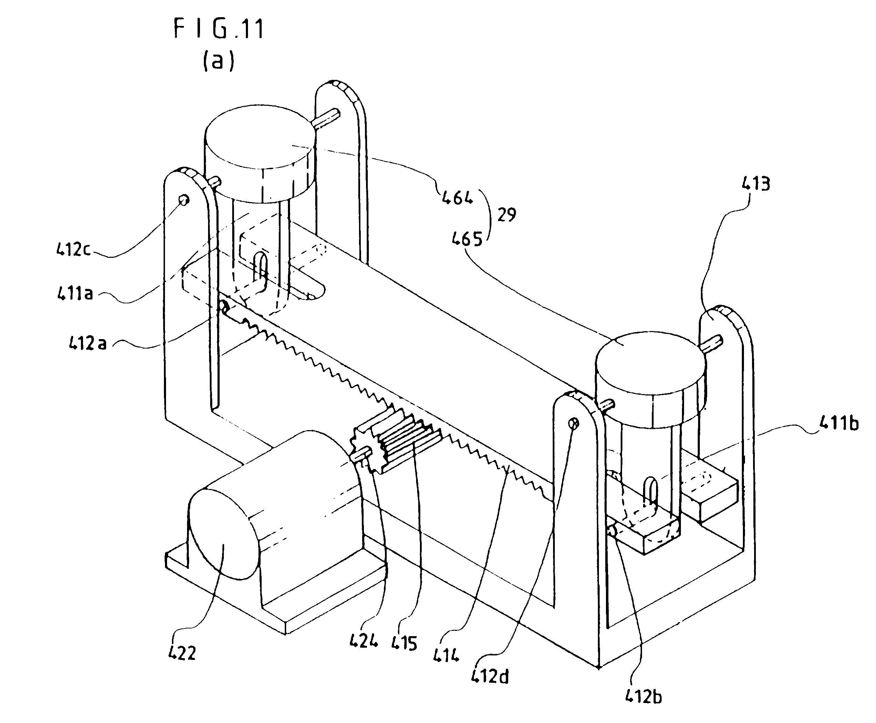

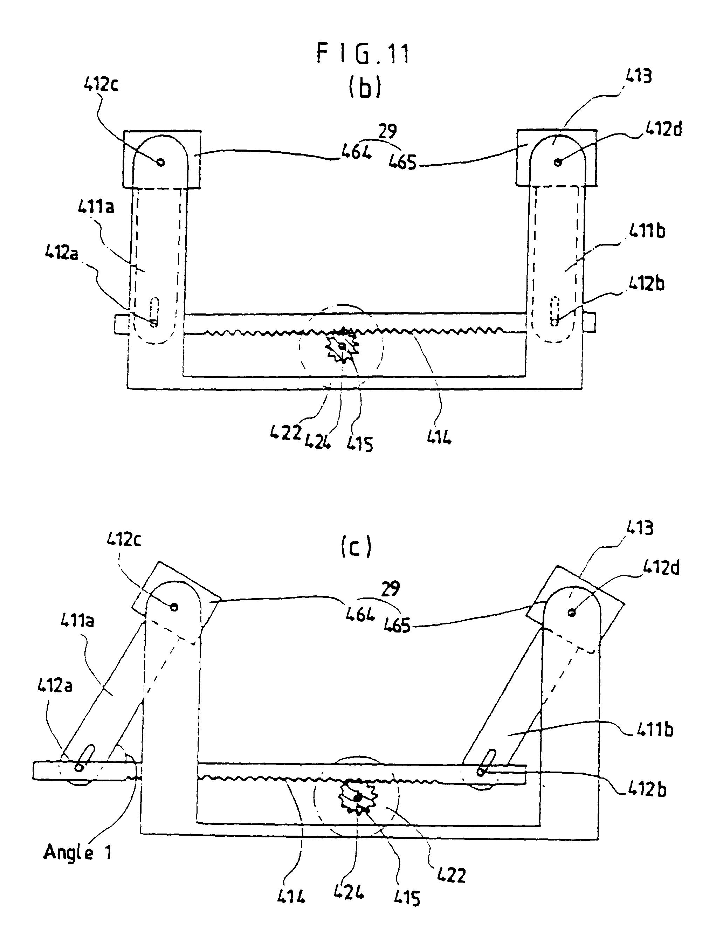

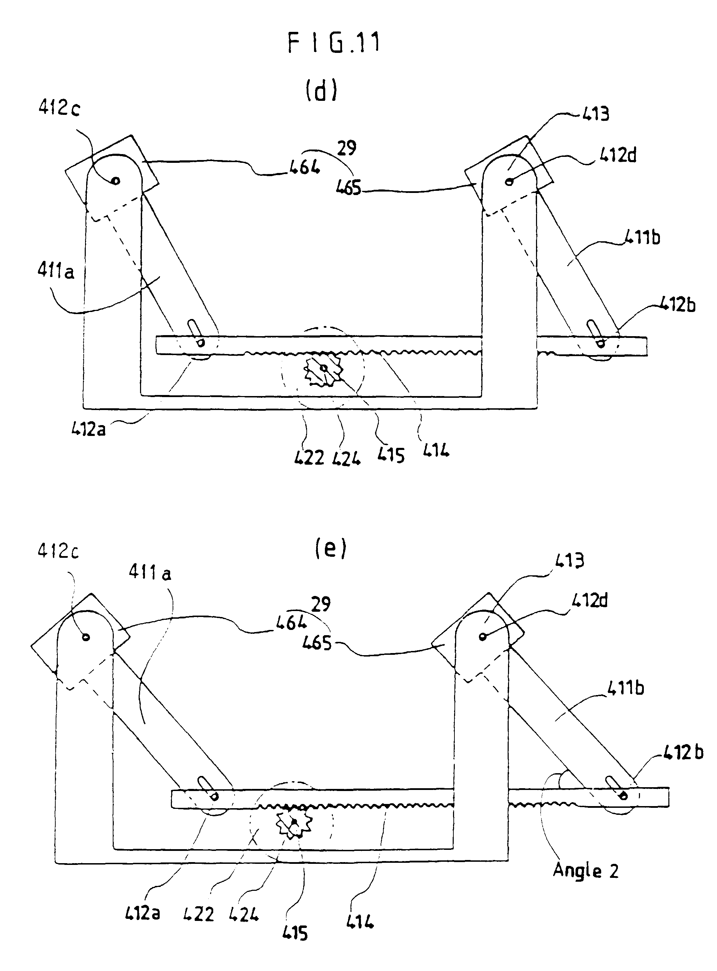

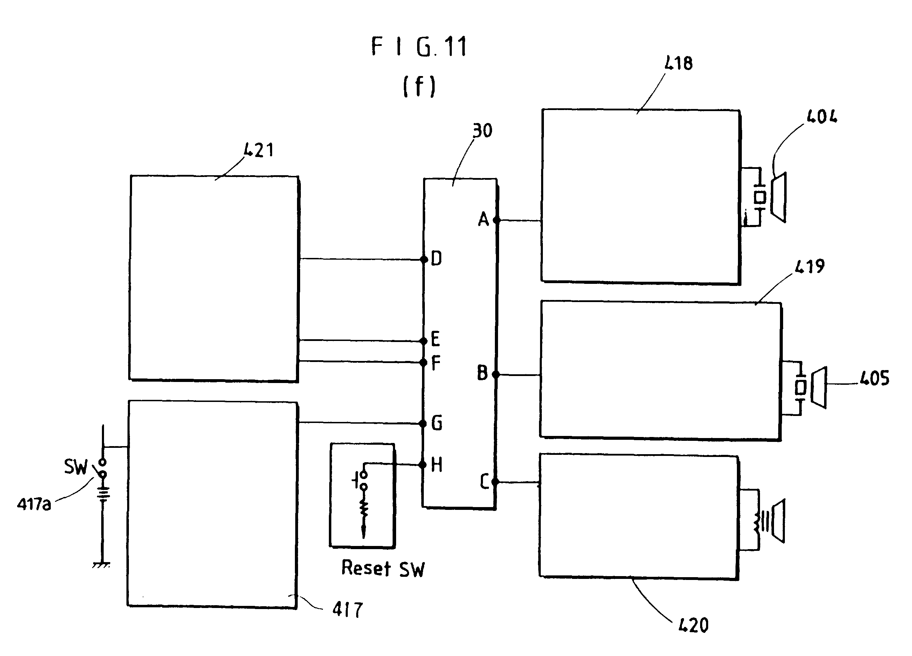

That is, as shown in the embodiment of FIGS. 11(a) through 11(e), the ultrasonic wave emitting element 404 and the ultrasonic wave detecting element 405 are respectively attached to sensor holding pieces 411a, 411b, and they and the sensor holding pieces 411a, 411b are respectively connected to a supporting base frame 413 and a rack gear 414 by hinge pins 412a, 412b, 412c, 412d. The rack gear 414 is connected to a motor 422 via a pinion gear 415 to thereby be cooperatively moved to the right and left. The electrical circuit of this embodiment of the ultrasonic wave emitting and detecting element is comprised of, as shown in FIG. 11(f), a power supply control section 417 which supplies power for cooperatively moving the rack gear 414, and which is connected to the "G" terminal of microcomputer 30 such that the supplied voltage is made selectively ON or OFF by an operating switch 417a. An ultrasonic wave transmitting section 418 includes the ultrasonic wave emitting element means 404 and is connected to the "A" terminal of the control micom 30. An ultrasonic wave detecting section 419 which is connected to the "B" terminal receives the reflected ultrasonic wave via the ultrasonic wave detecting element 405, confirms the presence or absence of movement of a physical object, and is made to retransfer this information to the control section 30. A warning sound generating section 420 connected to terminal "C" receives from the control micom 30 an indication that a moving physical object is present, to thereby generate a warning sound. A motor driving section 421 moves the ultrasonic sensor 29 right and left and is connected to "D", "E", and "F" terminals of the control micom 30. A reset switch 422 is connected to the "H" terminal and restricts the warning sound generated at the warning sound generating section. The control microcomputer 30 is connected with the respective sections, and instructs and regulates the operation thereof.

The operation with regard to this embodiment of the ultrasonic wave detecting means according to the present invention will now be described.

As shown in FIGS. 11(b) and (f), when an operating switch 417a of the power supply control section 417 is pressed whereby power is applied, it is transferred to the control micom 30 through its "G" terminal, and the control unit 30 sends an initializing state signal to each terminal.

At this moment, when a motor driving signal is output to the "D" terminal and an operating signal is output to "E" or "F" terminals which designate the rotational direction, motor 422 is driven in the designated predetermined direction and the pinion gear 415 fixed to the motor shaft 424 makes the rack gear 414 execute linear movement, and the ultrasonic wave emitting element 404 and the ultrasonic wave detecting element 405 on the supporting base frame 413 are cooperatively moved in a predetermined direction. When the ultrasonic sensor 29 reaches a set angle "1", a movement of the motor 423 is stopped. Subsequently, when the control section 30 detects that the movement of the motor 423 is completely stopped, the power supply of the power supply control section 417 is outputted to the ultrasonic wave transmitting section 418 through the "A" terminal, and an ultrasonic wave is emitted via the ultrasonic wave emitting element means 404, and the ultrasonic wave receiving section 419 receives the reflected ultrasonic wave via the ultrasonic wave detecting element 405, and transfers its data to the control unit 30. The control section 30 judges the value transferred from the ultrasonic wave receiving section 419 and determines whether or not physical object movement due to a trespasser or the like is occurring. As shown in FIG.11(b), when an operation signal is output to the motor driving section 421 in order to move the detecting sensor 29 fixed at the set angle "1" (right), to set angle "2" (left), the detecting.sensor 29 reaches the set angle "2", the motor is stopped and the above operation is repeated.

When physical object movement due to a trespasser is detected in either direction, the control unit 30 outputs a signal to the warning sound generating section 420 through the "C" terminal, and the warning sound operating section 420 continually generates a warning sound until the user presses the reset switch SW and initializes the operation. Other procedures may be undertaken as well, as described hereinabove and hereafter.

When the movement of the sensor 29 comes to its final angle, i.e., the set angle "2", the rotational direction of the motor 423 is changed, and if this is not executed due to an erroneous operation, a warning sound is generated to thereby inform this to the user.

As seen from the above, the detection region of the sensor 29 is widened by utilizing the motor 423 so that the functional efficiency of the crime prevention device can be doubled.

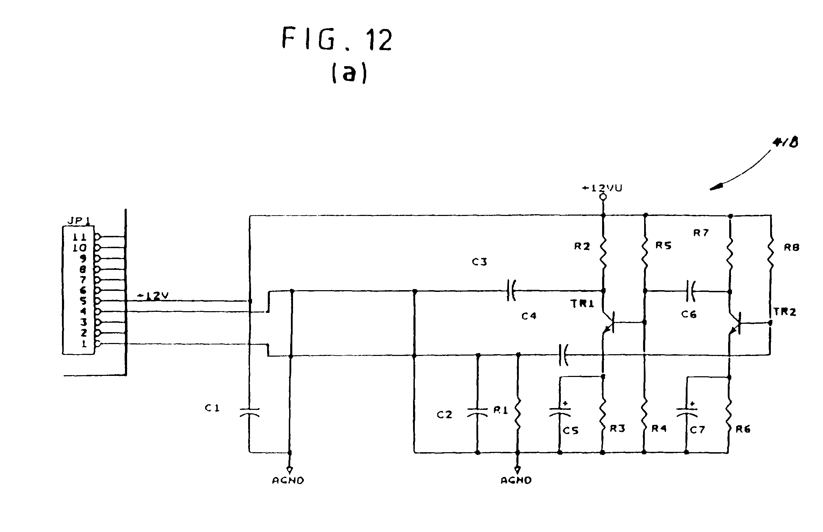

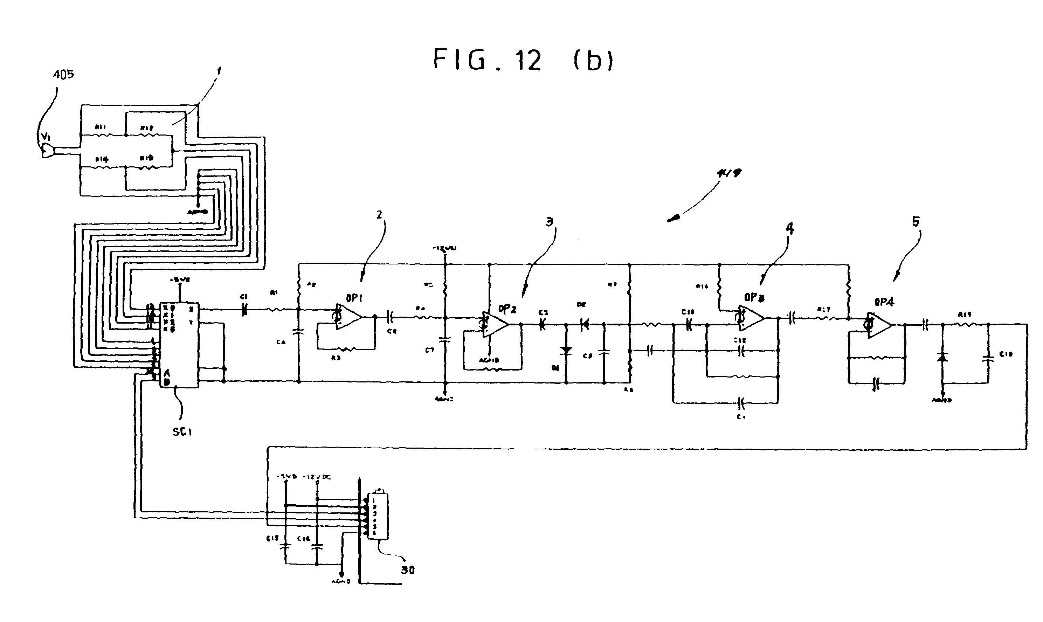

Figs. 12 are circuit diagrams of an ultrasonic transmitting section for sensing mobile objects in accordance with the present invention, which uses an astable multivibrator. More particularly, when the power supply 12V is supplied from the battery to bases and collectors of transistors TR1 and TR2 through resistors R2, R5, R7 and R8, the transistors Trl and TR2 are rendered conductive and the output current is developed at the emitters of the transistors Trl and TR2, whereby capacitors C5 and C7 are charged by the output current. If the charge of the capacitors C5 and C7 has been completed, the emitters of the transistors TR1 and TR2 are raised in potential and thus the transistors TR1 and TR2 are disabled.

But, if the capacitors C5 and C7 are discharged through the resistors R3 and R6, the emitter potentials of the transistors TR1 and TR2 are decreased, thereby allowing the transistors TR1 and TR2 to be enabled again. By repeating the charging and discharging of the capacitors C5 and C7 in the aforementioned manner, a pulse signal having a predetermined frequency is developed at the collector of the transistor Tr1 for transfer to an ultrasonic wave emitting element which is not shown in this figure.

If the ultrasonic wave thus transmitted is reflected from a mobile object, such as a burglar, the reflected ultrasonic wave is sensed by an ultrasonic wave detecting element (which will be described later) and a mobile object-sensed signal is inputted to the microcomputer 30. The microcomputer 30 executes control to carry out processes, for example, driving an alarm such as a speaker or buzzer, or initiating the auto-dialer, depending upon the mobile object-sensed signal.

Referring to Fig. 12(b), there is shown the configuration of the ultrasonic detecting section 419 which includes an ultrasonic detecting element 405; an attenuation rate adjusting portion 1 for preventing erroneous operation of the robot system due to noise signals around the system; first and second amplifying portions 2 and 3 for amplifying the output signal of the attenuation rate adjusting portion 1; and first and second filters 4 and 5 for filtering the amplified output signal of the amplifying portions 2 and 3.

More particularly, the attenuation rate adjusting portion includes a switching circuit element SC1 having an input terminal XO directly connected to the ultrasonic sensor 405, an input terminal X1 connected with the ultrasonic sensor 405 through a resistor R11, an input terminal X2 connected with the ultrasonic sensor 405 through resistors R11 and R12, an input terminal X3 connected with the ultrasonic sensor 405 via one end of resistor R13, the other end of which is connected to the resistor R12, and an input terminal X4 connected with the ultrasonic sensor 405 via one end of a resistor R14, the other end of which is connected to the other end of the resistor R13. Also, the switching element SC1 is supplied at input terminals A and B with a 2-bit attenuation rate selecting signal from the microcomputer 30. With the attenuation rate adjusting portion 1 constructed as described above, it is possible to obtain a proper combination of the resistors R11 to R14 depending upon the attenuation rate selecting signals A and B, thereby allowing the robot system to operate error free.

The ultrasonic sensed signal thus obtained is outputted from the attenuation rate adjusting portion 1 to the primary amplifying portion 2 including a differential amplifier OP1 to amplify the sensed ultrasonic signal and then the primary amplified ultrasonic signal is supplied to a secondary amplifying portion 3 including a differential amplifier OP2 to obtain an output signal desirably amplified in amplitude. The amplified output signal is then filtered by the first and second filter portions 4 and 5 and the filtered output signal is inputted to the microcomputer 30. Accordingly, the microcomputer 30 determines the presence of the mobile object, for example, a burglar, on the basis of successive ultrasonic-sensed signals, and performs control to generate an alarm signal and so on, if necessary.

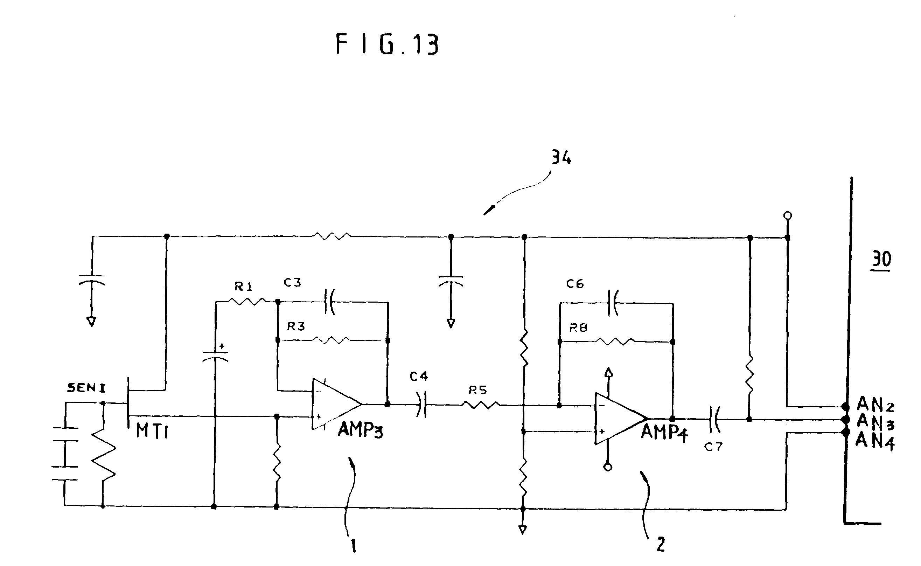

The infrared sensing portion 34 according to the present invention will be described below, referring to Fig. 13. The infrared sensing portion 34 receives the sensed signal from the three infrared sensors SEN1, SEN2 and SEN3 mounted on the robot at an angle of 120°, respectively. Only one of these sensors and its associated circuitry is shown in Fig. 13, for sake of clarity. More particularly, as shown in Fig. 13, the sensors SEN1, SEN2 and SEN3, only one (SEN1) of which is illustrated, are connected to a gate of MOSFET MT1 to sense the infrared radiation from a human body and the MOSFET MT1 is connected at its drain to a first input terminal " + " of an amplifier AM3 in a primary amplifying portion 1. An output terminal of the amplifier AMP3 is connected to a second input terminal " - " of an amplifier AMP4 of a secondary amplifying portion 2 and an output terminal of the amplifier AMP4 is connected to input terminal AN3 of the microcomputer 30, respectively. Outputs of the circuitry for sensors SEN2 and SEN3 (not shown) are similarly coupled to microcomputer input ports AN2 and AN4.

With the infrared sensing portion 34 constructed as described above, if infrared radiation from a human body is sensed by any one of the sensors SEN1, SEN2 or SEN3, the corresponding MOSFET MT1 is rendered conductive and the output signal thereof is input to the first input terminal of the amplifier AMP3 to amplify the signal. The signal thus amplified is applied to the second input terminal of the amplifier AMP4 to secondarily amplify the signal. The amplified output signal from the amplifier AMP4 is supplied to the corresponding input terminal AN2, AN3 or AN4 of the microcomputer 30. Accordingly, the microcomputer 30 determines the presence of an intruder or burglar on the basis of the signal from the secondary amplifying portion 2 and operates, e.g., the auto-dialer for sending a message automatically, and the speaker or buzzer to produce an alarm signal.

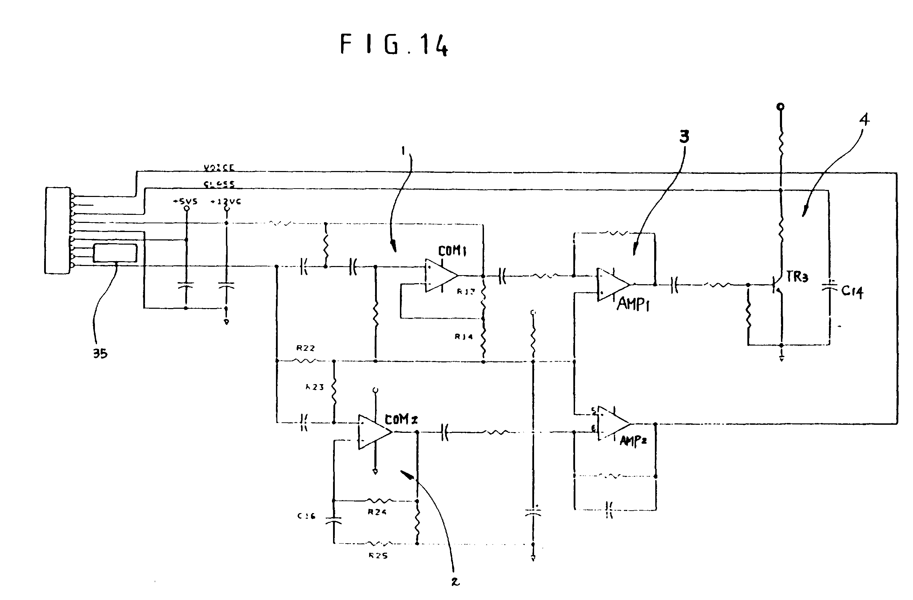

Fig. 14 is a circuit diagram for discriminating whether the sound signal sensed by the sound sensing element, such as a microphone, is a voice signal such as a baby's cry or a plosive signal due to breakage of windows. This circuit shown in Fig. 14 includes a first band pass filter 1 which comprises a first comparator COM1 having a non-inverting input terminal " + " supplied with the sound signal and an inverting input terminal " - " connected to a node between resistors R13 and R14; a second band pass filter 2 which comprises a second comparator COM2 having a non-inverting input terminal " + " provided with the sound signal through resistors R22 and 23 and an inverting input terminal " - " connected to resistors R24 and R25 and a capacitor C16; an amplifying portion 3 having an inverting input terminal " - " supplied with the output signal of the first comparator COM1; and a sound signal generating portion 4 having a switching transistor TR3 connected at a base thereof to the output side of the second amplifier AMP1, wherein the respective non-inverting input terminals " + " of the first and second amplifiers AMP1 and AMP2 are supplied with the sound signal. With the circuit constructed as described above, the signal sensed by the sound sensor 35 in Fig. 1 is supplied to and filtered by the first and second comparators COM1 and COM2. Reference values are set so that the output signal of the first comparator COM1 assumes a high level when the sound signal is plosive, while the output signal of the second comparator COM2 assumes a high level when the sound signal is a voice signal. The output signal of high level of the first or second comparator COM1 or COM2 is supplied to and amplified by the first or second amplifier AMP1 or AMP2. The output signal of the amplifier AMP1 thus amplified is outputted as the voice signal (from a speaker or the like), whereas the signal output from the second amplifier AMP2 is provided to the transistor TR3. As a result, the transistor TR3 is repeatedly switched by charging and discharging of a capacitor C14 to output a rectangular-wave pulse in response to the plosive signal. Meanwhile, the output signal of the amplifier AMP1 has a level corresponding to the sound signal and is supplied to the second microcomputer 30. The second microcomputer 30 determines whether the sound signal is a plosive signal or a voice signal. If the signal is a plosive signal, the second microcomputer 30 carries out the auto-dialing operation, etc. Alternatively, if the signal is a voice signal, the microcomputer 30 informs the baby's cry to the user having the monitor.

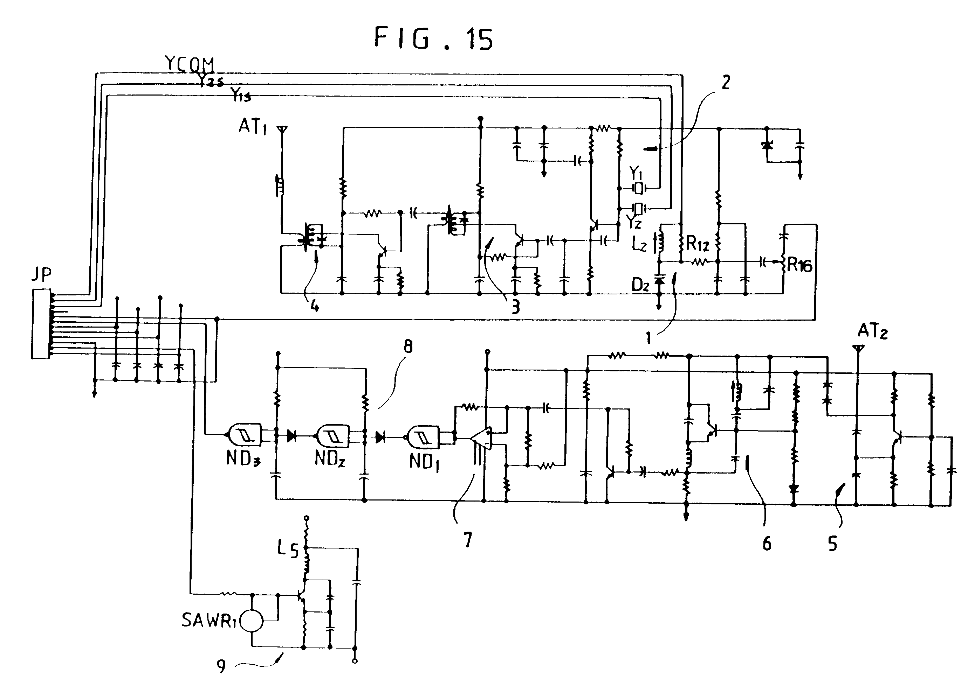

Referring to Fig. 15, there is shown a circuit diagram of the signal transmitting and receiving portion 32. This circuit is constituted so that the circuit transmits the alarm signal informing the presence of the burglar and the generation of the sound signal sensed by the sound sensing portion shown in Fig. 14 to the monitor, or receives commands from the monitor.

More particularly, the voice signal sensed by the sound sensing portion in Fig. 14 is converted into a signal YCOM through a voice signal input portion 1 which includes a variable resistor R16, a varactor diode D2, an inductor L2 and a resistor R12 and so forth, and the signal YCOM is supplied as a sound-sensed signal to the microcomputer 30. Accordingly, the microcomputer 30 provides frequency selection signals Y2S and Y1S capable of varying a modulating frequency, the frequency selecting signals Y2S and Y1S being selected by the user to prevent interference. Therefore, a quartz-crystal oscillator Y1 or Y2 is energized by the frequency selecting signal Y2S or Y1S selected by the user, and a predetermined frequency is emanated from the oscillator Y1 or Y2. Then, the oscillated frequency signal is modulated through a modulator 2, a high frequency amplifier 3 and a voice signal transmitting portion 4 in a well-known manner and transmitted through the antenna AT1 to the monitor, thereby informing the generation of the voice signal to the user having the monitor.

A signal, such as a command, transmitted from the monitor, is input to a radio frequency input portion 5 via the antenna AT1. The input signal is demodulated by a demodulator portion 6, amplified by an amplifying portion 7 and then wave-shaped through a wave shaping portion 8 including NAND gates ND1, ND2 and ND3. The wave-shaped signal is applied to the microcomputer 30. Accordingly, the microcomputer 30 analyses the input signal and performs control to execute the corresponding function.

Reference numeral 9 denotes a sensed sound transmitting portion, which is comprised of a high frequency generating means SAWR1 for generating a specified high frequency, and a so-called pattern inductor L5 for transmitting the high frequency signal generated by the high frequency generating means SAWR1 in a certain pattern to carry out the auto-dialing function under the control of the microcomputer 30.

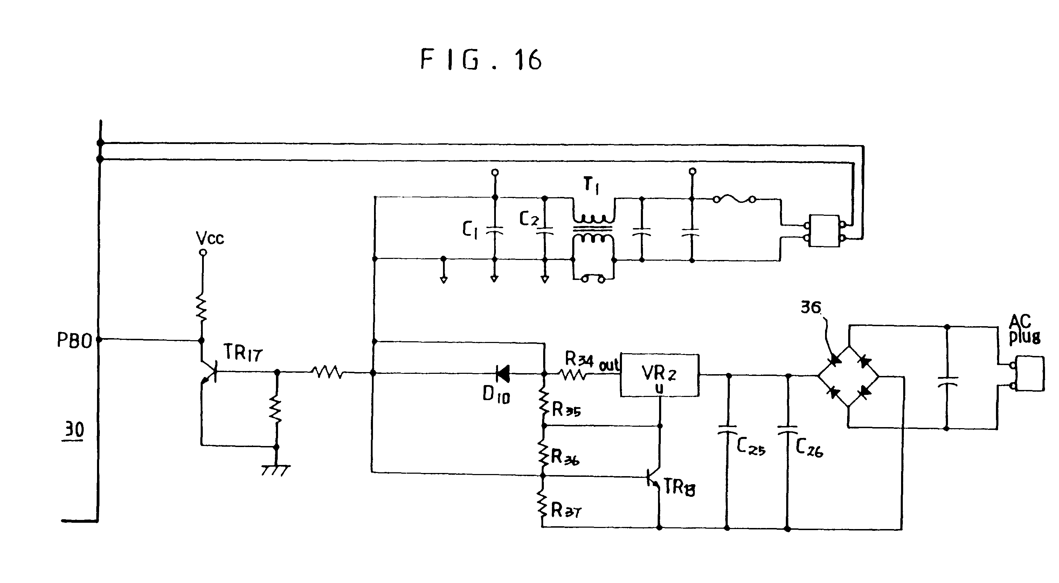

The operation of charging the battery built into the robot system and the operation of indicating the charging state thereof will now be explained, referring to Fig. 16.

If the A.C. plug of the robot system is inserted into an A.C. socket while the robot system is not operating, the A.C. power supply is converted into d.c. voltage by passing through an ordinary bridge rectifying circuit 36 and capacitors C25, C24, and the d.c. voltage is supplied to a voltage regulator VR2.

The regulator VR2 produces and outputs a stabilized d.c. voltage. Noise components retained in the d.c. voltage are filtered by capacitors C1 and C2 and a transformer T1, and the d.c. voltage is supplied to the battery built into the robot so as to charge the battery. The voltage regulator VR2 is connected at an end U and output terminal OUT to a current-limiting circuit for limiting peak current, which includes transistor TR13 and resistors R35 to R37.

Meanwhile, a portion of the voltage produced by the voltage regulator VR2 is supplied to a switching transistor TR17 through a diode D10, so that the transistor TR17 is generally rendered conductive whenever the robot is connected to the A.C. source.

As a result, a signal of low level appears at the collector side of the transistor TR17 and is supplied to a terminal PBO of the microcomputer 30. Accordingly, the microcomputer 30 determines the charging state of the battery on the basis of the low level signal and executes control so as not to operate the robot system during charging.

Simultaneously, the microcomputer 30 (see Fig. 3) operates to change the potential of the function selecting key KEY 3 to a low level state so as to light the charge state indicating LED D13 provided on the display unit 42 for indicating the charging state of the battery.

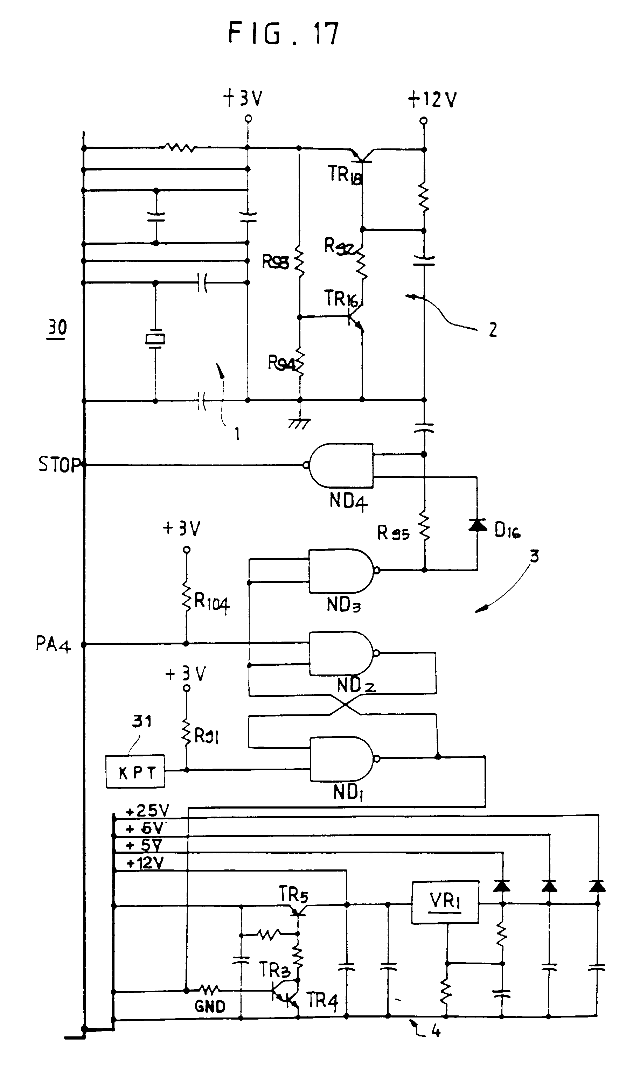

Referring to Fig. 17, there is shown the power supply control circuit, which can intermittently supply power to the robot system if necessary for the purpose of decreasing power consumption.

The power supply control circuit 80 shown in Fig. 17 comprises an ordinary oscillator 1; a power supply voltage supply portion 2 including a first transistor TR18 having an emitter and base connected to the first power supply 12V, and a second transistor TR16 having its collector connected to the base of the transistor TR18 through a resistor R92, and its base connected to the emitter side of the transistor TR18 through a resistor R93. A power supply controlling portion 3 includes a first NAND gate ND1 having an input connected to a second power supply 3V and the function selecting key KEY 0 of the keyboard 31, a second NAND gate ND2 having one input connected to an output side of the first NAND gate ND1, the other input connected to the second power supply 3V through a resistor R104 and to a control signal output terminal PA4, and an output terminal connected to the other input of the first NAND gate ND1. A third NAND gate ND3 has input terminals commonly connected to the output terminal of the first NAND gate ND1, and a fourth NAND gate ND4 has an input connected to the emitter of the transistor TR16 in the power supply voltage supplying portion 2, another end connected to an output terminal of the third NAND gate ND3 through a diode D16 and an output terminal connected to an input terminal STOP of the microcomputer 30. In Fig. 17, reference numeral 4 denotes a power supply generating portion for generating a power supply voltage for each circuit portion of the robot system.

With the power supply control circuit constructed as described above, when the first power supply (12V) is supplied from the aforementioned battery while the robot system is stationary, the transistor TR18 is rendered conductive and the output voltage at the emitter side of the transistor TR18 is applied to the base of the transistor TR16 which is also rendered conductive. The transistor TR16 is biased with a voltage divided by the resistors R93 and R94 so that the second voltage, for example, 3V, appears at the emitter side of the transistor TR18. The second voltage (3V) is supplied to the microcomputer 30 as a back-up voltage, thereby preventing data stored in the microcomputer 30 and so on from being lost even if the main power supply in the robot system is cut off.

Meanwhile, with the robot system stopped, the second voltage 3V is supplied to one end of the NAND gate ND2, so that the NAND gate ND2 outputs a high level signal. The high level signal is supplied to one input of the NAND gate ND1, the other input of which is maintained at a high level by the second voltage 3V. As a result, the NAND gate ND1 outputs a low level signal. This low level signal is applied to transistor TR3 Darlington-connected with transistor TR4, so that both transistors TR3 and TR4 are rendered non-conductive and so that a switching transistor TR5 is also rendered non-conductive and no output voltage is generated from voltage regulator VR1. On the other hand, the low-level output signal of the NAND gate ND1 is applied to both input terminals of the NAND gate ND3, whereby the NAND gate ND3 outputs a high level signal, which is supplied to one input of the NAND gate ND4. Therefore, the NAND gate ND4 outputs a high level signal and transfers this signal to the input terminal STOP of the microcomputer 30. Accordingly, the microcomputer 30 controls the second microcomputer 10 so as not to carry out any function of the robot system.

Alternatively, if the function key, for example, S3, on the keyboard 31 in FIG. 3 is pressed by the user, the function selecting key KPT goes to a low level. At this time, the microcomputer 30 outputs a low level signal through an output terminal PA4 and supplies this signal to the NAND gate ND2. As a result, the NAND gate ND2 outputs a low level signal. In this case, the other input of the NAND gate ND1 is provided with a low level so that the NAND gate ND1 outputs a high level signal.

Accordingly, the transistors TR3 and TR4 in the power supply voltage generating portion 4 are rendered conductive and the transistor TR5 is also rendered conductive.

Therefore, the voltage regulator VR1 produces and outputs a certain voltage. The output signal of high level produced by the NAND gate ND1 is supplied to the NAND gate ND3, so that the gate produces and outputs an output signal of low level. Thus, an output signal of low level is outputted from the NAND gate ND4, which in turn is supplied to the input terminal STOP of the microcomputer 30.

As described, according to the power supply control circuit of the present invention, since the second voltage serving as a back-up voltage can be produced internally from the first power supply 12 without using a separate battery, it is possible to minimize power consumption of the battery and to prevent data stored in the microcomputer from being lost in the non-operating mode, thereby allowing the life-time of the battery provided in the robot system to be prolonged.

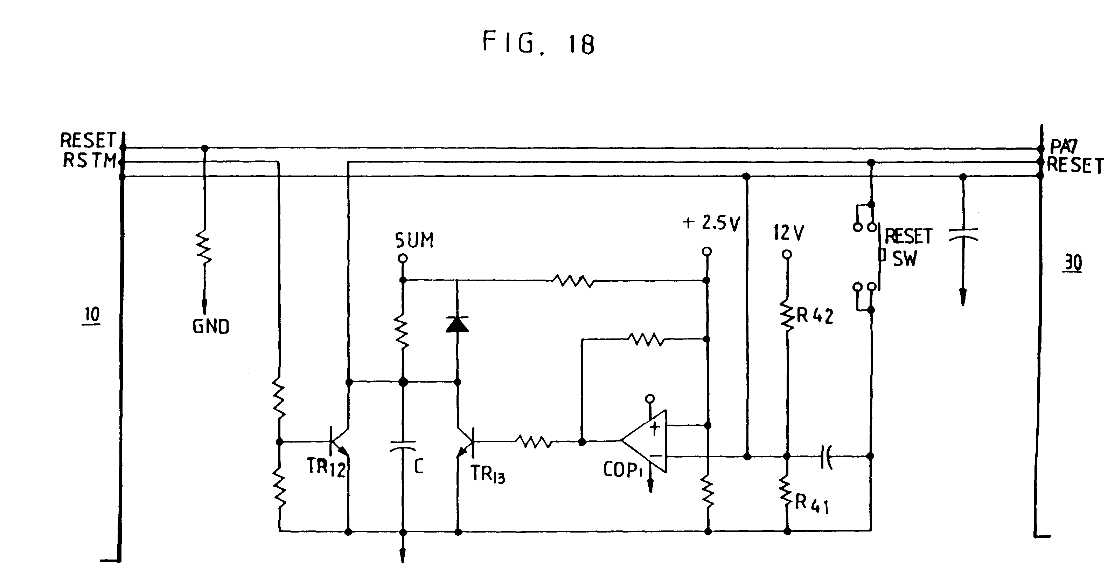

Next, the system reset circuit for preventing the robot system from being operated erroneously even if the power voltage from the battery is decreased below a predetermined level will be described referring to Fig. 18.

The system reset circuit 81 (first illustrated in Fig. 2(b)) includes a comparator COP1 having an inverting input terminal "-" connected to the first power supply voltage 12V through dividing resistors R41 and R42 and a non-inverting terminal "+" connected to a reference voltage corresponding to an allowable voltage level. The comparator COP1 produces an output signal of high level when the power voltage drops below 2.5V. Also, the system reset circuit includes a transistor TR13 having an emitter connected to ground and a collector connected to a reset terminal RESET of the microcomputer 30. The transistor TR13 is rendered nonconductive when the output signal produced by the comparator COP1 is of high level. Thereby, a current path between the emitter and collector of the transistor TR13 is grounded to thereby reset the microcomputer 30.

Further, the system reset circuit includes a switching transistor TR12 for resetting the microcomputer 30 in case the latter assumes an abnormal state as a result of a simulation between the first and second microcomputers 10 and 30 as will be described later. The transistor TR12 has a collector connected to the reset terminal RESET of the microcomputer 30, a base connected to an output terminal RSTM of the microcomputer 10 and an emitter connected to ground.

With the aforementioned structure, when a simulation is carried out between the microcomputers 10 and 30, and if the microcomputer 30 operates abnormally, a reset signal of high level is outputted from the output terminal RSTM of the microcomputer 10 and thereby the transistor TR12 is rendered conductive. As a result, the reset terminal RESET of the microcomputer 30 is supplied with a low-level signal to reset the microcomputer 30. Alternatively in a state where reset terminal RESET of the microcomputer 10 is maintained at high-level, if the microcomputer 10 operates abnormally, an output signal of low level is output from an output terminal PA7 of the microcomputer 30 and is supplied to reset terminal RESET of the microcomputer 10, thereby resetting the microcomputer 10. Accordingly, it is possible to prevent erroneous operation due to a malfunction of the system itself.

The mobile monitoring device of the present invention includes an automatic communication control means, and two-way communication between the automatic communication control means and the robot is possible, so that even from a remote location the handling of the robot and the control of the operating conditions of the robot are enabled.

In order to obtain this object, the automatic communication control system according to the present invention includes a microprocessor, a power supply section, a key input section for inputting a program to the microprocessor and to an auxiliary power supply section, a radio receiving section which receives an emergency situation alert signal and a control response signal from the robot, whereby inputs are made to the microprocessor, a telephone tone (or dial pulse) transmitting and sensing section which sends telephone tones stored in memory, senses a call from an outside telephone line and receives a telephone sound signal from an external user, a speech synthesizing section which synthesizes and reproduces speech in accordance with the situation under the control of the microprocessor, a radio transmitting section for transmitting a control signal via radio to the robot body in accordance with the telephone signal received from the outside telephone line, and a display section for displaying the input signals from the key input section or remote system and the state of the robot.

A preferred embodiment of the automatic communication control system according to the present invention will be described in detail with reference to the drawings.

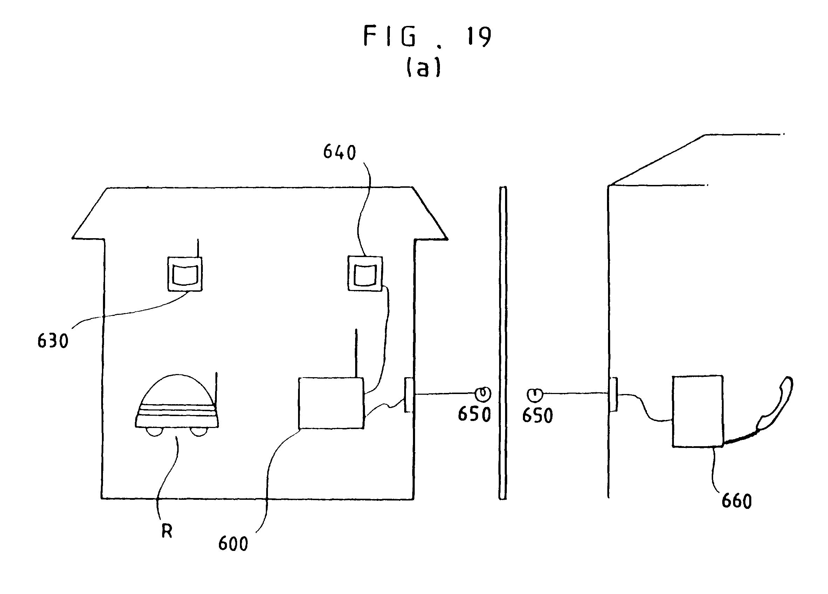

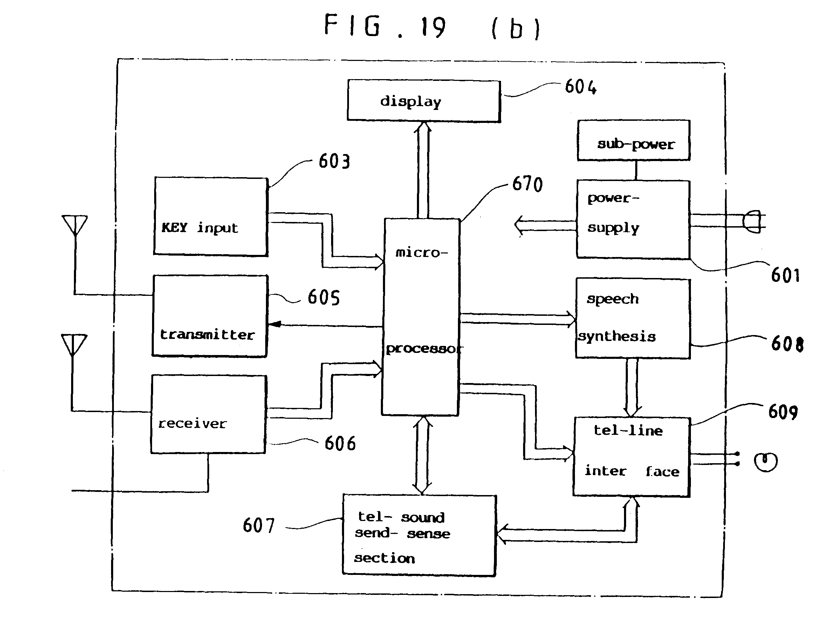

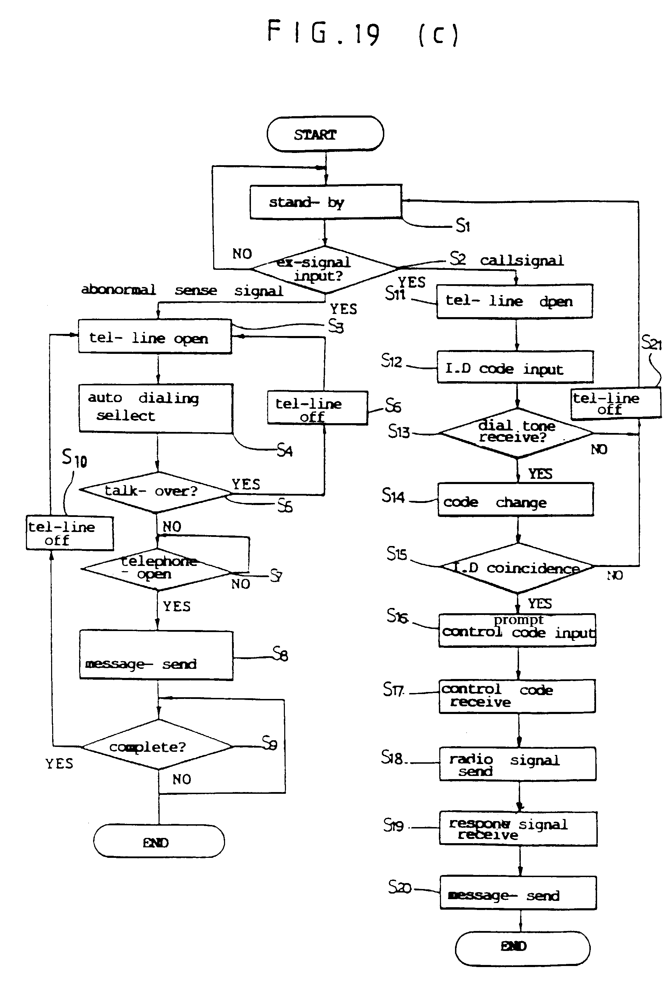

FIG. 19(a) is a schematic diagram illustrating the overall configuration of the automatic communication control means, FIG. 19(b) is a block diagram of the automatic communication control means, and FIG. 19(C) is a flow chart illustrating the operating sequence of the automatic communication control means according to the present invention.

Radio transmitting and receiving capabilities reside at the robot body and also at the automatic communication control unit, to enable two-way communication between the robot body and the automatic communication control unit, so that even from a remote location, the robot body can be controlled and the operation of the robot body can be grasped.

In FIG. 19(a), reference numeral R represents the robot body having radio transmitting and receiving functions; numeral 600 is an automatic communication control unit which receives via radio an emergency situation signal indicative of an emergency situation as detected by the robot's on-board sensors or external sensor 630 and reports to a designated remote location utilizing a standard telephone line. When an outside user has performed remote control handling utilizing a telephone set 660, control signals are sent through the telephone line to unit 600 and then to the robot body R via radio. A radioed response code is sent from the robot body R and the unit 600 synthesizes a previously established response message in response to the situation and thereafter sends the message to the remote user via the telephone line 650 to confirm receipt.

The sensors 630, 640, complement the sensors located on the robot body, and send detected signals to the robot body R or to the automatic communication control means 600 via wire or radio. The sensors include those mentioned above, such as human body or fire sensors.

In FIG. 19(b), reference numeral 670 is the microprocessor, numeral 601 is a power supply section which receives commercial power to thereby power the system, and numeral 602 is an auxiliary power supply section which can substitute a rechargeable battery for the main power supply when the voltage supplied by the main power supply section 601 drops below its regular value. This enables power to be supplied for a predetermined time period even if there is a power interruption.

Reference numeral 603 is a key input section comprised of a plurality of keys for inputting signals required for operation of the automatic communication control unit to the microprocessor 670, numeral 604 is a display section comprised of, e.g., a plurality of light emitting diodes which may be turned ON by the microprocessor 670 to display the operating state of the robot as well as the operating state of the automatic communication control means, and numeral 605 is a radio transmitting section which, when an external user inputs a control signal for controlling the robot, transmits the control signal on to the robot via radio.

Reference numeral 606 is a radio receiving section which either receives a signal from the robot or from a sensor 630 connected via radio and directs its output to the microprocessor 670. Numeral 607 represents a telephone tone sending and sensing section which generates telephone tones (or dial pulses) for calling and connecting to a remote telephone in case an emergency signal is discriminated from among the signals sent from the radio receiving section 606 to the microprocessor 670, or senses various control signals sent via a remote telephone operated by an external user and translates and inputs these signals to the microprocessor 670. A speech synthesizing section 608 reproduces previously recorded messages according to a given emergency situation to thereby send the message to the external user (or other location) via a telephone line interface 609.

In accordance with the automatic communication control unit according to the present invention, when power is supplied from the power supply section 601, and data for controlling the robot are inputted to the microprocessor 670 through the key input section 603, the input signals are displayed on the display section 604 and simultaneously sent to the robot through the radio transmitting section 605 so that the robot can be controlled.

When an external user inputs a control signal for controlling the robot by voice or tone, etc. through the public telephone line, the control signal is sensed at the sending and sensing section 607 through the telephone line interface 609, to thereby be translated and inputted to the microprocessor. The microprocessor 670 then controls the radio transmitting section 605 and the control signal is relayed to the robot to control the same.

When an emergency situation signal is inputted to the radio receiving section 606 either from the robot body R or from a sensor such as at 630 separately provided, the microprocessor 670 controls the sending and sensing section 607 to generate telephone calling tones and directly connects to the telephone line 650 through the telephone line interface 609 to communicate to the external user or authorities.

The microprocessor 670, if necessary, generates a speech message using the speech synthesizing section 608 and connects the speech signal to the telephone line through the interface 609. The microprocessor also analyzes a secret code number known only by the user, for accessing control of the robot, inputted through the telephone line, and grants access to the robot when the code is correctly entered.

The operational process of the automatic communication control means will now be described in detail with reference to the flow chart of FIG. 19(c).

The automatic communication control means according the present invention, as shown in FIG. 19(c), maintains a standby state at step S1, and at step S2 is discriminates whether or not an emergency situation signal is input from the robot or other source, as well as whether a control signal is input by an external user.

That is, it discriminates whether or not an emergency situation signal is received from the robot R and input to the microprocessor 670 through the radio receiving section 606, or an emergency situation signal sent by the sensor 630 is transceived via radio via the radio receiving section 606 input and is transmitted to the processor. It also discriminates whether or not a control signal for controlling the robot is input via telephone through the public telephone line interface 609 and the sending and sensing section 607, and whether an input is received from sensor 640.

As a result of said discriminations, when neither the emergency situation signal nor the control signal are input, flow returns to step S1 and the standby state is maintained. If an emergency situation signal is input from one of the sensors 630, 640 connected via radio or wire to the robot or the radio receiving section 606, flow advances to step S3 and the microprocessor 670 controls the telephone line interface 609 to open (off-hook) the telephone line, and then, at step S4, it sends a control signal to the telephone tone sending and sensing section 607 so as to select a communication area (a reserved telephone number corresponding to the emergency situation) and causes dialing of the telephone number corresponding to the selected communication area.

The corresponding telephone number is then dialed by the unit 607, and discrimination is made at step S5 as to whether or not the dialed telephone number is busy.

As a result of receiving the ring back tone or busy signal at step S5, in case of the busy signal (in case of YES), at step S6 the interface 609 takes the line on-hook under control of the microprocessor 670 (the telephone line is off) and thereafter, when a predetermined time period has elapsed, returns again to step S3 and repeats the dialing action. In the case of the ring back tone (the corresponding telephone number is not busy), flow proceeds to step S7 and discrimination is made as to whether or not the receiver has been picked up. When the receiver is not picked up, a predetermined waiting period is initiated, and if the receiver is picked up, flow proceeds to step S8 and either a message or situation code corresponding to the emergency situation is sent, or a message corresponding to the emergency situation and previously recorded is output via the speech synthesizing section 608, which repeatedly sends the message a predetermined number of times.

At step S9, whether or not message or situation code sending is complete is detected and when it is, at step S10 the telephone line interface 609 returns the line to the on-hook condition, and flow returns to step S3. This process is repeated for each reserved area (emergency telephone number to be called) as described above, and in case sending is not finished the sending operation continues.

Of course, when the sending operation is finished, the standby state of step S1 is resumed, and emergency situation signal sensing is again discriminated.

On the other hand, when a control signal (calling signal) for the robot which is not an emergency situation signal is received from a remote telephone and reaches the microprocessor 670 at step S2, the microprocessor 670 controls the telephone line interface 609 and connects the line at step S11, and at step S12 it controls the speech synthesizing section 608 such that the user is prompted to input a secret number, and then enters a receiving standby state.

While maintaining the receiving standby state, at step S13, whether or not the secret number is received as a telephone tone or otherwise through the telephone line is detected and when it is received, control advances to step S14 where the telephone tones are converted by unit 607 into a control code capable of input to the microprocessor 670.

At step S15, whether or not the secret number of the control code that microprocessor 670 has received from section 607 coincides with the stored code is determined.

As a result of the discrimination at step S15, when the secret number is incorrect (no match), control advances to step S21 and cuts off the telephone line and returns to the standby state of step S1. When the secret number matches, flow proceeds to step S16 and a message is sent via by the speech synthesizing section 608 to prompt the external user to input a control code.

The control code thus input is received at step S17 by the microprocessor 670 via the telephone tone sending and sensing section 607, and the microprocessor 670 generates at step S18 the radio control signal corresponding to the control code and sends the same to the robot through the radio transmitting section 605.

The robot receives the control signal from the radio transmitting section 605, executes the corresponding control operation, and thereafter sends a result signal via radio at step S19. The radio receiving section 606 of the automatic communication control unit 600 receives this signal, the microprocessor analyzes it sends a state message corresponding to the content analyzed at step S20 through the telephone line interface 609, thereby making the external user aware that the control signal has been received and processed.

Since the automatic communication control unit of the present invention facilitates control of the robot from a remote location, appropriate control is possible and the robot is effectively utilized.

Next to be described is an auxiliary unit of the mobile monitoring device of the present invention, in the form of a trespasser detecting means which is mounted adjacent a window and detects a trespasser coming through the window by ultrasonic detection.

The detecting means according to this aspect of the invention uses a detector which rotates through a 180° angle through use of a magnetic drive to thereby detect a trespasser within a 180° field of view and simultaneously make it possible to judge the "size" of the trespasser so that small items passing though the field of view (small animals, etc.) may be ignored.

In order to attain the above-described object, the trespasser detector includes a microprocessor, a memory for storing data detected by the ultrasonic sensor, a magnetic coil for generating a magnetic force for rotating the ultrasonic sensor, a magnetic sensor for detecting the ultrasonic sensor as it rotates through a predetermined angle from a predetermined positional point, and a radio transmitter for communicating to the outside an abnormal state as judged by the microprocessor.

A preferred embodiment of the trespasser detector according to the present invention will be described in detail with reference to the accompanying drawings.

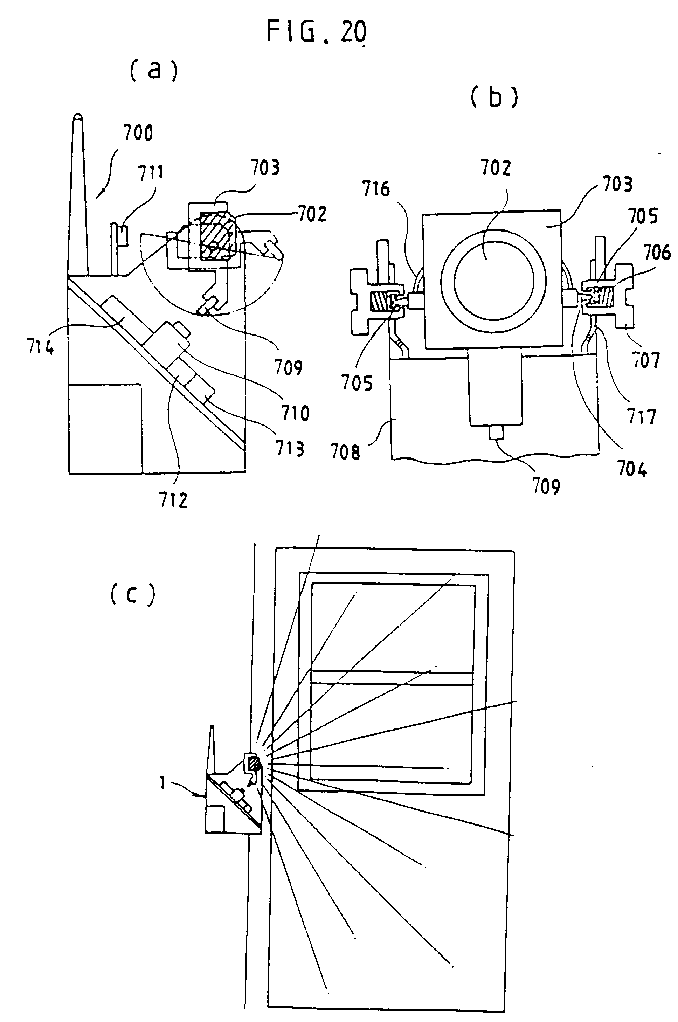

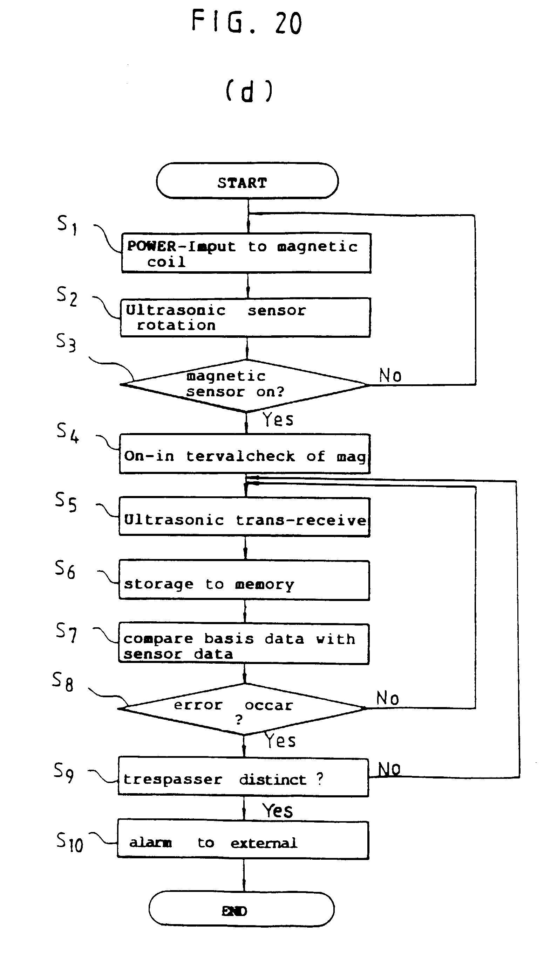

FIG. 20(a) is a side view of a device according to a preferred embodiment of the present invention. FIG. 20(b) is a front elevational view of FIG. 20(a), FIG. 20(c) is an exemplary diagram illustrating operation of the invention, and FIG. 20(d) is a flow chart illustrating an operating sequence.

In FIGS. 20(a) to 20(d), reference numeral 700 is the body of the trespasser detecting unit, and numeral 702 is an ultrasonic sensor for transmitting and receiving an ultrasonic wave, mounted at a sensor holding base 703. Holding pins 704 are respectively provided at predetermined positions of either side of the sensor holding base 703, and lubricated bearings 705 are respectively mounted at tip end portions of the holding pins 704 so that 180° rotation of the ultrasonic sensor 702 is made to be free and smooth.

Springs 706 are respectively attached to the lubricating bearings 705, and mounting nuts 707 surround respectively the bearings 705 and springs 706 whereby the ultrasonic sensor 702 is mounted on base 708.

Reference numeral 710 is a magnetic coil which is attached to the body 700 at a predetermined angle in order to generate rotational power for the ultrasonic sensor 702, which includes a magnet 709 attached to a bottom end of holding base 703, and enables the rotation of the ultrasonic sensor 702. At rest, the magnetic coil 710 and the magnet 709 are positioned so as to confront each other, as shown in sold lines.

Reference numeral 711 is a magnetic sensor which is attached to body 700 at almost the same horizontal level as the center point of the ultrasonic sensor 702. The sensor 711 assures that the ultrasonic sensor 702 does not exceed 180° in rotational extent. The sensor detects a field of the magnet 709 when rotating together with the ultrasonic sensor 702 to thereby judge whether or not the ultrasonic sensor 702 rotates through a correct angle.

At reference numeral 712 is a microprocessor; 713, a memory for storing detected data while the ultrasonic sensor 702 is rotating; and 714, a radio transmitter for transmitting through antenna ANT a signal indicating an abnormal state as judged by the microprocessor 712 to, e.g., communication control unit 600.

The input and output terminals of the ultrasonic sensor 702 are connected to the sensor holding base 703 through cables 716 and connected to the holding pins 704 and the mounting nuts 707 respectively and then connected to the microprocessor 712 through the connectors 717.

The operating sequence of the thus constructed trespasser detecting means will be described with reference to the flow chart of FIG. 20(d).

When power is supplied to the magnetic coil 710 at step S1 in order to operate the trespasser detecting means, at step S2 the ultrasonic sensor 702 rotates counter-clockwise due to the repulsive force between the magnet 709 and the pulsed field generated by magnetic coil 710. At step S3 it is discriminated whether or not the sensor 702 swings back clockwise far enough for magnetic sensor 711 to be turned ON.

When the magnetic sensor 711 detects the magnetizing force of the magnet 709 to thereby become turned ON, the basic point at which the ultrasonic sensor 702 has rotated by 180° (90° in either direction from the starting point shown in dotted line) is determined.

If the magnetic sensor 711 is not turned ON, flow returns to step S1 and pulsed power is continuously increased to the magnetic coil 710 until a magnetic force is generated so that the rotating force on the ultrasonic sensor 702 causes it to reach the 180° point. Timing of energization of the coil is performed similarly as in FIGS. 8 and 9.

As a result of the discrimination in step S3, when the magnetic sensor 711 is turned ON, since the sensor 702 has reached a rotational angle of 180°, the magnetic force of the magnetic coil 710 and timing of the energization is controlled by the microprocessor 712 so that this predetermined rotational force on the ultrasonic sensor 702 is maintained.

Subsequently, at step S4, the interval at which the magnetic sensor 711 is turned ON is detected. This interval is divided into a plurality of smaller intervals which correspond to given angular displacements of the sensor 702. In this manner, the timing of emission of ultrasonic pulses is determined, so that plural pulses are emitted in each oscillating cycle of the sensor, as graphically depicted in FIG. 20(c). At step S5, ultrasonic waves are emitted at the determined intervals from the ultrasonic sensor 702, which also receives the reflected wave.

At step S6, reference data of a state where no trespasser is present is stored in the memory 713 by utilizing the received data of the reflected ultrasonic wave, one set of data for each rotational interval when the ultrasonic sensor 702 is actuated. At step S7, the reference data stored in memory 713 is compared with data subsequently input to the memory 713 for comparable rotational intervals. At step S8, whether or not there is any difference between the reference data and the detected data is determined.

As a result of the comparison at step S8, if there is any error (difference) produced between the reference data and the detected data of the present state, a first judgment of an abnormal state is produced. At step S9, the magnitude of the trespassing object is determined by looking to the magnitude of the difference between the reference data and the present state detected data. A threshold value which will trigger an alarm is set, the value corresponding to a significantly large difference. If this value is exceeded, flow proceeds to step S10. If not, flow returns to step S5.

At step S10 communication to the exterior through the radio transmitting section is performed, indicating that a trespasser has been found. This signal is received by the control unit 600, and further measures (alarms, telephoning to remote locations, etc.) are taken as previously discussed, and as discussed further below.

The ultrasonic detecting means utilizing the ultrasonic sensor is thus made to judge whether or not a trespasser is detected, and the "magnitude" of the trespasser, by utilizing the data detected by the ultrasonic sensor as it rotates through 180°, whereby correct judgment is made possible, and errors prevented.

Next will be described an emergency measure unit provided as part of the mobile monitoring system of the present invention.

The emergency measure unit is designed to immediately take necessary emergency measures in order to minimize loss or damage where there is detected a leakage of gas, a fire, or an intruder.

According to invention, in order to attain this object, under the control of the microcomputer contained within the robot, in case of gas leakage, a solenoid valve is operated and a door is opened by the driving of a motor, and a gas valve is shut whereby the gas leak is stopped and leaked gas to the exterior. When a trespasser is detected, another solenoid is operated and a shutter is closed at points of egress such that the trespasser cannot escape.

A preferred embodiment of the emergency measure unit according to the invention will now be described in detail.

The robot R of the mobile monitoring device according to this embodiment of the invention includes the above-described driving system and ultrasonic sensor unit 29 which emits an ultrasonic wave and receives its reflected wave and thereby detects front-and back-side movement of a physical object; an infrared detecting sensor 34 which receives infrared radiation generated by a human body to detect right-and leftward movement of a physical object; a sound detecting sensor 35 which detects and discriminates breaking of glass or the crying or calling sound of a baby or the like; a fire detecting sensor 40 for detecting the break-out of fire; and a gas leakage detecting sensor 41 for detecting leakage of gas. Microcomputer 30 receives these detected signals and judges whether or not there is an abnormal state occurrence within the house or office and thereby controls the transmission of signals through its antenna to monitor M, automatic communication control means 600, and emergency measure unit 800.

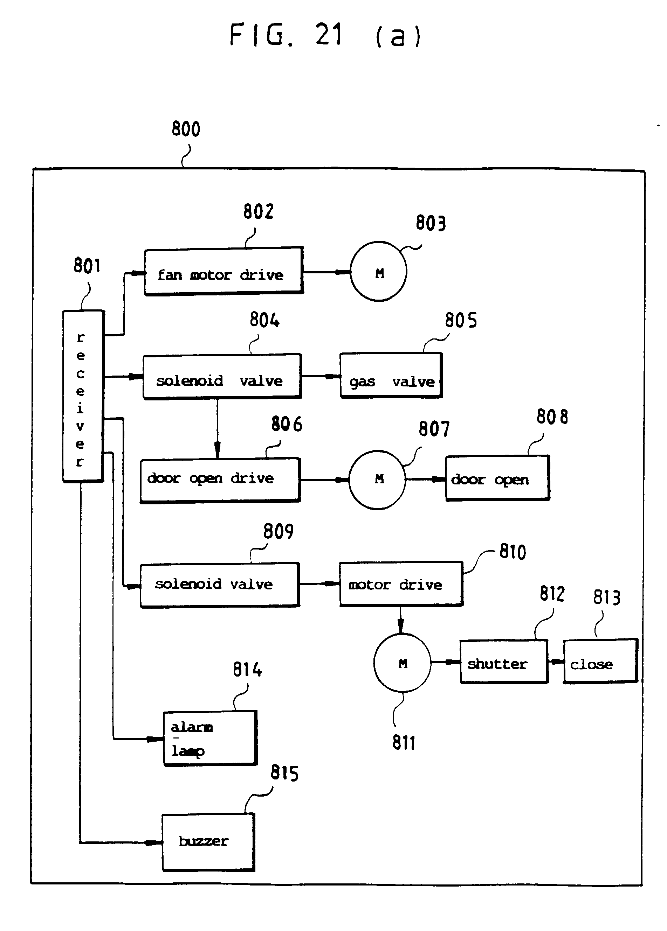

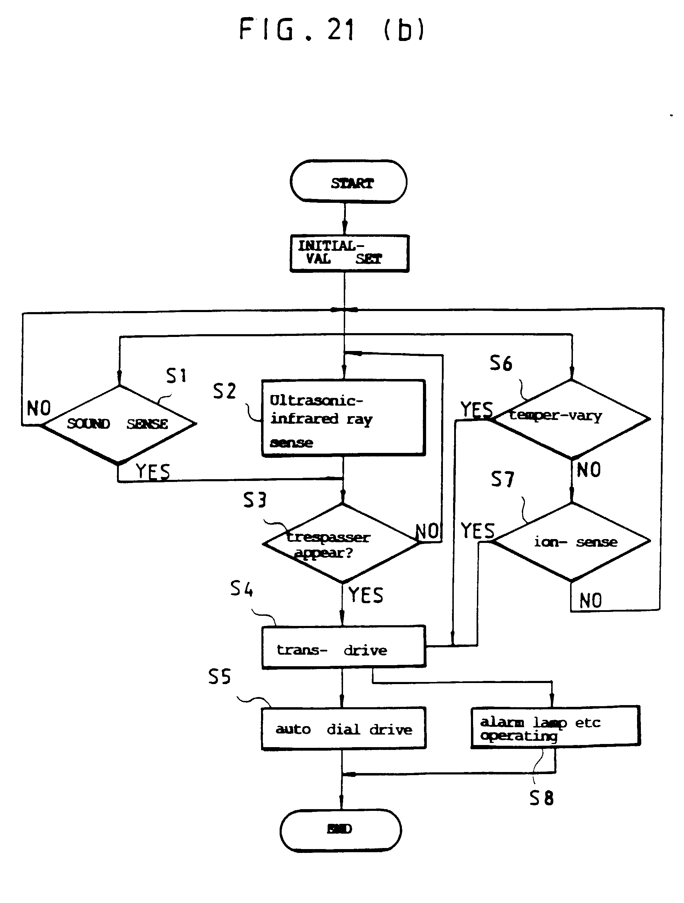

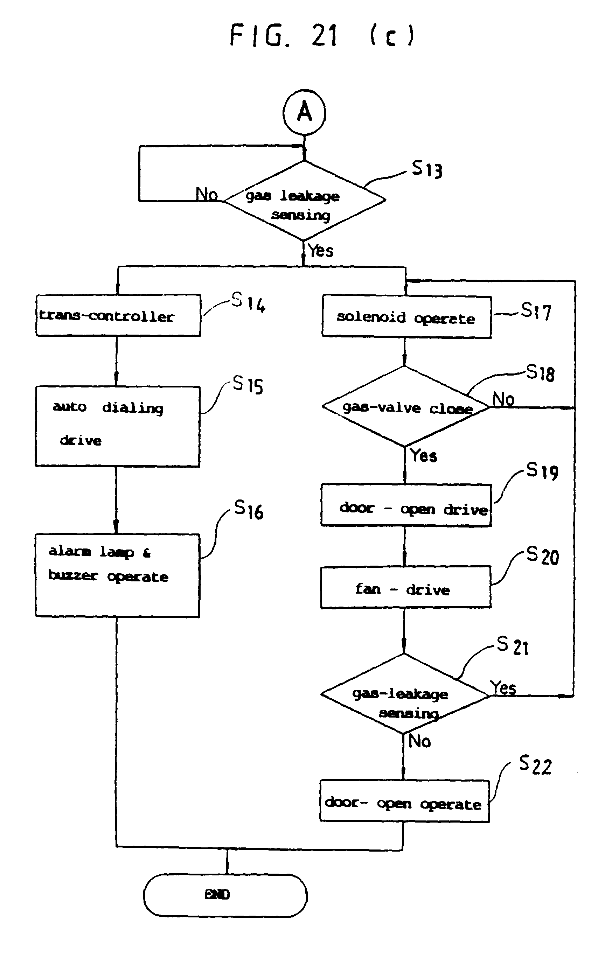

In the thus constructed mobile monitoring device, when the microcomputer 30 receives a signal detected by the ultrasonic/infrared detecting sensor 29, 34 and judges that there is a trespasser, a transmitted signal from controller 32 is received at the receiving section 801 of an emergency measure means 800 shown in FIG. 21(a), a solenoid valve 809 is operated and a motor 811 is driven whereby a shutter 812 provided at the doors or windows is shut to thereby prevent the trespasser from escape. Other measures may be taken to arrest the trespasser's movement, and of course the unit 600 is simultaneously activated to telephone the police, etc. When a gas leakage is detected by the gas leakage detecting sensor 40, similarly to the above, a signal is transmitted from the transmission controller 32 and received at the receiving section 801 of the emergency measure means 800. Solenoid valve 804 is operated and gas valve 805 is shut. Simultaneously a signal is output to a door driving section 806 and another motor 807 is driven whereby a door 808 or window is opened. A signal for driving a fan motor driving section 802 may also be output whereby fan motor 803 is driven so that the gas accumulated within a room can be exhausted to the exterior so as to prevent a break-out of fire. When there is a gas leak or trespasser, a warning lamp 814 mounted at the receiving section 801 is lighted and simultaneously a buzzer 815 is sounded. Alternatively a recorded voice or a synthesized voice may be sounded to thereby inform the abnormal state to the outside.

The operating sequence of the emergency measure unit will be described with reference to the flow charts shown in FIGS. 21(b) and 21(c). It should be understood that this procedure may proceed in parallel with other measures described previously, such as the placing of an emergency telephone call, paging the monitor, etc.

When the robot R is stopped, at step S1 a judgment is made as to whether or not any sound is detected. If not, continual execution of this function is performed. At step S2, emission of the ultrasonic wave and reception of its reflection are performed, and simultaneously infrared rays generated by a human body, etc. are detected by the ultrasonic/infrared detecting sensors 29, 4. At step S1 and at step S2, in case of detection of unusual sound and/or in case of detecting the front or backward movement of a trespasser and/or infrared rays generated by a human body, flow process to step S3 where judgment is made as to whether or not there is a trespasser.

In the case when there is no trespasser, flow returns to step S1 and repeats the above operation. When there is a trespasser, flow proceeds to step S4 and a signal is issued from the output port PORT 8 of the microcomputer 30 to drive the transmission controller 32 to transmit a signal representing the abnormal state through the antenna whereby the monitor M, automatic communication control means, and receiving section 801 are driven. The user who carries monitor M is thus informed and simultaneously, automatic dialing to a police station, fire station, etc. is carried out as discussed above. Simultaneously, at step S8 a warning lamp 814 and buzzer 815 are operated to generate a warning sound and inform the outside, under control of the receiving section 801 of the emergency measure unit 800. At any point after 53, the solenoid 809 may be operated to drive the motor driving section 810 to drive the motor 811 so as to drop the shutter 812 provided at the windows or doors to trap the trespasser and thereby minimize damage. Following these steps, the trespasser watching function is terminated.

Also in FIG. 21(b) are steps (S6, S7) which relate to the detection of a fire and/or smoke on the premises. These steps are the same as discussed in FIG. 2(d) at S17 and S18 and therefore do not require further explanation.

In FIG. 21(c), the control process of gas leak detection is shown. The microcomputer 30, in a state where the robot R is stopped, judges whether or not there is any gas leakage at step S13 as shown in FIG. 21(d), and in case of no gas leak, repeats step S13 and continuously judges whether or not there is a leak. If a gas leak is detected, a signal is input to the input port PORT 12 of the microcomputer 30, and the microcomputer 30 judges that gas has leaked, and at step S14 and step S15, a signal is output from an output port of microcomputer 30 which drives the transmission controller 32 which in turn transmits a signal representing that leakage of gas has occurred through the antenna, and drives the monitor M, the automatic communication control means, and the receiving section 33, to inform the user who carries the monitor M and simultaneously automatically dial a police station, or other emergency number. At step S16 warning lamp 814 is lit and buzzer 815 is operated to generate the warning sound. Simultaneously, the signal from the output port of the microcomputer 30 and unit 32 is received at the receiving section 801, and at step S17 the solenoid 804 operates and shuts the gas valve 805 to stop the leakage of gas. Proceeding to step S18, whether or not the gas valve is shut is determined, and when the gas valve is not yet shut, return is made to step S17. In the case where the gas valve is shut, the solenoid 804 is operated to drive the door open driving section 806 and thus drive the motor in a direction to open a window or door 808. Thereafter, at step S20 and when the door 808 and the like has opened, the fan motor driving section 802 is operated to drive the fan motor 803 to exhaust the gas to the exterior.

When exhausting the leaked gas to the exterior, at step S21 the gas leakage detecting sensor 41 continually detects whether or not there is any gas leakage within the room, and if the gas has all been exhausted, flow proceeds to step S22 and the door driving section 806 operates to drive the motor reversely to shut the window or door 808. If gas is still present, flow returns to step S17 and leakage stop and exhaust procedures are repeatedly executed. Although it is described above that in the case of a trespasser, a shutter is driven to seal the room, the present invention is not limited to such operation and can include any necessary emergency measure.

According to the robot safety monitoring device of the present invention, when a gas leak is detected, a solenoid shuts the gas opening/closing valve to thereby stop the gas leak and drives a motor to open a window or door and then drives a ventilation fan to ventilate the air. Thereafter, the window or door may be shut after the gas is exhausted. Suffocation by gas leakage or fire can thus be prevented.

Although the above description describes a mobile monitoring device having first and second microcomputers within the robot, the present invention is not limited to such a construction and, for instance, can be constructed so as to operate using only one microcomputer, without departing from the concept or scope of the invention.

As described above, the present invention has several features and advantages associated therewith. In particular, by dialing a secret code number after dialing the telephone number of the house or office being monitored, even when the user is away, the mobile monitoring device can be operated remotely. Also, because cables are not required, labor and installation costs associated with hard wiring are not required. In addition, since various detecting sensors are mounted within the robot, the unsightly features normally associated with a conventional home security control system, which mounts the detecting sensors at several locations, are thereby avoided. Furthermore, since wiring of the detecting sensors is not required, there is no worry that any outside person or invader may cut such wiring or cut the power line to the sensors. The mobile monitoring device can be operated as desired by an authorized user.

## Claims

1. A mobile monitoring device comprising:
a self-propelled randomly roaming robot (R) having a transmission controller (32), a receiver (33), and a plurality of sensing means (29, 34, 35, 39, 40), wherein said transmission controller (32) transmits a signal in response to the sensing of an abnormal condition by at least one of said plurality of sensors;
monitoring means (M) for receiving the signal transmitted by this transmission controller (32) of said robot and alerting an authorised user when an abnormal condition is detected;
automatic communication control means (AD, 600) for receiving the signal transmitted by the transmission controller (32) of said robot (R), automatically dialling a predetermined telephone number in response to said signal from the robot, and receiving commands through a telephone from an authorised user and transmitting said commands to the receiver (33) of said robot for the purpose of controlling said robot,
a navigation system (60) for emitting ultrasonic waves in a forward direction, and simultaneously receiving reflected waves to thereby monitor a region of space, said navigation system (60) producing a signal indicative of the region of space; and
a first microcomputer (10) for receiving said signal indicative of the region of space and determining in which direction the robot is to move.

2. The mobile monitoring device of claim 1, wherein said robot further comprises;
power supply means (70) for supplying power to said robot (R) and
primary control means for directly receiving control commands from an authorized user and remembering a secret code to thereby discriminate between authorized users and unauthorized users.

3. The mobile monitoring device of claim 2, wherein said power supply means (70) comprises a battery (37) and a DC power charging detector (38) for detecting said battery.

4. The mobile monitoring device of claims 1-3, wherein the navigation system (60) comprises:
field coil means (63, 558) driven by an oscillation pulse from the first microcomputer (10);
an ultrasonic sensor (29) driven by said field coil means; and
a detection circuit (66) for detecting whether the first microcomputer (10) is operating properly.

5. The mobile monitoring device of claim 4, wherein the ultrasonic sensor (29) comprises:
a transducer (64, 536) through which energy conversions occurs;
and transmit-receive means (102) for periodic generation and reception of signal energy converted by the transducer.

6. The mobile monitoring device of claim 5, wherein said field coil means (558) includes scanning drive means (556) for magnetically imparting displacement forces to the transducer (536) and a pulse generating means (592) connected to the scanning drive means (556) for producing said displacement forces.

7. The mobile monitoring device of claim 6, wherein said scanning drive means (556) further includes an armature (574) connected to the transducer (536) in spaced offset relation to a electromagnetic coil (558) in the zero position of the transducer, said displacement forces being magnetically applied in alternatingly opposite directions to the armature.

8. The mobile monitoring device of claim 7, including stop means (530) for limiting said displacement of the transducer (536) from the zero position to a maximum sweep angle.

9. The mobile monitoring device of claim 8, including position sensing means (114) connected to the scanning drive means (592) for detecting arrival of the transducer (536) at the zero position during said scanning displacement thereof and adjustable means (112) for controllably varying the displacing forces in magnitude and phase to maintain said scanning displacement of the transducer (536) through said sweep angle in response to said detection of the zero position.

10. The mobile monitoring device of claim 4, wherein said detection circuit (66) includes a pulse control means (98) connected to the transmit-receive means (102) for regulating said periodic generation of the signal energy in timed relation to said scanning displacement of the transducer.

11. The mobile monitoring device of claims 1-3, wherein said robot further comprises:
drive means (200, 201) for generating a drive force for moving in forward or reverse directions and steering;
a faulty surface detecting means (46, 47) for judging a bad condition of an underlying surface.

12. The mobile monitoring device of claim 11, wherein said drive means (200, 201) comprises:
a driving unit (200; 210, 220, 230) for propelling the robot forward and reversely;
a steering unit (201; 270, 272, 280, 290) for selectively changing the running direction.

13. The mobile monitoring device of claim 12, wherein said driving unit (200) is mounted on said steering unit (201).

14. The mobile monitoring device of claim 11, wherein said steering unit (201) is controlled by a steering control unit (202).

15. The mobile monitoring device of claim 12, wherein said steering unit (201) comprises a rotary disc (270) supported by a sun gear (272).

16. The mobile monitoring device of claim 11, wherein said faulty surface detecting means (46, 47) further comprises:
a plurality of rollers (330) arranged at a lower side of the robot;
a plurality of levers (320) respectively provided with one of said rollers (330) at one end and magnetic element (341) at another end; and at least one drop sensor member (342, 343) for sensing the state of said underlying surface in response to a location change of one or more of said rollers (330).

17. The mobile monitoring device of claim 16, wherein said drop sensor member (342, 343) further comprises:
a Hall element cell (343) having a Hall element chip (342), said Hall element cell being arranged to confront said magnetic element (341) when a corresponding one of said rollers (330) drops below a predetermined level.

18. The mobile monitoring device of claim 1, wherein said robot further comprises;
an ultrasonic sensor (404) for emitting ultrasonic waves and receiving reflected waves therefrom to detect movement of objects, an infrared ray detecting sensor (405) for receiving infrared rays to thereby the presence of an infrared emitting object or movement thereof;
a sound detecting sensor (35) for detecting sound;
a temperature sensor (39) for detecting ambient temperature;
an ionization sensor (40) for detecting the presence of fire; and
a second microcomputer (30) for receiving an output from each of said sensors, for judging whether an abnormal condition has arisen, and driving the transmission controller (32) when an abnormal condition is judged to exist.

19. The mobile monitoring device of claim 18, wherein said ultrasonic sensor member (404, 405) comprises a pair of sensors for emitting ultrasonic waves and receiving reflections thereof.

20. The mobile monitoring device of claim 1, wherein said robot further comprises:
power supply means (70) for supplying power to said robot;
means (600, 670) for directly receiving control commands from an authorized user and for holding a secret access code to thereby discriminate between authorized users and unauthorized users;
an ultrasonic sensor (29) for emitting ultrasonic waves and receiving reflected waves thereof to detect movement of material objects,
an infrared ray detecting sensor (34) for receiving infrared rays to thereby further detect the presence of or movement of infrared emitting material objects;
an ionization sensor (40) for detecting the presence of fire; and
a second microcomputer (30) for receiving an output from each of said sensors, judging whether an abnormal condition has arisen, and driving the transmission controller when an abnormal condition is judged to exist.

21. The mobile monitoring device of claim 20, further comprising a bus line (B) from the first microcomputer (10) to the second microcomputer (30) for providing a communication link therebetween.

22. The mobile monitoring device of claim 21, further comprising a simulation terminal for determining whether the robot (R) is operating properly.

23. The mobile monitoring device of claim 1, wherein said automatic communication control means (600) comprises;
a microprocessor (670);
a key input section (603) for inputting a program to said microprocessor;
a radio receiving section (606) for receiving an emergency sensing signal and a control signal from the robot;
a telephone tone generating and sensing section (607) for placing or sensing a call and for receiving a telephoned message from an external user;
a speech synthesizing section (608) for synthesizing and reproducing a speech-message in accordance with a sensed situation under control of said microprocessor;
a radio transmitting section (605) for transmitting a control signal to the robot (R) in accordance with the telephone message received from the external user;
a display section (604) for displaying the current state of the robot.

24. The mobile monitoring device of claim 23, wherein said microprocessor (670) is connected to a telephone line.

25. The mobile monitoring device of claim 23, wherein said microprocessor (670) is connected to a telephone line via the telephone tone generating and sensing section (607).

26. The mobile monitoring device of claim 23, wherein said microprocessor (670) is connected to the radio transmitting section (605) and the radio receiving section (606).

27. The mobile monitoring device of claim 23, wherein said microprocessor (670) is connected to the key input section (603).

28. The mobile monitoring device of one of the previous claims further comprising
remote control means (A) for remotely controlling operations of said robot.

29. The mobile monitoring device of one of the previous claims, wherein said robot (R) further comprises:
a forward/reverse driving motor (44) which is selectively rotated in a forward or reverse direction;
a main caster (9) rotationally responsive to said forward and reverse rotation of the motor;
subcasters (7A, 7B) rotationally responsive to said main caster;
at least one drop sensor (46, 47) for detecting discontinuities in an underlying surface or floor;
driving condition sensor means for detecting the rotation of said subcasters;
a steering motor (45) for directionally steering said robot in accordance with an output signal from said first microcomputer;
a speed detecting sensor (50) for detecting a rotational speed of said motor; and
a steering direction sensor (51) for detecting a steering angle.

30. The mobile monitoring device of one of the previous claims, wherein said robot further comprises;
a sound detecting sensor (35) for detecting sound;
a temperature sensor (39) for detecting ambient temperature.

31. The mobile monitoring device of one of the previous claims
an automatic telephone transmitting means as an automatic communication control means, and
trespasser detecting means (700) for detecting entry of a trespasser by emitting an ultrasonic wave.

32. The mobile monitoring device of claim 31, wherein said trespasser detecting means (700) comprises:
a microprocessor (712);
an ultrasonic sensor (702) for transmitting and receiving an ultrasonic wave;
a memory section for storing the data detected by said ultrasonic sensor (702);
a magnetic coil (710) for generating a magnetic force for rotating said ultrasonic sensor;
a magnetic sensor (711) for controlling rotation of said ultrasonic sensor through a predetermined angle from a predetermined positional point; and
a radio transmitter (714) for communicating an abnormal state according to a judgement of said microprocessor.

33. The mobile monitoring device of claim 32, wherein said ultrasonic sensor (702) is mounted to a body supporting base having a magnet (709) attached at an end thereof.

34. The mobile monitoring device of claim 33, wherein said body supporting base comprises a plurality of holding pins (704) for supporting said ultrasonic sensor (702) for free and smooth rotation, said holding pins being attached to either side of said sensor holding base (703).

35. The mobile monitoring device of claim 34, wherein said body supporting base is supported by mounting nuts (707), said mounting nuts holding a bearing (705) and a spring (706).

36. The mobile monitoring device of claim 35, wherein said ultrasonic sensor (702) is connected to said microprocessor (712) through a cable (716, 717) and the mounting nuts (707) in which the bearing (705) and the spring (706) are inserted.

37. The mobile monitoring device of one of the previous claims further comprising
emergency measure means (800) for commanding and controlling necessary emergency measures in order to minimize loss or damage in response to a detected emergency condition.

38. The mobile monitoring device of claim 37, wherein said emergency measure means (800) comprises:
a fan motor driving section (802);
a gas valve control section (805);
a door driver (806, 807) for enabling opening of a door or window;
a shutter driver (810, 811) for driving a shutter (812) to close an access opening; and
an alarm section (814, 815).

39. The mobile monitoring device of claim 38, wherein said gas valve control section (805) and said door driver (806, 807) are linked to a solenoid (804) triggered upon detection of a gas leak by said monitoring device.

40. The mobile monitoring of claim 38, wherein said shutter driver (810, 811) is linked to a solenoid (809) triggered upon detection of an intruder by said monitoring device.

## Patentansprüche

1. Eine bewegliche Überwachungsvorrichtung mit
einem eigenangetriebenen, zufällig umherstreifenden Roboter (R), der ein Übertragungssteuergerät (32), einen Empfänger (33) und eine Vielzahl von Abtasteinrichtungen (29, 34, 35, 39, 40) aufweist, wobei das Übertragungssteuergerät (32) ein Signal als Reaktion auf das Erfassen eines ungewöhnlichen Zustandes durch wenigstens eine der Vielzahl von Erfassungseinrichtungen abgibt;
einer Überwachungseinrichtung (M) zum Empfang des durch das Übertragungssteuergerät (32) übertragenen Signals des Roboters und zur Alarmierung eines authorisierten Benutzers, wenn ein ungewöhnlicher Zustand erfaßt ist;
einer automatischen Kommunikationssteuereinrichtung (AD, 600) zum Empfang des Steuergeräts (32) des Roboters (R) übertragenen Signals, zum automatischen Anrufen einer vorbestimmten Telefonnummer in Reaktion auf das Signal des Roboters und zum Empfang von Befehlen über ein Telefon von einem autorisierten Benutzer sowie zur Übertragung der Befehle an den Empfänger (33) des Roboters zu dessen Steuerung;
einem Navigationssystem (60) zur Ausgabe von Ultraschallwellen in Vorwärtsrichtung und zum gleichzeitigen Empfang reflektierter Wellen, um dadurch einen Raumbereich zu überwachen, wobei das Navigationssystem (60) ein den Raumbereich kennzeichnendes Signal erzeugt; und
einem ersten Mikrocomputer (10) zum Empfang des den Raumbereich kennzeichnenden Signals und zur Bestimmung einer Richtung, in der der Roboter zu bewegen ist.

2. Bewegliche Überwachungsvorrichtung nach Anspruch 1,
**dadurch gekennzeichnet,**
daß der Roboter weiterhin eine Leistungsversorgungseinrichtung (70) zur Leistungsversorgung des Roboters (R) und eine primäre Steuereinrichtung zum direkten Empfang von Steuerbefehlen eines autorisierten Benutzers und zur Speicherung eines Geheimcodes aufweist, um dadurch zwischen autorisierten und nichtautorisierten Benutzem zu unterscheiden.

3. Bewegliche Überwachungsvorrichtung nach Anspruch 2,
**dadurch gekennzeichnet**,
daß die Leistungsversorgungseinrichtung (70) eine Batterie (37) und einen Gleichstromversorgungsladedetektor (38) zur Überwachung der Batterie aufweist.

4. Bewegliche Überwachungsvorrichtung nach Ansprüchen 1 bis 3,
**dadurch gekennzeichnet**,
daß das Navigationssystem (60) eine Feldspuleneinrichtung (63, 558), die durch einen Oszillationsimpuls vom ersten Mikrocomputer (10) angetrieben ist; einen Ultraschallsensor (29) angetrieben durch die Feldspuleneinrichtung, und eine Erfassungsschaltung (66) zur Erfassung, ob der erste Mikrocomputer richtig arbeitet, aufweist.

5. Bewegliche Überwachungsvorrichtung nach Anspruch 4,
**dadurch gekennzeichnet,**
daß der Ultraschallsensor (29) einen Wandler (64, 536) zur Energiewandlung und eine Übertragungs-/Empfangseinrichtung (102) zur periodischen Erzeugung und Empfang von durch den Wandler umgewandelter Signalenergie aufweist.

6. Bewegliche Überwachungsvorrichtung nach Anspruch 5,
**dadurch gekennzeichnet**,
daß die Feldspuleneinrichtung (558) eine Abtastantriebseinrichtung (556) zum magnetischen Ausüben von Verstellkräften auf den Wandler (536) und eine lmpulserzeugungseinrichtung (592) in Verbindung mit der Abtastantriebseinrichtung (556) zur Erzeugung der Verstellkräfte aufweist.

7. Bewegliche Überwachungsvorrichtung nach Anspruch 6,
**dadurch gekennzeichnet**,
daß die Abtastantriebseinrichtung (556) weiterhin einen Anker (574) in Verbindung mit dem Wandler (536) in räumlich versetzter Anordnung zu einer elektromagnetischen Spule (558) in der Null-Stellung des Wandlers aufweist, wobei die Verstellkräfte magnetisch in altemierend entgegengesetzten Richtungen dem Anker zugeführt werden.

8. Bewegliche Überwachungsvorrichtung nach Anspruch 7,
**dadurch gekennzeichnet,**
daß eine Stoppeinrichtung (530) zur Begrenzung der Verstellung des Wandlers (536) zwischen Null-Stellung und einem maximalen Absuchwinkel angeordnet ist.

9. Bewegliche Überwachungsvorrichtung nach Anspruch 8,
**dadurch gekennzeichnet,**
daß eine Positionserfassungseinrichtung (114) mit der Abtastantriebseinrichtung (592) verbunden ist, um die Ankunft des Wandlers (536) in der Null-Stellung während dessen Abtastverstellung zu erfassen, und eine Justiereinrichtung (112) zur steuerbaren Variation der Verstellkräfte in Größe und Phase vorgesehen ist, um die Abtastverstellung des Wandlers (536) während des Absuchwinkels in Reaktion auf die Erfassung der Null-Stellung beizubehalten.

10. Bewegliche Überwachungsvorrichtung nach Anspruch 4,
**dadurch gekennzeichnet,**
daß die Erfassungsschaltung (66) eine mit der Übertragungs-/Empfangseinrichtung (102) verbundene Impulssteuereinrichtung (98) zur Regulierung der periodischen Erzeugung der Signalenergie in zeitlicher Relation zu der Abtastverstellung des Wandlers aufweist.

11. Bewegliche Überwachungsvorrichtung nach Ansprüchen 1 bis 3,
**dadurch gekennzeichnet**,
daß der Roboter weiterhin eine Antriebseinrichtung (200, 201) zur Erzeugung einer Antriebskraft zur Bewegung in Vorwärts- und Rückwärtsrichtung sowie zur Steuerung und eine Oberflächenfehlererfassungseinrichtung (46, 47) zur Beurteilung einer Fehlerbedingung auf einer darunterliegenden Oberfläche aufweist.

12. Bewegliche Überwachungsvorrichtung nach Anspruch 11,
**dadurch gekennzeichnet**,
daß die Antriebseinrichtung (200, 201) eine Antriebseinheit (200; 210, 220, 230) zum Antreiben des Roboters vorwärts und rückwärts und eine Steuereinheit (201; 270, 272, 280, 290) zur selektiven Änderung der Bewegungsrichtung aufweist.

13. Bewegliche Überwachugnsvorrichtung nach Anspruch 12,
**dadurch gekennzeichnet**,
daß die Antriebseinheit (200) auf der Steuereinheit (201) montiert ist.

14. Bewegliche Überwachungsvorrichtung nach Anspruch 11,
**dadurch gekennzeichnet**,
daß die Steuereinheit (201) durch eine Steuerkontrolleinheit (202) gesteuert ist.

15. Bewegliche Überwachungsvorrichtung nach Anspruch 12,
**dadurch gekennzeichnet**,
daß die Steuereinheit (201) eine durch ein Sonnenrad (272) getragene Drehscheibe (270) aufweist.

16. Bewegliche Überwachungsvorrichtung nach Anspruch 11,
**dadurch gekennzeichnet**,
daß die Oberflächenfehlererfassungseinrichtung (46, 47) weiterhin eine Vielzahl von auf einer unteren Seite des Roboters angeordnete Rollen (330) und eine Vielzahl von Hebeln (320) aufweist, die entsprechend mit einer der Rollen (330) an einem Ende und einem magnetischen Element (341) am anderen Ende ausgebildet sind, sowie wenigstens einem Fallsensor (342, 343) zur Erfassung eines Zustands der darunterbefindlichen Oberfläche in Abhängigkeit zu einem Ortswechsel einer oder mehrerer der Rollen (330).

17. Bewegliche Überwachungsvorrichtung nach Anspruch 16,
**dadurch gekennzeichnet**,
daß der Fallsensor (342, 343) eine Hall-Elementzelle (343) mit einem Hall-Elementchip (342) aufweist, wobei die Hall-Elementzelle so angeordnet ist, daß sie dem magnetischen Element (341) gegenüber liegt, wenn eine entsprechende Rolle (330) unter ein vorbestimmtes Niveau fällt.

18. Bewegliche Überwachungsvorrichtung nach Anspruch 1,
**dadurch gekennzeichnet**,
daß der Roboter weiterhin aufweist:
einen Ultraschallsensor (404) zur Ausgabe von Ultraschallwellen und zum Empfang entsprechend reflektierter Wellen zur Erfassung einer Bewegung von Objekten;
einem Infrarotstrahlerfassungssensor (405) zum Empfang von Infrarotstrahlen zur Erfassung der Gegenwart eines infrarotemittierenden Objekts oder dessen Bewegung;
einem Schallerfassungssensor (35) zur Erfassung von Schall;
einem Temperatursensor (39) zur Erfassung von Umgebungstemperatur;
einem lonisationssensor (40) zur Erfassung der Gegenwart eines Feuers, und
einem zweiten Mikrocomputer (30) zur Erfassung einer Ausgabe eines jeden dieser Sensoren zur Beurteilung, ob eine ungewöhnliche Bedingung vorliegt und zum Antreiben des Übertragungssteuergeräts (32), wenn die Existenz einer ungewöhnlichen Bedingung festgestellt ist.

19. Bewegliche Überwachunsvorrichtung nach Anspruch 18,
**dadurch gekennzeichnet**,
daß der Ultraschallsensor (404, 405) ein Sensorpaar zur Abgabe von Ultraschallwellen und zum Empfang von dessen Reflektionen aufweist.

20. Bewegliche Überwachungsvorrichtung nach Anspruch 1,
**dadurch gekennzeichnet,**
daß der Roboter weiterhin aufweist:
eine Leistungsversorgungseinrichtung (70) zur Leistungsversorgung des Roboters;
eine Einrichtung (600, 670) zum direkten Empfang von Steuerbefehlen eines autorisierten Benutzers und zur Speicherung eines geheimen Zutrittcodes, um zwischen autorisierten und nicht autorisierten Benutzem zu unterscheiden;
einen Ultraschallsensor (29) zur Ausgabe von Ultraschallwellen und zum Empfang von aus diesen reflektierten Wellen zur Erfassung der Bewegung von materiellen Objekten;
einen Infraroterfassungssensor (34) zum Empfang von Infrarotstrahlen, um dadurch weiterhin die Gegenwart oder Bewegung von Infrarotstrahlen emittierenden materiellen Objekten festzustellen;
einen lonisationssensor (40) zur Erfassung eines Feuers, und
einen zweiten Mikrocomputer (30) zum Empfang einer Ausgabe eines jeden dieser Sensoren, zur Beurteilung, ob eine ungewöhnliche Bedingung vorliegt, und zum Betreiben des Übertragungssteuergeräts, wenn die Existenz einer ungewöhnlichen Bedingung festgestellt ist.

21. Bewegliche Überwachungsvorrichtung nach Anspruch 20,
**dadurch gekennzeichnet**,
daß weiterhin eine Busleitung (B) vom ersten Mikrocomputer (10) zum zweiten Mikrocomputer (30) zur Herstellung einer Verbindungsleitung zwischen diesen angeordnet ist.

22. Bewegliche Überwachungsvorrichtung nach Anspruch 21,
**dadurch gekennzeichnet**,
daß ein Simulationsterminal zur Bestimmung einer korrekten Betätigung des Roboters (R) vorgesehen ist.

23. Bewegliche Überwachungsvorrichtung nach Anspruch 1,
**dadurch gekennzeichnet**,
daß die automatische Kommunikationssteuereinrichtung (600) aufweist:
einen Mikroprozessor (670);
einen Tasteneingabebereich (603) zur Eingabe eines Programms an den Mikroprozessor;
einen Radioempfangsbereich (606) zum Empfang eines Noterfassungssignals und eines Steuersignals vom Roboter;
einen Telefontonerzeugungs- und erfassungsbereich (607) zum Durchführen oder Erfassen eines Anrufs und zum Empfang einer telefonischen Nachricht eines externen Benutzers;
einen Sprachsynthesebereich (609) zur Synthese und Reproduktion einer Sprachnachricht in Übereinstimmung mit einer erfaßten Situation unter Steuerung des Mikroprozessors;
einen Radioübertragungsbereich (605) zur Übertragung eines Steuersignals zum Roboter (R) entsprechend zur vom externen Benutzer empfangenen Telefonnachricht, und
einen Anzeigebereich (604) zur Anzeige des gegenwärtigen Zustands des Roboters.

24. Bewegliche Überwachungsvorrichtung nach Anspruch 23,
**dadurch gekennzeichnet**,
daß der Mikroprozessor (670) mit einer Telefonleitung verbunden ist.

25. Bewegliche Überwachungsvorrichtung nach Anspruch 23,
**dadurch gekennzeichnet**,
daß der Mikroprozessor (670) mit einer Telefonleitung über den Telefontonerzeugungs- und erfassungsbereich (607) verbunden ist.

26. Bewegliche Überwachungsvorrichtung nach Anspruch 23,
**dadurch gekennzeichnet**,
daß der Mikroprozessor (670) mit dem Radioübertragungsbereich (605) und dem Radioempfangsbereich (606) verbunden ist.

27. Bewegliche Überwachungsvorrichtung nach Anspruch 23,
**dadurch gekennzeichnet**,
daß der Mikroprozessor (670) mit dem Tasteneingabebereich (603) verbunden ist.

28. Bewegliche Überwachungsvorrichtung nach einem der vorangehenden Ansprüche,
**dadurch gekennzeichnet**,
daß diese eine Femsteuereinrichtung (A) zur Fernsteuerung der Tätigkeiten des Roboters aufweist.

29. Bewegliche Überwachungsvorrichtung nach einem der vorangehenden Ansprüche,
**dadurch gekennzeichnet**,
daß der Roboter (R) weiterhin aufweist:
einen Vorwärts-/Rückwärtsantriebsmotor (44), der selektiv in Vorwärts- oder Rückwärtsrichtung gedreht wird;
ein Hauptlenkrad (9) drehbar entsprechend zur Vorwärts- und Rückwärtsdrehung des Motors;
Hilfslenkräder (7A, 7B) drehbar entsprechend zum Hauptlenkrad;
wenigstens einen Fallsensor (46, 47) zur Erfassung von Unebenheiten auf der darunterliegenden Oberfläche oder dem Boden;
einen Antriebsbedingungssensor zur Feststellung der Drehung der Hilfslenkräder;
einen Steuermotor (45) zur Richtungssteuerung des Roboters entsprechend zu einem Ausgabesignal des ersten Mikrocomputers;
einen Geschwindigkeitserfassungssensor (50) zur Erfassung einer Drehgeschwindigkeit des Motors, und
einen Steuerrichtungssensor (51) zur Erfassung eines Steuerwinkels.

30. Bewegliche Überwachungsvorrichtung nach einem der vorangehenden Ansprüche, wobei der Roboter weiterhin aufweist:
einen Schallerfassungssensor (35) zur Erfassung von Schall und
einen Temperatursensor (39) zur Erfassung der Umgebungstemperatur.

31. Bewegliche Überwachungsvorrichtung nach einem der vorangehenden Ansprüche,
**dadurch gekennzeichnet**,
daß eine automatische Telefonübertragungseinrichtung als eine automatische Kommunikationssteuereinrichtung und eine Übertretungserfassungseinrichtung (700) zur Erfassung des Eintritts eines Übertreters durch Aussenden einer Ultraschallwelle angeordnet sind.

32. Bewegliche Überwachungsvorrichtung nach Anspruch 31,
**dadurch gekennzeichnet**,
daß die Übertretungserfassungseinrichtung (700) aufweist:
einen Mikroprozessor (712);
einen Ultraschallsensor (702) zum Aussenden und Empfangen einer Ultraschallwelle;
einen Speicherbereich zum Speichern der von dem Ultraschallsensor (702) erfaßten Daten;
eine Magnetspule (710) zur Erzeugung einer Magnetkraft zur Drehung des Ultraschallsensors;
einen Magnetsensor (711) zur Steuerung der Drehung des Ultraschallsensors über einen vorbestimmten Winkel aus einer vorbestimmten Positionierung, und
einen Radiosender (714) zur Mitteilung eines ungewöhnlichen Zustandes entsprechend zur Beurteilung durch den Mikroprozessor.

33. Bewegliche Überwachungsvorrichtung nach Anspruch 32,
**dadurch gekennzeichnet**,
daß der Ultraschallsensor (702) an einer ein Gehäuse tragenden Basis (703) mit einem an einem Ende angeordneten Magneten (709) montiert ist.

34. Bewegliche Überwachungsvorrichtung nach Anspruch 33,
**dadurch gekennzeichnet,**
daß die den Körper tragende Basis eine Vielzahl von Haltestiften (704) zum Tragen des Ultraschallsensors (702) zur freien und glatten Drehung aufweist, wobei die Haltestifte an beiden Seiten der Sensorhaltebasis (703) angebracht sind.

35. Bewegliche Überwachungsvorrichtung nach Anspruch 34,
**dadurch gekennzeichnet**,
daß die gehäusetragende Basis durch Montagemuttern (707) gehalten ist, welche ein Lager (705) und eine Feder (706) beinhalten.

36. Bewegliche Überwachungsvorrichtung nach Anspruch 35,
**dadurch gekennzeichnet**,
daß der Ultraschallsensor (702) mit dem Mikroprozessor durch ein Kabel (716, 717) und die Montagemuttem (707) verbunden ist, in denen das Lager (705) und die Feder (706) eingesetzt sind.

37. Bewegliche Überwachungsvorrichtung nach einem der vorangehenden Ansprüche,
**dadurch gekennzeichnet**,
daß weiterhin eine Notmaßnahmeneinrichtung (800) vorgesehen ist zum Befehlen und Steuern notwendiger Notmaßnahmen, um im Falle einer erfaßten Notsituation einen minimalen Verlust oder Schaden zu erhalten.

38. Bewegliche Überwachungsvorrichtung nach Anspruch 37,
**dadurch gekennzeichnet**,
daß die Notmaßnahmeneinrichtung (800) aufweist:
einen Ventilatormotorantriebsbereich (802);
einen Gasventilsteuerbereich (805);
einen Türbeweger (806, 807) zur Öffnung einer Tür oder eines Fenster;
einem Verschlußantrieb (810, 811) zum Antreiben eines Verschlusses (812) zum Schließen einer Zutrittsöffnung, und
einen Alarmbereich (814, 815),

39. Bewegliche Überwachungsvorrichtung nach Anspruch 38,
**dadurch gekennzeichnet**,
daß der Gasventilsteuerbereich (805) und der Türbeweger (806, 807) mit einem Elektromagneten (804) verbunden sind, der bei Erfassen eines Gaslecks durch die Überwachungsvorrichtung getriggert ist.

40. Bewegliche Überwachungsvorrichtung nach Anspruch 38,
**dadurch gekennzeichnet,**
daß der Verschlußantrieb (810, 811) mit einem Elektromagneten (809) verbunden ist, der bei Erfassen eines Eindringlings durch die Überwachungsvorrichtung getriggert ist.

## Revendications

1. Dispositif de surveillance mobile comprenant:
un robot autopropulsé à déplacement aléatoire (R) comportant un circuit de commande de transmission (32), un récepteur (33), et une pluralité de capteurs (29, 34, 35, 39, 40), dans lequel ledit circuit de commande de transmission (32) transmet un signal en réponse à la détection d'un état anormal par au moins un capteur de ladite pluralité de capteurs;
des moyens de surveillance (M) pour recevoir le signal transmis par ce circuit de commande de transmission (32) dudit robot et alerter un utilisateur autorisé lorsqu'un état anormal est détecté;
des moyens de commande automatique de communication (AD, 600) pour recevoir le signal transmis par le circuit de commande de transmission (32) dudit robot (R), composant automatiquement un numéro téléphonique prédéterminé en réponse audit signal provenant du robot, et recevant des instructions à travers un téléphone en provenance d'un utilisateur autorisé et transmettant lesdites instructions au récepteur (33) dudit robot dans le but de commander ledit robot;
un système de navigation (60) pour émettre des ondes ultrasonores dans une direction avant, et recevoir simultanément des ondes réfléchies afin de surveiller ainsi une région de l'espace, ledit système de navigation (60) produisant un signal représentatif de la région de l'espace; et
un premier micro-ordinateur (10) pour recevoir ledit signal représentatif de la région de l'espace et déterminer dans quelle direction le robot doit se déplacer.

2. Dispositif de surveillance mobile selon la revendication 1, dans lequel ledit robot comprend également:
des moyens d'alimentation en puissance (70) pour fournir une alimentation en puissance audit robot (R); et
des moyens de commande primaire pour recevoir directement des instructions de commande provenant d'un utilisateur autorisé et conserver un code secret afin d'effectuer grâce à cela une discrimination entre des utilisateurs autorisés et des utilisateurs non autorisés.

3. Dispositif de surveillance mobile selon la revendication 2, dans lequel lesdits moyens d'alimentation en puissance (70) comprennent une batterie (37) et un détecteur de charge de courant continu (38) pour détecter ladite batterie.

4. Dispositif de surveillance mobile selon les revendications 1 à 3, dans lequel le système de navigation (60) comprend:
des moyens à bobine d'excitation (63, 558) attaqués par une impulsion d'oscillation provenant du premier micro-ordinateur (10);
un capteur d'ultrasons (29) attaqué par lesdits moyens à bobine d'excitation; et
un circuit de détection (66) pour détecter si le premier micro-ordinateur (10) fonctionne correctement ou pas.

5. Dispositif de surveillance mobile selon la revendication 4, dans lequel le capteur d'ultrasons (29) comprend:
un transducteur (64, 536) par l'intermédiaire duquel des conversions d'énergie sont réalisées; et
des moyens de transmission-réception (102) pour produire et recevoir périodiquement une énergie de signal convertie par le transducteur.

6. Dispositif de surveillance mobile selon la revendication 5, dans lequel lesdits moyens à bobine d'excitation (558) incluent des moyens de commande d'exploration (556) pour appliquer de manière magnétique des forces de déplacement au transducteur (536) et des moyens de génération d'impulsions (592) connectés aux moyens de commande d'exploration (556) pour produire lesdites forces de déplacement.

7. Dispositif de surveillance mobile selon la revendication 6, dans lequel lesdits moyens de commande d'exploration (556) incluent également un induit (574) relié au transducteur (536) avec une relation de décalage spatial avec une bobine électromagnétique (558) dans la position zéro du transducteur, lesdites forces de déplacement étant appliquées magnétiquement à l'induit dans des directions opposées de manière alternée.

8. Dispositif de surveillance mobile selon la revendication 7, incluant des moyens d'arrêt (530) pour limiter ledit déplacement du transducteur (536) de la position zéro à un angle de balayage maximal.

9. Dispositif de surveillance mobile selon la revendication 8, incluant des moyens de détection de position (114) connectés aux moyens de commande d'exploration (592) pour détecter une arrivée du transducteur (536) à la position zéro pendant ledit déplacement d'exploration de celui-ci, et des moyens réglables (112) pour modifier de manière commandée les forces de déplacement en amplitude et en phase afin de maintenir ledit déplacement d'exploration du transducteur (536) par l'intermédiaire dudit angle de balayage en réponse à ladite détection de la position zéro.

10. Dispositif de surveillance mobile selon la revendication 4, dans lequel ledit circuit de détection (66) inclut des moyens de commande d'impulsions (98) connectés aux moyens de transmission-réception (102) pour réguler ladite production périodique de l'énergie de signal selon une relation temporelle avec ledit déplacement d'exploration du transducteur.

11. Dispositif de surveillance mobile selon les revendications 1 à 3, dans lequel ledit robot comprend également:
des moyens d'entraînement (200, 201) pour produire une force d'entraînement afin d'effectuer un déplacement dans des directions avant ou arrière et un guidage directionnel;
des moyens de détection de surface défectueuse (46, 47) pour évaluer un mauvais état d'une surface sous-jacente.

12. Dispositif de surveillance mobile selon la revendication 11, dans lequel lesdits moyens d'entraînement (200, 201) comprennent:
une unité d'entraînement (200; 210, 220, 230) pour propulser le robot en avant et en arrière;
une unité de guidage directionnel (201; 270, 272, 280, 290) pour modifier sélectivement la direction de déplacement.

13. Dispositif de surveillance mobile selon la revendication 12, dans lequel ladite unité d'entraînement (200) est montée sur ladite unité de guidage directionnel (201).

14. Dispositif de surveillance mobile selon la revendication 11, dans lequel ladite unité de guidage directionnel (201) est commandée par une unité de commande de guidage directionnel (202).

15. Dispositif de surveillance mobile selon la revendication 12, dans lequel ladite unité de guidage directionnel (201) comprend un disque rotatif (270) supporté par un engrenage planétaire (272).

16. Dispositif de surveillance mobile selon la revendication 11, dans lequel lesdits moyens de détection de surface défectueuse (46, 47) comprennent également:
une pluralité de rouleaux (330) disposés au niveau d'une face inférieure du robot;
une pluralité de leviers (320) équipés respectivement d'un desdits rouleaux (330) à une extrémité et d'un élément magnétique (341) à une autre extrémité; et au moins un élément de détection de dénivellation (342, 343) pour détecter l'état de ladite surface sous-jacente en réponse à une modification de position d'un ou de plusieurs desdits rouleaux (330).

17. Dispositif de surveillance mobile selon la revendication 16, dans lequel ledit élément de détection de dénivellation (342, 343) comprend également:
une cellule à effet Hall (343) comportant une pastille à effet Hall (342), ladite cellule à effet Hall étant disposée de façon à se trouver en face dudit élément magnétique (341) lorsqu'un rouleau correspondant parmi lesdits rouleaux (330) descend en dessous d'un niveau prédéterminé.

18. Dispositif de surveillance mobile selon la revendication 1, dans lequel ledit robot comprend également:
un capteur d'ultrasons (404) pour émettre des ondes ultrasonores et recevoir des ondes réfléchies de celles-ci afin de détecter un déplacement d'objets, un capteur de détection de rayons infrarouges (405) pour recevoir des rayons infrarouges afin de détecter ainsi la présence d'un objet émettant des infrarouges ou un déplacement de celui-ci;
un capteur de détection acoustique (35) pour détecter des sons;
un capteur de température (39) pour détecter une température ambiante;
un capteur d'ionisation (40) pour détecter la présence d'un feu; et
un second micro-ordinateur (30) pour recevoir une sortie de chacun desdits capteurs, afin de décider si un état anormal est apparu ou pas, et commander le circuit de commande de transmission (32) lorsqu'il est décidé qu'un état anormal existe.

19. Dispositif de surveillance mobile selon la revendication 18, dans lequel ledit élément de détection d'ultrasons (404, 405) comprend une paire de capteurs pour émettre des ondes ultrasonores et recevoir des réflexions de celles-ci.

20. Dispositif de surveillance mobile selon la revendication 1, dans lequel ledit robot comprend également:
des moyens d'alimentation en puissance (70) pour fournir une alimentation en puissance audit robot;
des moyens (600, 670) pour recevoir directement des instructions de commande provenant d'un utilisateur autorisé et pour conserver un code d'accès secret afin d'effectuer grâce à cela une discrimination entre des utilisateurs autorisés et des utilisateurs non autorisés;
un capteur d'ultrasons (29) pour émettre des ondes ultrasonores et recevoir des ondes réfléchies de celles-ci afin de détecter un déplacement d'objets matériels;
un capteur de détection de rayons infrarouges (34) pour recevoir des rayons infrarouges afin de détecter ainsi également la présence ou un déplacement d'objets matériels émettant des infrarouges;
un capteur d'ionisation (40) pour détecter la présence d'un feu; et
un second micro-ordinateur (30) pour recevoir une sortie de chacun desdits capteurs, décider si un état anormal est apparu ou pas, et commander le circuit de commande de transmission lorsqu'il est décidé qu'un état anormal existe.

21. Dispositif de surveillance mobile selon la revendication 20, comprenant également une ligne de bus (B) du premier micro-ordinateur (10) au second micro-ordinateur (30) afin de fournir une liaison de communication entre eux.

22. Dispositif de surveillance mobile selon la revendication 21, comprenant également un terminal de simulation pour déterminer si le robot (R) fonctionne correctement ou pas.

23. Dispositif de surveillance mobile selon la revendication 1, dans lequel lesdits moyens de commande automatique de communication (600) comprennent:
un microprocesseur (670);
une section d'entrée à touches (603) pour entrer un programme destiné audit microprocesseur;
une section de réception radio (606) pour recevoir un signal de détection d'urgence et un signal de commande en provenance du robot;
une section de génération et de détection de fréquences vocales (607) pour placer ou détecter un appel et pour recevoir un message téléphonique provenant d'un utilisateur externe;
une section de synthèse vocale (608) pour synthétiser et reproduire un message parlé en fonction d'une situation détectée sous la commande dudit microprocesseur;
une section de transmission radio (605) pour transmettre un signal de commande au robot (R) en fonction du message téléphonique reçu de l'utilisateur externe;
une section d'affichage (604) pour afficher l'état courant du robot.

24. Dispositif de surveillance mobile selon la revendication 23, dans lequel ledit microprocesseur (670) est connecté à une ligne téléphonique.

25. Dispositif de surveillance mobile selon la revendication 23, dans lequel ledit microprocesseur (670) est connecté à une ligne téléphonique par l'intermédiaire de la section de génération et de détection de fréquences vocales (607).

26. Dispositif de surveillance mobile selon la revendication 23, dans lequel ledit microprocesseur (670) est connecté à la section de transmission radio (605) et à la section de réception radio (606).

27. Dispositif de surveillance mobile selon la revendication 23, dans lequel ledit microprocesseur (670) est connecté à la section d'entrée à touches (603).

28. Dispositif de surveillance mobile selon l'une quelconque des revendications précédentes, comprenant également des moyens de télécommande (A) pour télécommander des opérations dudit robot.

29. Dispositif de surveillance mobile selon l'une quelconque des revendications précédentes, dans lequel ledit robot (R) comprend également:
un moteur d'entraînement en marche avant/arrière (44) qui est commandé en rotation de manière sélective dans un sens avant ou un sens arrière;
une roulette principale (9) qui répond en rotation à ladite rotation en avant et en arrière du moteur;
des roulettes secondaires (7A, 7B) qui répondent en rotation à ladite roulette principale;
au moins un capteur de dénivellation (46, 47) pour détecter des discontinuités dans une surface sous-jacente ou un sol;
des moyens de détection d'état d'entraînement pour détecter la rotation desdites roulettes secondaires;
un moteur de guidage directionnel (45) pour guider directionnellement ledit robot en fonction d'un signal de sortie provenant dudit premier micro-ordinateur;
un capteur de détection de vitesse (50) pour détecter un vitesse de rotation dudit moteur; et
un capteur de direction de guidage (51) pour détecter un angle de guidage.

30. Dispositif de surveillance mobile selon l'une quelconque des revendications précédentes, dans lequel ledit robot comprend également:
un capteur de détection acoustique (35) pour détecter des sons;
un capteur de température (39) pour détecter une température ambiante.

31. Dispositif de surveillance mobile selon l'une quelconque des revendications précédentes, comprenant
des moyens de transmission automatique par téléphone en tant que moyens de commande automatique de communication, et
des moyens de détection d'intrus (700) pour détecter l'entrée d'un intrus en émettant une onde ultrasonore.

32. Dispositif de surveillance mobile selon la revendication 31, dans lequel lesdits moyens de détection d'intrus (700) comprennent:
un microprocesseur (712);
un capteur d'ultrasons (702) pour transmettre et recevoir une onde ultrasonore;
une section de mémoire pour mémoriser les données détectées par ledit capteur d'ultrasons (702);
une bobine magnétique (710) pour produire une force magnétique destinée à faire tourner ledit capteur d'ultrasons;
un capteur magnétique (711) pour commander une rotation dudit capteur d'ultrasons d'un angle prédéterminé à partir d'un point de position prédéterminé; et
un émetteur radio (714) pour communiquer un état anormal en fonction d'une décision dudit microprocesseur.

33. Dispositif de surveillance mobile selon la revendication 32, dans lequel ledit capteur d'ultrasons (702) est monté sur une base formant support de corps ayant un aimant (709) fixé à une extrémité.

34. Dispositif de surveillance mobile selon la revendication 33, dans lequel ladite base formant support de corps comprend une pluralité de broches de maintien (704) destinées à supporter ledit capteur d'ultrasons (702) pour une rotation libre et régulière, lesdites broches de maintien étant fixées des deux côtés de ladite base de maintien de capteur (703).

35. Dispositif de surveillance mobile selon la revendication 34, dans lequel ladite base formant support de corps est supportée par des écrous d'assemblage (707), lesdits écrous d'assemblage contenant un palier (705) et un ressort (706).

36. Dispositif de surveillance mobile selon la revendication 35, dans lequel ledit capteur d'ultrasons (702) est relié audit microprocesseur (712) par l'intermédiaire d'un câble (716, 717) et des écrous d'assemblage (707) dans lesquels sont insérés le palier (705) et le ressort (706).

37. Dispositif de surveillance mobile selon l'une quelconque des revendications précédentes, comprenant également
des moyens de mesures d'urgence (800) pour commander et contrôler des mesures d'urgence nécessaires afin de minimiser une perte ou des dommages en réponse à un état d'urgence détecté.

38. Dispositif de surveillance mobile selon la revendication 37, dans lequel lesdits moyens de mesures d'urgence (800) comprennent:
une section d'attaque de moteur de ventilateur (802);
une section de commande de robinet de gaz (805);
un dispositif de commande de porte (806, 807) pour permettre l'ouverture d'une porte ou d'une fenêtre;
un dispositif de commande de volet (810, 811) pour commander un volet (812) afin de fermer une ouverture d'accès; et
une section d'alarme (814, 815).

39. Dispositif de surveillance mobile selon la revendication 38, dans lequel ladite section de commande de robinet de gaz (805) et ledit dispositif de commande de porte (806, 807) sont reliés à un solénoïde (804) qui est excité lors de la détection d'une fuite de gaz par ledit dispositif de surveillance.

40. Dispositif de surveillance de mobile selon la revendication 38, dans lequel ledit dispositif de commande de volet (810, 811) est relié à un solénoïde (809) qui est excité lors de la détection d'un intrus par ledit dispositif de surveillance.
